(19) Europäisches Patentamt
European Patent Office
Office européen des brevets

(11) EP 3 221 270 B1

(12) **EUROPEAN PATENT SPECIFICATION**

(45) Date of publication and mention of the grant of the patent:
**28.04.2021 Bulletin 2021/17**

(21) Application number: **15800906.8**

(22) Date of filing: **18.11.2015**

(51) Int Cl.:
***C02F 1/56*** (2006.01) ***C02F 1/58*** (2006.01)
***C02F 1/68*** (2006.01) ***C11D 1/14*** (2006.01)
***C11D 1/40*** (2006.01) ***C11D 3/37*** (2006.01)
***C02F 1/54*** (2006.01) ***C08F 226/04*** (2006.01)
***C02F 101/10*** (2006.01) ***C02F 101/16*** (2006.01)
***C02F 101/20*** (2006.01) ***C02F 101/22*** (2006.01)
***C02F 101/30*** (2006.01) ***C02F 103/10*** (2006.01)
***C02F 103/30*** (2006.01) ***C02F 103/16*** (2006.01)

(86) International application number:
**PCT/GB2015/053502**

(87) International publication number:
**WO 2016/079511 (26.05.2016 Gazette 2016/21)**

(54) **REMOVAL AND RECOVERY OF A CHARGED SPECIES**

ENTFERNUNG UND RÜCKGEWINNUNG EINER GELADENEN SPEZIES

ÉLIMINATION ET RÉCUPÉRATION D’UNE ESPÈCE CHARGÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2014 GB 201420469**

(43) Date of publication of application:
**27.09.2017 Bulletin 2017/39**

(73) Proprietor: **Oxford University Innovation Limited**
**Botley**
**Oxford OX2 0JB (GB)**

(72) Inventors:
- **SHEN, Licheng**
  **Oxford**
  **Oxfordshire OX1 3PJ (GB)**
- **HANKINS, Nicholas**
  **Oxford**
  **Oxfordshire OX1 3PJ (GB)**

(74) Representative: **J A Kemp LLP**
**14 South Square**
**Gray’s Inn**
**London WC1R 5JJ (GB)**

(56) References cited:
**WO-A1-90/14310** **WO-A1-90/14310**
**WO-A1-2012/084621** **WO-A1-2012/084621**
**CN-A- 102 627 335** **CN-A- 102 627 335**
**US-A- 4 758 353** **US-A- 4 758 353**

- **DATABASE WPI Week 198745 28 February 1987 (1987-02-28) Thomson Scientific, London, GB; AN 1987-319455 XP002753705, -& SU 1 293 115 A1 (UNIV KAZA) 28 February 1987 (1987-02-28)**
- **SHEN LI-CHENG ET AL: "Removal of heavy metal ions from dilute aqueous solutions by polymer-surfactant aggregates: A novel effluent treatment pro", SEPARATION AND PURIFICATION TECHNOLOGY, vol. 152, 29 July 2015 (2015-07-29), pages 101-107, XP029262306, ISSN: 1383-5866, DOI: 10.1016/J.SEPPUR.2015.07.065**
- **DATABASE WPI Week 198745 28 February 1987 (1987-02-28) Thomson Scientific, London, GB; AN 1987-319455 & SU 1 293 115 A1 (UNIV KAZA) 28 February 1987 (1987-02-28)**
- **SHEN LI-CHENG ET AL: "Removal of heavy metal ions from dilute aqueous solutions by polymer-surfactant aggregates: A novel effluent treatment pro", SEPARATION AND PURIFICATION TECHNOLOGY, vol. 152, 29 July 2015 (2015-07-29), pages 101-107, XP029262306, ISSN: 1383-5866, DOI: 10.1016/J.SEPPUR.2015.07.065**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **R Nagarajan: "POLYMER-SURFACTANT INTERACTIONS Nagarajan, R. Polymer-Surfactant Interactions. In "New Horizons: Detergents for the New Millennium Conference Invited Papers", published by American Oil Chemists Society and Consumer Specialty Products Association", , 1 January 2001 (2001-01-01), XP055623840, Retrieved from the Internet: URL:https://pdfs.semanticscholar.org/cd75/ab526f7060f3706cbe387a09b62f40a67c34.pdf [retrieved on 2019-09-18]**

## Description

### FIELD OF THE INVENTION

The present invention relates to the use of a polymer comprising ionisable groups and an ionic surfactant to remove a charged species from solution.

### BACKGROUND TO THE INVENTION

There are currently a number of well known methods for the removal of charged species, such as metal ions, from effluent. Examples of effluent that typically contain charged species that require removal are effluents in the metal finishing industry, the mining and mineral processing industries, the textile and battery industries, and effluents arising from soil washing of heavy metal contaminated land. There are a number of important factors to consider when deciding which method to select, including the removal efficiency, cost, performance stability, complexity of process, and treatment speed.

A brief comparative summary of the current industrial treatment methods is provided in Table 1. As can be seen from Table 1, the known methods fail to provide a process that is relatively low in cost, simple and effective.

Table 1: Summary of known treatment methods

| | Capital cost | Operational cost | Complexity of process | Performance stability | Treatment speed |
|---|---|---|---|---|---|
| Chemical precipitation | Low | High | Low | High | High |
| Ion exchange | High | High | Medium | High | Medium |
| Biosorption | Medium | Low | High | Medium | Low |
| Adsorption | Medium | Medium | Medium | High | Low |
| Membrane filtration | High | High | Low | High | Medium |

All heavy metal removal techniques have their inherent advantages and limitations in various applications. Chemical precipitation is widely applied in high concentration streams due to its relatively low capital cost and is a straightforward process. This method, however, is less effective and less economical to treat dilute solutions. Moreover, the cost of handling and treating large amounts of sludge is substantial. Another commonly used method is ion exchange, which is highly effective to remove small amounts of high concentration heavy metal contaminated water. The cost and secondary pollution when regenerating resin are critical. Thus it is also not economical to treat large amount of dilute heavy metal wastewater. Electrochemical techniques are regarded as a rapid and well-controlled method to remove heavy metals with fewer chemical additions and less sludge production. The drawbacks are high capital and running costs. Adsorption is an alternative method to treat dilute systems, but the balance between cost and effectiveness of physico-chemical adsorbent is difficult. Biosorption has proven a promising sustainable removal method. The advantages are high metal selectivity, high overflow rate and production of concentrated sludge. The capital, maintenance and operational cost, however, are high. Furthermore, the sludge produced by the coagulation-flocculation method has good settling and dewatering properties, but the amount of chemical dosage is the main disadvantage to overcome. Finally, membrane filtration technology is a high efficiency method, but high cost, membrane fouling and low permeate flux are the limitations.

Hankins et al., Separation and Purification Technology, 2006, 51(1), page 48-56 mentions the use of polyDADMAC and humic acid to remove metal ions. First the metal ions bind to the humic acid, then, polyDADMAC is added to form flocculates with a relatively large size. The bound metal ions are then separated from free ions in solution using ultrafiltration or settling. The humic acid acts as a polyelectrolyte within the method disclosed. The process is not reversible, and thus the starting materials cannot be recycled.

In conclusion, all of the methods mentioned above have their own drawbacks.

US 4,758,353 relates to removal of heavy metals from waste streams. CN 102627335 A relates to an ecological water purifying agent containing lily juice and various uses thereof, including settling heavy metal ions. SU 1293115 A1 and DATABASE WPI, week 198745, 28 February 1987, Thomson Scientific, London, GB, AN 1987-319455, relate to the removal of Cu from non-ferrous metal unit effluent by means of various organic reagents. WO 2012/084621 A1 relates to a water clarification composition and process. WO 90/14310 A1 relates to effluent treatment.

## SUMMARY OF THE INVENTION

The removal of charged species, such as metal ions, from effluent is important for both economical and environmental reasons. The removal of the charged species not only helps to purify the effluent, but it also permits the recovering and recycling of charged species that may be costly to purchase and/or that may be in short supply.

The present inventors have found a relatively low cost process for removing a negatively charged species from effluent that is both simple to use and effective. Furthermore, the process can be tailored to minimise any adverse environmental effects of the process. In particular, the inventors have found a novel method for removing negatively charged species from effluent, using a polymer comprising ionisable groups, which is a negatively charged polymer when in aqueous solution, and a cationic surfactant. An example is the use of polyacrylic acid (PAA) and myristyl trimethyl ammonium bromide (MTAB) to remove metallic anions. The new process disclosed herein is a combination of coagulation-flocculation and membrane filtration. It consumes a small amount of energy and chemicals to achieve high removal efficiency in a dilute wastewater containing mixtures of heavy metal ions. Owing to the smaller chemical dosage, the sludge generated is correspondingly reduced. In addition, the coagulation-flocculation can enlarge the particle size of the sediment, which reduces the required pore size of filter. This reduction can increase the flux and reduce the extent of membrane fouling. Furthermore, the process permits the recycling of the starting materials, providing an environmentally friendly way to remove negatively charged species.

It is thought that the polymer and surfactant form self-removable complexes which effectively adsorb charged species such as metal ions from an effluent. After the adsorption, a self-flocculation or a coarse-filtration process may be employed to separate the charged species loaded complexes from the treated effluent. Finally, negatively charged species in the separated complexes can be recovered (e.g. by basification) and recycled for other uses. The inventors have found that this method is surprisingly effective at removing low concentrations of negatively charged species. Thus, the process may be used to remove dilute negatively charged species.

The advantages of the process of the invention compared with existing treatment techniques can be listed according to five aspects: removal efficiency, cost, performance stability, complexity of process, and treatment speed. This invention is capable of removing a high percentage (e.g. 98%+) of the charged species, such as $[Fe(CN)_6]^{3-}$ and $[MnO_4]^-$, contained within dilute (e.g. 10 mg/L) solutions by using a small amount of a polymer and a surfactant at an optimum dosage ratio range. The substrates used in this process are inexpensive compared with chemical precipitation and adsorption. In addition, the process uses less energy than other membrane filtration methods, such as ultrafiltration. The capital cost is cheaper than in ion exchange, ultrafiltration and reserve osmosis.

Additionally, for performance stability and complexity of the process, this method is much more reliable and simpler than biosorption. Thus, it could be applied to a wider range of cases. For treatment speed, a coarse-filtration membrane, or indeed self-flocculation, offers higher flux than ultrafiltration and nanofiltration membranes with the same membrane area. Moreover, it is quicker than the adsorption method, since the surface area of the polymer-surfactant aggregates is larger. Further, the cost and sustainability can be further reduced and enhanced via recycling of the polymers, surfactants and heavy metals. A brief comparative summary of the current industrial treatment methods compared with the process of the invention is provided in Table 2.

Table 2: Summary of dilute heavy metal treatment methods

| | Capital cost | Operational cost | Complexity of process | Performance stability | Treatment speed |
|---|---|---|---|---|---|
| Chemical precipitation | Low | High | Low | High | High |
| Ion exchange | High | High | Medium | High | Medium |
| Biosorption | Medium | Low | High | Medium | Low |
| Adsorption | Medium | Medium | Medium | High | Low |
| Membrane filtration | High | High | Low | High | Medium |
| **Polymer-surfactant method** | **Low** | **Medium** | **Low** | **High** | **High** |

As mentioned above, the surfactant and polymer can form polymer-surfactant complexes at low concentration (e.g. 0.1 mM level). This structure has three main technical advantages: the high adsorbent surface area of the complexes, the self-flocculation ability of polymer and surfactant complexes in the presence of adsorbed charged species, and the sequential removal and recovery of the charged species from the same complexes.

By way of an example that is not in accordance with the invention, the high surface area is achieved since the polymer-surfactant complexes are molecular in size, which allows them to function at dilute charged species concentrations via electrostatic interaction between cationic heavy metal ions and anionic surfactant groups on the complexes. These complexes can form larger, self-settling floc particles due to the intermolecular associations between the components of the complexes, specifically the attractive forces resulting from opposing charges, as well as hydrophobic interactions.

Charged species such as multivalent heavy metal ions present in the system can form bridges between the complexes and the particles, which leads to a significant increase in the sizes (from nano-meters to micro-meters). A portion of these flocculated particles can thus be settled by gravity, while other liquid crystal precipitates can be effectively removed via coarse-filtration.

Further, the sequential removal and recovery of the heavy metal ions present in the system, which is caused by the competitive adsorption between metal ions. If the dosages of polymer-surfactant and recovery agent is optimised for one particular amount of heavy metal in the solution, a relatively high purity of this concentrated heavy metal ion can be attained.

In conclusion, the invention provides a highly efficient method for removing negatively charged species from solution, using a polymer comprising ionisable groups, which is a negatively charged polymer when in aqueous solution, and a cationic surfactant. In addition to removing the charged species, the polymer and/or the surfactant may be recovered and recycled, leading to a sustainable process. The process may, for example, be used for the efficient removal and recovery of dilute heavy metal ions during process water treatment.

Accordingly, the present invention provides a complex comprising: a charged species and a polymer-surfactant aggregate, the polymer-surfactant aggregate comprising (i) a polymer comprising ionisable groups, and (ii) an ionic surfactant, wherein: (a) the charged species comprises a metal anion or a complex anion which comprises a metal or metalloid; (b) the ionic surfactant is a cationic surfactant; and (c) the polymer comprising ionisable groups is a negatively charged polymer when in aqueous solution.

In another aspect, the invention provides a process comprising treating a solution with an ionic surfactant and a polymer comprising ionisable groups, which solution comprises a charged species dissolved in a solvent, wherein the charged species is a negatively charged species and the ionic surfactant is a cationic surfactant, wherein the polymer comprising ionisable groups and the ionic surfactant form a polymer-surfactant aggregate, and the polymer-surfactant aggregate adsorbs the charged species from the solution to produce a complex, which complex comprises: the charged species, the polymer comprising ionisable groups and the ionic surfactant, and wherein the solution is an aqueous solution, wherein (a) the charged species comprises a metal anion or a complex anion which comprises a metal or metalloid; and (b) the polymer comprising ionisable groups is a negatively charged polymer when in aqueous solution.

The process may be a process for removing the charged species from the solution, which process further comprises separating the complex comprising the charged species, the polymer comprising ionisable groups and the ionic surfactant from the solution.

The process may further comprise removing the charged species from the complex comprising the charged species, the polymer comprising ionisable groups and the ionic surfactant, which process comprises forming a salt of the charged species and separating the salt from the polymer comprising ionisable groups and the ionic surfactant.

## BRIEF DESCRIPTION OF THE FIGURES

Figure 1 (not in accordance with the invention) presents a schematic flow diagram illustrating the process of removing a charged species (in this case a metal ion) from solution. The dotted lines present the recycle loop, and the dashed lines present the first treatment cycle.

Figure 2 (not in accordance with the invention) shows the zinc removal efficiency changes in different cycles, i.e. the graph looks at the recycling of the polymer comprising ionisable groups and the ionic surfactant.

Figure 3 (not in accordance with the invention) shows the effect of varying concentrations of NaCl on the zinc removal at its optimal dosage. MF represents microfiltration and CF represents coarse filtration.

Figure 4 (not in accordance with the invention) shows the flux in the different stages of the process.

Figure 5 (not in accordance with the invention) shows the recovery efficiencies for (i) the metal ion and (ii) the polymer and surfactant over different concentration factors. The retention time was constant.

Figure 6 (not in accordance with the invention) shows the recovery efficiency of (i) the zinc and (ii) PEI and SDS over a range of pH values at a volume reduction factor of 12.

Figure 7 (not in accordance with the invention) presents a flow diagram of the whole process for sequentially removal of multi-component metal ions, in this case exemplifying the removal of zinc and magnesium.

Figure 8 (not in accordance with the invention) demonstrates the competitive adsorption between 0.3 mM (48 ppm)

$ZnSO_4$ and different $MgSO_4$ concentrations at an optimal dosage for zinc removal (80 ppm PEI and 230 ppm SDS). At all Mg concentrations, the Zn(II) removal efficiency (left hand bars) if far higher than the Mg(II) removal efficiency (right hand bars).

Figure 9 shows the removal of a negatively charged species. Specifically, Figure 9 demonstrates charges in the dichromate removal efficiency with increasing $C_{14}$TAB concentration at 10.4 mg Cr(VI) and 300 ppm PSS.

Figure 10 (not in accordance with the invention) shows the zinc removal efficiency via 30 kDa ultrafiltration, mapped against surface tension for 20 ppm 25 K branched PEI and 7 mg/l zinc. UF represents ultrafiltration.

Figure 11 (not in accordance with the invention) demonstrates the variation of Cr(III) removal efficiency with varying pH.

Figure 12 (not in accordance with the invention) demonstrates the variation of Zn(II) removal efficiency with varying pH. MF represents microfiltration and CF represents coarse filtration.

Figure 13 (not in accordance with the invention) shows the Zn(II) removal efficiency in a SDS/PDAC system and a SDS/NaCl system with increasing $ZnSO_4$ concentration.

Figure 14 (not in accordance with the invention) shows Cr(III) removal efficiency in SDS/PDAC system and SDS/NaCl system with increasing $ZnSO_4$ concentration.

Figure 15 (not in accordance with the invention) demonstrates the variation of Zn(II) removal efficiency with increasing PDAC concentration.

Figure 16 (not in accordance with the invention) provides a comparison with MEUF. Specifically, Figure 16 shows the effects of adding 20 ppm PEI to various SDS concentrations for 7 mg/l zinc.

Figure 17 (not in accordance with the invention) provides a comparison with PEUF. Specifically, Figure 17 shows the effects of adding 1 mM SDS to various 25 K branched PEI concentrations for 7 mg/l zinc pass through a microfiltration and a comparison with 10 K and 30 K PEUF.

Figure 18 (not in accordance with the invention) provides a comparison of different filtration methods (30 K UF and 0.22 μm MF) at 40 ppm 25 K branched PEI and 14 mg/l zinc with various SDS concentrations.

Figure 19 (not in accordance with the invention) provides a comparison of different filtration methods (30 K UF and 0.22 μm MF) at 60 ppm 25 K branched PEI and 21 mg/l zinc with various SDS concentrations.

Figure 20 (not in accordance with the invention) provides a comparison of different filtration methods (30 K UF and 0.22 μm MF) at 80 ppm 25 K branched PEI and 28 mg/l zinc with various SDS concentrations.

Figure 21 (not in accordance with the invention) compares the zinc removal efficiency via 0.22 μm microfiltration to the surface tension at 80 ppm 25 K branched PEI and 27 mg/l zinc ions.

Figure 22(a) (not in accordance with the invention) shows surface tension versus SDS concentration for SDS/PDAC for different polymer concentrations at 298 K. Phase behaviour included: (light downward diagonal) precipitates, (black) very cloudy, (dark gray) cloudy, (gray) almost clear and (white) clear.

Figure 22(b) (not in accordance with the invention) shows surface tension versus SDS concentration for SDS/PDAC/0.1 mM $ZnSO_4$ for different polymer concentrations at 298 K. Phase behaviour included: (light downward diagonal) precipitates, (black) very cloudy, (dark gray) cloudy, (gray) almost clear and (white) clear.

Figure 22(c) (not in accordance with the invention) shows surface tension versus SDS concentration for SDS/PDAC/0.4 mM $ZnSO_4$ for different polymer concentrations at 298 K. Phase behaviour included: (black) very cloudy, (dark gray) cloudy, (gray) almost clear and (white) clear.

Figure 22(d) (not in accordance with the invention) shows surface tension versus SDS concentration for SDS/75 ppm PDAC for different $ZnSO_4$ concentrations at 298 K. Phase behaviour included: (light downward diagonal) precipitates, (black) very cloudy, (dark gray) cloudy, (gray) almost clear and (white) clear.

Figure 22(e) (not in accordance with the invention) shows surface tension versus SDS concentration for SDS/150ppm PDAC for different $ZnSO_4$ concentrations at 298K. Phase behaviour included: (light downward diagonal) precipitates, (black) very cloudy, (dark gray) cloudy, (gray) almost clear and (white) clear.

Figure 22(f) (not in accordance with the invention) shows surface tension versus SDS concentration for SDS for different $ZnSO_4$ and $Cr(NO_3)_3$ concentrations at 298 K.

Figure 23 (not in accordance with the invention) shows Cd(II) removal efficiencies versus the presence of various types of different concentrations at the optimum removal dosage for the PEI-SDS system.

Figure 24 (not in accordance with the invention) shows Rh(III) (0.2 mM) removal efficiency changes at different pH values under 60 ppm PEI and 0.7 mM SDS.

Figure 25 (not in accordance with the invention) shows removal efficiencies of metal ions and changes in the amount of total carbon in the filtrate with residence time for the PEI-SDS system.

Figure 26 (not in accordance with the invention) shows Zn(II) and PEI-SDS recovery efficiencies as a function of pH.

Figure 27 (not in accordance with the invention) shows the effects of acidification (at a pH of 1) on the subsequent PEI-SDS regeneration efficiency via basification at various pH values.

Figure 28 (not in accordance with the invention) shows the effects of the pH at the acidification step on the subsequent PEI-SDS regeneration efficiency by basification using 0.1 MNaOH (a pH of 13).

Figure 29 (not in accordance with the invention) shows the recovery efficiencies of Zn(II) at pH 1 and that of PEI-SDS at a pH of 13 for different periods of residence time at concentration factors of 10 and 40.
Figure 30 (not in accordance with the invention) shows Cd(II) removal and PEI-SDS usage efficiencies in 6 cycles using regenerated PEI and SDS.
Figure 31 is a flow chart of the whole anion treatment process.
Figure 32 shows dosage optimisation for 1.5 mM MTAB and varying amounts of PSS to remove 0.1 mM $K_3Fe(CN)_6$.
Figure 33 shows dosage optimisation for 0.5 mM and 1 mM MTAB and varying amounts of PAA to remove 0.1 mM $K_3Fe(CN)_6$.
Figure 34 shows dosage optimisation for 100 ppm PAA and varying amounts of MTAB to remove 0.2 mM $K_2CrO_4$ at a pH of 5.3.
Figure 35 shows the effects of coarse filtration on $Fe(CN)_6^{3-}$ removal and PAA-MTAB usage efficiencies at the optimum dosage (350 ppm PAA+ 1 mM MTAB).
Figure 36 shows the effects of microfiltration (MF) and coarse filtration (CF) on the removal efficiency of 0.2 mM $K_2CrO_4$ and the usage efficiency of 100 ppm PAA and varying amounts of MTAB.
Figure 37 shows $Fe(CN)_6^{3-}$ adsorption capacities of the PSAs at the optimum dosage (350 ppm PAA + 1 mM MTAB).
Figure 38 shows the removal efficiency of $K_2CrO_4$ at two optimum dosages of PAA and MTAB with increasing concentrations of $K_2CrO_4$.
Figure 39 shows the removal efficiency of 0.2 mM $K_2CrO_4$ and the usage efficiency of 100 ppm PAA and 2.5 mM MTAB at different pH values.
Figure 40 shows the removal efficiencies of $CrO_4^{2-}$ at the optimum dosage of PAA and MTAB in the presence of various organics at different concentrations.
Figure 41 shows the removal and polymer surfactant usage efficiencies of $Fe(CN)_6^{3-}$ (no pH adjustment) and $CrO_4^{2-}$ (at a pH of 5.3) in the presence of different KCl concentrations at their optimum dosages (300 ppm PSS+ 1.5 mM MTAB+ 0.1 mM $Fe(CN)_6^{3-}$; 100 ppm PAA+ 2.5 mM MTAB+ 0.2 mM $CrO_4^{2-}$, respectively).
Figure 42 shows temperature effects on the chromate removal and PAA-MTAB usage efficiencies at the optimum dosage. (100 ppm PAA+ 2.5 mM MTAB+ 0.2 mM $K_2CrO_4$).
Figure 43 shows pH effects on the chromate and PAA-MTAB recovery efficiencies at the basification step with a concentration of 5 and 5 min residence time.
Figure 44 shows residence time effects on the chromate and PAA-MTAB recovery efficiencies at the basification step at a pH of 12 and a concentration factor of 5.
Figure 45 shows pH effects on the chromate and PAA-MTAB regeneration efficiencies at the acidification step in 15 min residence time with a concentration factor of 5.
Figure 46 shows residence time effects on the chromate and PAA-MTAB regeneration efficiencies at the acidification step (a pH of 1.5) with a concentration factor of 5.
Figure 47 shows PSA binding selectivity between 0.2 mM $K_3Fe(CN)_6$ and 0.2 mM $K_2CrO_4$ in the PAA-MTAB system at different pH values (100 ppm PAA+ 2.5 mM MTAB).

## DETAILED DESCRIPTION OF THE INVENTION

### Complex

The invention provides a complex comprising: a charged species and a polymer-surfactant aggregate, the polymer-surfactant aggregate comprising (i) a polymer comprising ionisable groups, and (ii) an ionic surfactant, wherein: (a) the charged species comprises a metal anion or a complex anion which comprises a metal or metalloid; (b) the ionic surfactant is a cationic surfactant; and (c) the polymer comprising ionisable groups is a negatively charged polymer when in aqueous solution.

The term complex, as used herein, indicates a degree of chemical and/or physical interaction between the components of the complex, i.e. between the charged species, the polymer comprising ionisable groups, and the ionic surfactant. For instance, in the complex of the invention the polymer comprising ionisable groups, and the ionic surfactant may be attracted to one another via electrostatic and/or hydrophobic interactions. Further, the charged species may be attracted to the polymer comprising ionisable groups and/or the ionic surfactant via electrostatic interactions. In contrast, the term composition, as used herein, does not require any such interactions, although interactions may nevertheless be present. The term composition is therefore broader than, but encompasses, the term complex.

It is currently believed that the polymer comprising ionisable groups and the ionic surfactant form a polymer-surfactant aggregate, which polymer-surfactant aggregate adsorbs the charged species from solution, e.g. from a dilute solution. Polymer-surfactant aggregates may, for example, be formed by attaching an ionic surfactant to a polymer comprising ionisable groups. Although not in accordance with the surfactants and polymers used in the invention, as an example, polymer-surfactant aggregates may be formed by attaching an anionic surfactant monomer (e.g., sodium

dodecyl sulphate (SDS)) to a polymer comprising ionisable groups that is positively or neutral charged when in solution (e.g. poly (diallyl dimethyl ammonium) chloride (PDAC) or poly ethylenimine (PEI)). For example, PEI is a neutral polymer when the solution pH > 7, and it becomes positively charged when the solution is acidic. The surfactant monomers are thought to attach in the form of associated groups smaller than micelles, and their formation occurs at a surfactant concentration which is a few orders of magnitude lower than the critical micellar concentration. The inventors have, for example, found that the formation of the complex of the invention may be used to permit high removal efficiencies of charged species from solution.

A particularly preferred characteristic of this polymer-surfactant aggregate is that it comprises both positive and negative charges from oppositely charged polymer and surfactant. This existence of opposite charge sites in one structure allows the absorption of oppositely charged species onto the surfactant aggregates, and the flocculation of polymer-surfactant aggregates into precipitates (self-removable and increasing particle size).

The polymer-surfactant aggregates, with the adsorbed charged species flocculate (i.e. come out of solution) and may, therefore, be easily separated from solution.

The term "polymer comprising ionisable groups", as used herein, refers to any polymer comprising a functional group that is ionised or that is capable of being ionised, i.e. a functional group that can carry a charge. If, for example, the polymer is in solution, a change in the pH of the solution may be necessary for the functional group to become charged. The term "polymer comprising ionisable groups" therefore encompasses anionic polymers (i.e. a polymer comprising a negatively charged functional group), cationic polymers (i.e. a polymer comprising a positively charged functional group) and polyelectrolytes (i.e. a polymer comprising a functional group that can ionise in solution). A polymer comprising ionisable groups may be a polymer comprising two or more different ionisable groups. The term "polymer comprising ionisable groups" therefore also encompasses ampholytic polymers. The term ampholytic polymer, as used herein, refers to a polyelectrolyte comprising macromolecules containing both cationic and anionic groups, or corresponding ionizable groups. An ampholytic polymer in which ionic groups of opposite sign are incorporated into the same pendant groups may be called, depending on the structure of the pendant groups, a zwitterionic polymer, polymeric inner salt, or polybetaine. The polymer comprising ionisable groups used in the invention is a negatively charged polymer when in aqueous solution.

The term surfactant, as used herein, refers to an amphiphilic compound comprising a hydrophobic group and a hydrophilic group. A surfactant is thus a compound which comprises both a water soluble component and a water insoluble component. The hydrophobic group of a surfactant is often referred to as the tail group. The tail usually comprises a hydrocarbon chain, i.e. a chain comprising carbon atoms, which may be branched, linear or aromatic in nature. The hydrophilic group of a surfactant is often referred to as the head group. The head usually comprises an ionic functional group, such as an anionic functional group or a cationic functional group, but the head group may alternatively be a non-ionic group. The surfactant may comprise one or more hydrophobic groups, for instance the surfactant may comprise one or two hydrophobic groups. Typically, a surfactant reduces the surface tension of a liquid to which it is added. The surfactant used in the invention is a cationic surfactant. Examples of surfactants include Myristyltrimethylammonium chloride and Myristyltrimethylammonium bromide (which can be abbreviated to $C_{14}$TAB or MTAB).

In the complex of the invention, the ionic surfactant typically comprises a hydrocarbon chain terminating in an ionic functional group. The term anionic, as used herein, refers to a negatively charged ion. Thus, an anionic surfactant is typically a compound comprising a hydrocarbon chain terminating in an anionic functional group. The term cationic, as used herein, refers to a positively charged ion. Thus, a cationic surfactant is typically a compound comprising a hydrocarbon chain terminating in a cationic functional group, e.g. an ionic functional group bonded to an unsubstituted $C_5$-$C_{35}$ alkyl group.

The charged species comprising metal ions may, for instance, be (a) a metal anion; or (b) a complex anion which comprises a metal such as chromate, dichromate, ferricyanide and permanganate.

The charged species may be monovalent or have a valency of two or more, for instance, a valency of one, two, three, four, five or six.

As used herein, the term "sulphate" represents a group of formula: $-SO_4^{2-}$. As would be understood by the skilled person, a sulphate group can exist in protonated and deprotonated forms (for example, $-SO_4H^-$ or $-SO_4^{2-}$), and in salt forms (for example, $-SO_4X^+$, wherein $X^+$ is a monovalent cation). $X^+$ may for instance be an alkali metal cation or a cationic alkaline earth metal monohydroxide. Thus, $X^+$ may be $Na^+$, $K^+$, $[CaOH]^+$ or $[MgOH]^+$, for instance.

As used herein, the term "sulfonate" represents a group of formula: $-S(=O)_2O^-$. As would be understood by the skilled person, a sulfonate group can exist in protonated and deprotonated forms (for example, $-S(O)_2OH$ or $-S(=O)_2O^-$), and in salt forms (for example, $-S(O)_2O^-X^+$, wherein $X^+$ is a monovalent cation). $X^+$ may for instance be an alkali metal cation or a cationic alkaline earth metal monohydroxide. Thus, $X^+$ may be $Na^+$, $K^+$, $[CaOH]^+$ or $[MgOH]^+$, for instance.

As used herein, the term "phosphate" represents a group of formula: $-PO_4^{3-}$. As would be understood by the skilled person, a phosphate group can exist in protonated and deprotonated forms (for example, $-PO_4H^{2-}$, $-PO_4H_2^-$ or $-PO_4^{3-}$), and in salt forms (for example, $-PO_4X^{2-}$ or $-PO_4X_2^-$, wherein $X^+$ is a monovalent cation). $X^+$ may for instance be an alkali metal cation or a cationic alkaline earth metal monohydroxide. Thus, $X^+$ may be $Na^+$, $K^+$, $[CaOH]^+$ or [MgOH]

+, for instance.

As used herein, the term "phosphonate" represents a group of formula: $-PO(OR)_2^-$, wherein R is, for example, hydrogen or a $C_1$-$C_6$ alkyl group. As would be understood by the skilled person, a phosphonate group can exist in protonated and deprotonated forms (for example, $-PO(OR)_2H$ of $-PO(OR)_2^-$), and in salt forms (for example, $-PO(OR)_2X$, wherein $X^+$ is a monovalent cation). $X^+$ may for instance be an alkali metal cation or a cationic alkaline earth metal monohydroxide. Thus, $X^+$ may be $Na^+$, $K^+$, $[CaOH]^+$ or $[MgOH]^+$, for instance.

As used herein, the term "carboxyl" represents a group of the formula: $-C(=O)O^-$, or - $COO^-$. As would be understood by the skilled person, a carboxyl group can exist in protonated and deprotonated forms (for example, $-C(=O)OH$ and $-C(=O)O^-$), and in salt forms (for example, $-C(=O)O^-X^+$, wherein $X^+$ is a monovalent cation). $X^+$ may for instance be an alkali metal cation or a cationic alkaline earth metal monohydroxide. Thus, $X^+$ may be $Na^+$, $K^+$, $[CaOH]^+$ or $[MgOH]^+$, for instance.

The complex of the invention comprises a negatively charged species, a polymer comprising ionisable groups which is a negatively charged polymer when in aqueous solution, and a cationic surfactant. The negatively charged species comprises: (a) a metal anion; or (b) a complex anion which comprises a metal or metalloid.

Examples of negatively charged species comprising a metal anion include organometallic metal carbonyl complexes such as $[V(CO)_6]^-$ and $[Fe(CO)_4]^{2-}$.

Examples of negatively charged species comprising a complex anion which comprises a metal or metalloid include oxyanions such as coboltate, cuprate, ferrate, ferrite, ferricyanide, permanganate manganate, nickelate, argenate, vanadata, aluminate, urinate, zincate stannate, chromate and dichromate. For instance, the negatively charged species comprising a complex anion which comprises a metal may be $[CrO_4]^{2-}$, $[Cr_2O_7]^{2-}$, $[Fe(CN)_6]^{3-}$ or $[MnO_4]^-$, for instance, $[CrO_4]^{2-}$, $[Fe(CN)_6]^{3-}$ or $[MnO_4]^-$. The negatively charged species comprising a complex anion which comprises a metal may for instance be $[Cr_2O_7]^{2-}$, $[Fe(CN)_6]^{3-}$ or $[MnO_4]^-$, for instance, $[Fe(CN)_6]^{3-}$ or $[MnO_4]^-$.

Usually, the negatively charged species comprises a complex anion which comprises a metal, which metal is a group I metal, a group II metal, a transition metal, a group III metal, a group IV metal, a group V metal, a group VI metal, a group VII metal, a lanthanide metal or an actinide metal, or a combination of two or more thereof.

Typically, the negatively charged species comprises a complex anion which comprises a metal, which metal is a group II metal, a transition metal, a group III metal, a group IV metal, a group V metal, or a group VI metal or a combination of two or more thereof.

For instance, the negatively charged species may comprise a complex anion which comprises a metal, which metal is a group II metal, a transition metal, a group IV metal, a group V metal or a group VI metal, or a combination of two or more thereof.

In one embodiment, when the negatively charged species comprising a complex anion which comprises a metal or metalloid, the metal or metalloid is selected from cadmium (Cd), chromium (Cr), copper (Cu), nickel (Ni), arsenic (As), lead (Pb), mercury (Hg), selenium (Se), silver (Ag) or zinc (Zn), or any combination thereof.

Usually, the negatively charged species comprises a complex anion which comprises a metal or metalloid, which metal or metalloid is cadmium, chromium, copper, magnesium, nickel, arsenic, lead, mercury, selenium, silver or zinc, or a combination of two or more thereof.

The negatively charged species may, for instance, be monovalent or have a valency of two or more, for instance, a valency of one, two, three, four, five or six. Typically, the positively charged species has a valency of at least two, for instance a valency of two, three, four, fix or six. The negatively charged species may, for example, have a valency of two, three, four or five, for instance, two, three or four. For example, the negatively charged species may have a valency of two or three.

Usually, the negatively charged species comprises a transition metal. For instance, the negatively charged species may comprise chromate.

Typically, the cationic surfactant comprises (a) a cationic functional group comprising a quaternary nitrogen or (b) a cationic nitrogen-containing group wherein the nitrogen is not a quaternary nitrogen.

As used herein, a cationic nitrogen-containing group is a group wherein the nitrogens are not quaternary nitrogens, such as protonated monodentate primary, secondary and tertiary amino groups, i.e. $-NH_3$, $-NHR_2$, and $-NH_2R$, and protonated bidentate secondary and tertiary amines, i.e. $-N^+RH-$ and $-NH_2-$. As the skilled person will appreciate, the cationic nitrogen-containing groups will usually only be cationic if in acidic conditions (i.e. pH of less than 7).

When the cationic surfactant comprises a quaternary nitrogen, the quaternary nitrogen typically has the formula: $(NR_1R_2R_3R_4)^+$, wherein $R_1$, $R_2$, $R_3$ and $R_4$ are independently selected from a substituted or unsubstituted alkyl group or a substituted or unsubstituted alkenyl group.

As used herein, an alkyl group can be a substituted or unsubstituted, linear or branched chain saturated radical, it is often a substituted or an unsubstituted linear chain saturated radical, more often an unsubstituted linear chain saturated radical. The alkyl group may, for instance, it may be a $C_1$-$C_{35}$ alkyl group, which is an alkyl group having 1 to 35 carbon atoms, for instance, a $C_1$-$C_{30}$ alkyl group, which is an alkyl group having 1 to 30 carbon atoms. A $C_1$-$C_{20}$ alkyl group is an unsubstituted or substituted, straight or branched chain saturated hydrocarbon radical. For instance, a $C_1$-$C_{10}$

alkyl, for example methyl, ethyl, propyl, butyl, pentyl, hexyl, heptyl, octyl, nonyl or decyl, or $C_1$-$C_6$ alkyl, for example methyl, ethyl, propyl, butyl, pentyl or hexyl, or $C_1$-$C_4$ alkyl, for example methyl, ethyl, i-propyl, n-propyl, t-butyl, s-butyl or n-butyl. A $C_5$-$C_{35}$ alkyl group it is a substituted or unsubstituted, linear or branched chain saturated radical having from 5 to 35 carbon atoms. For instance a "$C_5$-$C_{35}$ alkyl group" is a substituted or unsubstituted linear chain saturated radical, often an unsubstituted linear chain saturated radical. Preferably a substituted or unsubstituted $C_5$-$C_{35}$ alkyl group is a substituted or unsubstituted $C_8$-$C_{18}$ alkyl group. Suitable alkyl groups include octyl, nonyl, decyl, dodecyl, hexadecyl, heptadecyl and octadecyl. A $C_1$-$C_6$ alkyl radical has from 1 to 6 carbon atoms, suitable alkyl groups include methyl, ethyl, n-propyl, i-propyl, n-butyl, sec-butyl and tert-butyl, as well as pentyl, e.g. $CH_2C(CH_3)_3$, and hexyl, preferably it is $C_1$-$C_4$ alkyl, for example methyl, ethyl, propyl, i-propyl, n-propyl, butyl, t-butyl, s-butyl or n-butyl.

As used herein, an alkenyl group or moiety can be linear, branched or cyclic but is preferably linear. It contains one or more carbon-carbon double bonds. The alkenyl group may, for instance, be a $C_2$-$C_{30}$ alkenyl group, for instance, a $C_5$-$C_{20}$ alkenyl group.

When an alkyl or an alkenyl group is substituted it typically bears one or more substituents selected from substituted or unsubstituted $C_1$-$C_{20}$ alkyl, substituted or unsubstituted aryl (as defined herein), cyano, amino, $C_1$-$C_{10}$ alkylamino, di($C_1$-Cio)alkylamino, arylamino, diarylamino, arylalkylamino, amido, acylamido, hydroxy, oxo, halo, carboxy, ester, acyl, acyloxy, $C_1$-$C_{20}$ alkoxy, aryloxy, haloalkyl, sulfonic acid, sulfhydryl (i.e. thiol, -SH), $C_1$-$C_{10}$ alkylthio, arylthio, sulfonyl, phosphoric acid, phosphate ester, phosphonic acid and phosphonate ester. Examples of substituted alkyl groups include haloalkyl, hydroxyalkyl, aminoalkyl, alkoxyalkyl and alkaryl groups. The term alkaryl, as used herein, pertains to a $C_1$-$C_{20}$ alkyl group in which at least one hydrogen atom has been replaced with an aryl group. Examples of such groups include, but are not limited to, benzyl (phenylmethyl, $PhCH_2$-), benzhydryl ($Ph_2CH$-), trityl (triphenylmethyl, $Ph_3C$-), phenethyl (phenylethyl, Ph-$CH_2CH_2$-), styryl (Ph-CH=CH-), cinnamyl (Ph-CH=CH-$CH_2$-). Typically a substituted alkyl group carries 1, 2 or 3 substituents, for instance 1 or 2 substituents.

Usually, when the cationic surfactant comprises a quaternary nitrogen, the quaternary nitrogen typically has the formula: $(NR_1R_2R_3R_4)^+$, wherein $R_1$, $R_2$, $R_3$ and $R_4$ are independently selected from a substituted or unsubstituted $C_1$-$C_{30}$ alkyl group.

Typically, $R_1$, $R_2$ and $R_3$ are independently selected from a substituted or unsubstituted $C_1$-$C_6$ alkyl group and $R_4$ is a substituted or unsubstituted $C_{10}$-$C_{30}$ alkyl group. For instance, $R_1$, $R_2$ and $R_3$ may be independently selected from a substituted or unsubstituted $C_1$-$C_4$ alkyl group and $R_4$ may be a substituted or unsubstituted $C_{10}$-$C_{20}$ alkyl group. Usually, $R_1$, $R_2$ and $R_3$ are independently selected from a substituted or unsubstituted $C_1$-$C_3$ alkyl group such as methyl or ethyl, for instance methyl, and $R_4$ is a substituted or unsubstituted $C_{10}$-$C_{20}$ alkyl group, for instance $R_4$ a substituted or unsubstituted $C_{15}$-$C_{20}$ alkyl group.

The cationic surfactant may, for instance, comprise a anion, for instance a halide such as a fluoride, chloride, bromide or iodide anion. Typically, the anion is a chloride anion or a bromide anion, for instance a bromide anion.

The cationic surfactant may, for instance, be selected from a benzalkonium chloride, Myristyltrimethylammonium bromide ($C_{14}$TAB or MTAB) and Myristyltrimethylammonium chloride. The cationic surfactant may, for instance, be Myristyltrimethylammonium bromide ($C_{14}$TAB, or MTAB).

The complex of the invention must comprise a polymer comprising ionisable groups.

The polymer comprising ionisable groups may be a homopolymer or copolymer. The polymer comprising ionisable groups is a negatively charged polymer when in aqueous solution. Thus, the complex comprises a negatively charged species, a polymer comprising ionisable groups that is a negatively charged polymer when in aqueous solution, and a cationic surfactant.

For example, the polymer comprising ionisable groups may be an organic polymer comprising a carboxyl group, a sulfonate group, for instance, a carboxyl group.

Typically, when the polymer is an organic polymer comprising carboxyl groups, the carboxyl groups are carboxylic acid groups. Examples of organic polymers comprising carboxyl groups which can be employed as the polymer comprising ionisable groups in the present invention include, but are not limited to, polyolefins substituted with carboxyl groups, polyesters substituted with carboxyl groups and polysulfides substituted with carboxyl groups. Suitable organic polymers comprising carboxyl groups include polyacrylic acid, poly(alkyl)acrylic acids, such as poly(meth)acrylic acid, and poly(alkyl)acrylic (alkyl)acids, such as poly(methyl methactylate), and salts thereof. For instance, a suitable organic polymer comprising carboxyl groups is PAA (polyacrylic acid).

Usually, when the polymer is an organic polymer comprising sulfonic acid groups, the sulfonate groups are sulfonic acid groups. An example of an organic polymer comprising sulfonate groups, which can be employed as the polymer comprising ionisable groups, is poly(sodium styrene sulfonate). Examples of organic polymers comprising sulfonate groups which can be employed as the polymer comprising ionisable groups include, but are not limited to, polyolefins substituted with sulfonate groups, polyesters substituted with sulfonate groups and polysulfides substituted with sulfonate groups. An example of an organic polymer comprising sulfonate groups, which can be employed as the polymer comprising ionisable groups, is poly(sodium styrene sulfonate).

For instance, the polymer comprising ionisable groups may be a polymer comprising units of formula (IV):

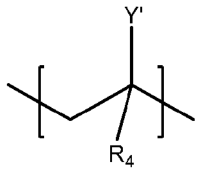

(IV)

wherein: $R_4$ is hydrogen or a substituted or unsubstituted $C_1$-$C_6$ alkyl; Y' is COOX', CONR'R" or 4-phenyl-$SO_3$X'; X' is H or a monovalent cation; and R' and R" are independently hydrogen or a substituted or unsubstituted $C_1$-$C_6$ alkyl.

The monovalent cation $X^+$ may for instance be an alkali metal cation or a cationic alkaline earth metal monohydroxide. Thus, $X^+$ may be $Na^+$, $K^+$, $[CaOH]^+$ or $[MgOH]^+$, for instance.

$R_4$ is usually hydrogen or unsubstituted $C_1$-$C_6$ alkyl, more usually hydrogen or methyl, typically hydrogen.

R' and R" are usually hydrogen or unsubstituted $C_1$-$C_6$ alkyl, more usually hydrogen or methyl, typically hydrogen.

The polymer which comprises monomer units of formula (IV) may be a homopolymer or copolymer. When it is a copolymer, it may comprise two or more different kinds of monomer units falling within formula (IV). Additionally or alternatively, the copolymer may comprise monomer units of formula (IV) and additional monomer units which are other than formula (IV). In some embodiments the polymer which comprises monomer units of formula (IV) consists of said monomer units of formula (IV).

Usually, Y is COOX' and thus the polymer may, for instance, be polyacrylic acid or polymethacrylic acid, or salts thereof. Typically, said polymer is polyacrylic acid, or salts thereof. For instance, polymer may be polyacrylic acid.

In some embodiments, Y' is CONR'R" or 4-phenyl-$SO_3$X' and thus the polymer may, for instance, be polyacrylamide or polystyrene sulfonate, or salts thereof.

The polymer comprising ionisable groups may, for instance, be polystyrene sulfonate (PSS) or polyacrylic acid (PAA).

Typically, for instance, the charged species may be a negatively charged species comprising chromate, permanganate or ferricyanide; the polymer comprising ionisable groups may be PSS; and the ionic surfactant may be $C_{14}$TAB or Myristyltrimethylammonium chloride.

In one embodiment, the complex of the invention is in a solution. Usually, the solution is capable of dissolving the charged species. The charged species may, for instance, be dissolved in said solution prior to the formation of the complex of the invention.

The formation of the complex of the invention provides a way of removing the charged species from said solution. Thus, the solution may be a natural resource such as a river, lake or sea, and/or may comprise wastewater from an agricultural or industrial process.

Usually, the solution is an aqueous solution.

One advantage of the present invention is that it can be used to separate relatively low concentrations of charged species from solution. The solution may, for instance, comprise less than or equal to 1,000 ppm of the charged species, for instance, less than or equal to 500 ppm of the charged species. Usually, the solution comprises less than or equal to 250 ppm of the charged species, for instance, less than or equal to 100 ppm of the charged species. Typically, the solution comprises less than or equal to 50 ppm of the charged species, for instance, less than or equal to 10 ppm of the charged species. The solution may, in some embodiments, comprise less than or equal to 5 ppm of the charged species, for instance about 1 or 2 ppm of the charged species.

Usually, the solution comprises less than or equal to 10,000 ppm of the polymer comprising ionisable groups, for instance, less than or equal to 1,000 ppm of the polymer comprising ionisable groups. Typically, the solution comprises less than or equal to 500 ppm of the polymer comprising ionisable groups, for instance, less than or equal to 250 ppm of the polymer comprising ionisable groups. The solution may, for instance, comprise less than or equal to 150 ppm of the polymer comprising ionisable groups. In some embodiments, the solution may, for instance, comprise less than or equal to 100 ppm of the polymer comprising ionisable groups.

Typically, the solution comprises less than or equal to 25,000 ppm of the ionic surfactant, for instance, the solution comprises less than or equal to 5,000 ppm of the ionic surfactant or less than or equal to 2,500 ppm of the ionic surfactant, for instance, the solution comprises less than or equal to 1,000 ppm of the ionic surfactant. The solution may for instance comprise less than or equal to 3000 ppm of the ionic surfactant. Usually, the solution comprises less than or equal to 500 ppm of the ionic surfactant, for instance, the solution comprises less than or equal to 250 ppm of the ionic surfactant.

In some embodiments, the solution comprises less than or equal to 1,000 ppm of the charged species; and/or less than or equal to 10,000 ppm of the polymer comprising ionisable groups; and/or less than or equal to 25,000 ppm of the ionic surfactant. For instance, the solution may comprise: less than or equal to 100 ppm of the charged species; and/or less than or equal to 500 ppm of the polymer comprising ionisable groups; and/or less than or equal to 3,000

ppm of the ionic surfactant. In one embodiment, the solution comprises: less than or equal to 50 ppm of the charged species; and/or less than or equal to 500 ppm of the polymer comprising ionisable groups; and/or less than or equal to 3,000 ppm of the ionic surfactant. For instance, the solution may comprise: less than or equal to 100 ppm of the charged species; and/or less than or equal to 500 ppm of the polymer comprising ionisable groups; and/or less than or equal to 1,000 ppm of the ionic surfactant. In one embodiment, the solution comprises: less than or equal to 50 ppm of the charged species; and/or less than or equal to 500 ppm of the polymer comprising ionisable groups; and/or less than or equal to 1,000 ppm of the ionic surfactant.

As the skilled person will appreciate, the relative amounts of the charged species, the polymer comprising ionisable groups and the ionic surfactant in the solution may depend upon the identity of charged species the polymer comprising ionisable groups and the ionic surfactant in the solution.

It is believed that the main interaction between the ionic surfactant and the charged species is an electrostatic-based interaction. The molar concentration may, therefore, be varied significantly. As an example, the ratio of the molar concentration of the charged species to the molar concentration of the ionic surfactant, in mM, may be 1:20 to 2:1 and/or the ratio of the molar concentration of the charged species to the molar concentration of the polymer comprising ionisable groups, in mM, may be 1:10 to 2:1 and/or the ratio of the moalr concentration of the polymer comprising ionisable groups to the molar concentration of the ionic surfactant, in mM, may be 1:10 to 20:1. For instance, the ratio of the molar concentration of the charged species to the molar concentration of the ionic surfactant to the molar concentration of the polymer comprising ionisable groups, in mM, may be 1:20:1 to 1:1:10.

The relative charges of the charged species, ionic surfactant and polymer comprising ionisable groups may be an important consideration. Considering, by way of example, the charge ratio of the polymer comprising ionisable groups to the ionic surfactant, one charge site on the polymer chain may be able to attract, for instance, 20 surfactant monomers to form an aggregate, thus the charge ratio in this example for the charge ratio of the polymer comprising ionisable groups to the ionic surfactant would be 1:20. In this example, the charge on at least one of the surfactant monomers may, for instance, be neutralised by the charge on the polymer, and the remaining charge can theoretically attract the charged species.

The charge ratio of the charged species to the polymer comprising ionisable groups may, for example, be 1:100 to 1:1, for instance, from 1:50 to 1:1. For example, the charge ratio of the charged species to the polymer comprising ionisable groups may be approximately 1:20. The charge ratio of the polymer comprising ionisable groups to the ionic surfactant may, for example, be from 1:1 to 1:100, for instance, from 1:1 to 1:50. For example, the charge ratio of the polymer comprising ionisable groups to the ionic surfactant may be from 1:1 to 1:20. The charge ratio of the charged species to the ionic surfactant may, for example, be from 1:1 to 1:40, for instance, from 1:1 to 1:20. For example, the charge ratio of the charged species to the ionic surfactant may be from 1:1 to 1:10.

As an example, the charge ratio for the charged species to the polymer comprising ionisable groups to the ionic surfactant may be from 1:1:40 to 1:80:1, for instance, from 1:1:20 to 1:40:1. For example, the charge ratio for the charged species to the polymer comprising ionisable groups to the ionic surfactant may be from 1:1:10 to 1:20:1.

### First Process of the Invention

The present invention also provides a process comprising treating a solution with an ionic surfactant and a polymer comprising ionisable groups, which solution comprises a charged species dissolved in a solvent, wherein the charged species is a negatively charged species and the ionic surfactant is a cationic surfactant, wherein the polymer comprising ionisable groups and the ionic surfactant form a polymer-surfactant aggregate, and the polymer-surfactant aggregate adsorbs the charged species from the solution to produce a complex, which complex comprises: the charged species, the polymer comprising ionisable groups and the ionic surfactant, and wherein the solution is an aqueous solution, wherein (a) the charged species comprises a metal anion or a complex anion which comprises a metal or metalloid; and (b) the polymer comprising ionisable groups is a negatively charged polymer when in aqueous solution.

The process comprising treating a solution with an ionic surfactant and a polymer comprising ionisable groups is referred to herein as the first process of the invention.

Typically, in the first process of the invention, the ionic surfactant is an ionic surfactant as defined herein, and/or the polymer comprising ionisable groups is a polymer comprising ionisable groups as defined herein, and/or the charged species is a charged species as defined herein.

The skilled person will therefore understand that the first process of the invention may be used in a process of removing a charged species from a solution, for instance removing a charged species considered a pollutant from wastewater.

Typically, the solution is capable of dissolving the charged species. The charged species may, for instance, be dissolved in said solution prior to the first process of the invention commencing. As discussed above, the formation of the complex of the invention provides a way of removing the charged species from said solution. Thus, the solution may be a natural resource such as a river, lake or sea, and/or may comprise wastewater from an agricultural or industrial

process.

The solution is an aqueous solution.

In the first process of the invention, the ionic surfactant and the polymer comprising ionisable groups may be added in any order. Thus, the process may comprise treating the solution with an ionic surfactant and then treating the solution with a polymer comprising ionisable groups, or treating the solution with an ionic surfactant and a polymer comprising ionisable groups simultaneously, or treating the solution with a polymer comprising ionisable groups and then treating the solution with an ionic surfactant. Typically the process comprises treating the solution with a polymer comprising ionisable groups and then treating the solution with an ionic surfactant.

The solution may, for instance, comprise less than or equal to 1,000 ppm of the charged species, for instance, less than or equal to 500 ppm of the charged species. Usually, the solution comprises less than or equal to 250 ppm of the charged species, for instance, less than or equal to 100 ppm of the charged species. Typically, the solution comprises less than or equal to 50 ppm of the charged species, for instance, less than or equal to 10 ppm of the charged species. The solution may, in some embodiments, comprise less than or equal to 5 ppm of the charged species, for instance about 1 or 2 ppm of the charged species.

Usually, the treated solution comprises less than or equal to 10,000 ppm of the polymer comprising ionisable groups, for instance, less than or equal to 1,000 ppm of the polymer comprising ionisable groups. Typically, the treated solution comprises less than or equal to 500 ppm of the polymer comprising ionisable groups, for instance, less than or equal to 250 ppm of the polymer comprising ionisable groups. The treated solution may, for instance, comprise less than or equal to 150 ppm of the polymer comprising ionisable groups. In some embodiments, the treated solution may, for instance, comprise less than or equal to 100 ppm of the polymer comprising ionisable groups.

Typically, the treated solution comprises less than or equal to 25,000 ppm of the ionic surfactant, for instance, the treated solution comprises less than or equal to 5,000 ppm of the ionic surfactant or less than or equal to 2,500 ppm of the ionic surfactant, for instance, the treated solution comprises less than or equal to 1,000 ppm of the ionic surfactant. The treated solution may for instance comprise less than or equal to 3000 ppm of the ionic surfactant. Usually, the treated solution comprises less than or equal to 500 ppm of the ionic surfactant, for instance, the treated solution comprises less than or equal to 250 ppm of the ionic surfactant.

In some embodiments, the solution comprises less than or equal to 1,000 ppm of the charged species; and/or less than or equal to 10,000 ppm of the polymer comprising ionisable groups; and/or less than or equal to 25,000 ppm of the ionic surfactant. For instance, the solution may comprise: less than or equal to 100 ppm of the charged species; and/or less than or equal to 500 ppm of the polymer comprising ionisable groups; and/or less than or equal to 3,000 ppm of the ionic surfactant. In one embodiment, the solution comprises: less than or equal to 50 ppm of the charged species; and/or less than or equal to 500 ppm of the polymer comprising ionisable groups; and/or less than or equal to 3,000 ppm of the ionic surfactant. For instance, the solution may comprise: less than or equal to 100 ppm of the charged species; and/or less than or equal to 500 ppm of the polymer comprising ionisable groups; and/or less than or equal to 1,000 ppm of the ionic surfactant. In one embodiment, the solution comprises: less than or equal to 50 ppm of the charged species; and/or less than or equal to 500 ppm of the polymer comprising ionisable groups; and/or less than or equal to 1,000 ppm of the ionic surfactant.

As the skilled person will appreciate, the relative amounts of the charged species, the polymer comprising ionisable groups and the ionic surfactant in the solution may depend upon the identity of charged species the polymer comprising ionisable groups and the ionic surfactant in the solution.

The molar concentration may be varied significantly. As an example, the ratio of the molar concentration of the charged species to the molar concentration of the ionic surfactant, in mM, may be 1:20 to 2:1 and/or the ratio of the molar concentration of the charged species to the molar concentration of the polymer comprising ionisable groups, in mM, may be 1:10 to 2:1 and/or the ratio of the molar concentration of the polymer comprising ionisable groups to the molar concentration of the ionic surfactant, in mM, may be 1:10 to 20:1. For instance, the ratio of the molar concentration of the charged species to the molar concentration of the ionic surfactant to the molar concentration of the polymer comprising ionisable groups, in mM, may be 1:20:1 to 1:1:10.

The charge ratio of the charged species to the polymer comprising ionisable groups may, for example be 1:100 to 1:1, for instance, from 1:50 to 1:1. For example, the charge ratio of the charged species to the polymer comprising ionisable groups may be approximately 1:20. The charge ratio of the polymer comprising ionisable groups to the ionic surfactant may, for example, be from 1:1 to 1:100, for instance, from 1:1 to 1:50. For example, the charge ratio of the polymer comprising ionisable groups to the ionic surfactant may be from 1:1 to 1:20. The charge ratio of the charged species to the ionic surfactant may, for example, be from 1:1 to 1:40, for instance, from 1:1 to 1:20. For example, the charge ratio of the charged species to the ionic surfactant may be from 1:1 to 1:10.

As an example, the charge ratio for the charged species to the polymer comprising ionisable groups to the ionic surfactant may be from 1:1:40 to 1:80:1, for instance, from 1:1: 20 to 1:40:1. For example, the charge ratio for the charged species to the polymer comprising ionisable groups to the ionic surfactant may be from 1:1:10 to 1:20:1.

One advantage of the first process of the invention is that it can operate over a wide range of pH, for instance,

the complex of the invention may be formed in an acidic solution, a neutral solution or an alkaline solution.

Usually, in the first process of the invention, the solution has a pH of from 2 to 13, for instance from 4 to 10. Typically, the solution has a pH of from 6 to 8, for instance a pH of approximately 7.

**Second process step**

The process of the invention may be a process for removing a charged species from a solution, which process comprises the first process of the invention and further comprises separating the complex comprising the charged species, the polymer comprising ionisable groups and the ionic surfactant from the solution.

The process for removing a charged species from a solution comprising the charged species and a solvent is referred to herein as the second process step.

Usually, in the second process step, the ionic surfactant is an ionic surfactant as defined herein, and/or the polymer comprising ionisable groups is a polymer comprising ionisable groups as defined herein, and/or the charged species is a charged species as defined herein.

Typically, the complex is a complex as defined herein.

Typically, the solution is capable of dissolving the charged species. The charged species may, for instance, be dissolved in said solution prior to the first process of the invention commencing. As discussed above, the formation of the complex of the invention provides a way of removing the charged species from said solution. Thus, the solution may be a natural resource such as a river, lake or sea, and/or may comprise wastewater from an agricultural or industrial process.

The solution is an aqueous solution.

The solution may, for instance, comprise less than or equal to 1,000 ppm of the charged species, for instance, less than or equal to 500 ppm of the charged species. Usually, the solution comprises less than or equal to 250 ppm of the charged species, for instance, less than or equal to 100 ppm of the charged species. Typically, the solution comprises less than or equal to 50 ppm of the charged species, for instance, less than or equal to 10 ppm of the charged species. The solution may, in some embodiments, comprise less than or equal to 5 ppm of the charged species, for instance about 1 or 2 ppm of the charged species.

Usually, the solution comprises less than or equal to 10,000 ppm of the polymer comprising ionisable groups, for instance, less than or equal to 1,000 ppm of the polymer comprising ionisable groups. Typically, the solution comprises less than or equal to 500 ppm of the polymer comprising ionisable groups, for instance, less than or equal to 250 ppm of the polymer comprising ionisable groups. The solution may, for instance, comprise less than or equal to 150 ppm of the polymer comprising ionisable groups. In some embodiments, the solution may, for instance, comprise less than or equal to 100 ppm of the polymer comprising ionisable groups.

Typically, the solution comprises less than or equal to 25,000 ppm of the ionic surfactant, for instance, the solution comprises less than or equal to 5,000 ppm of the ionic surfactant or less than or equal to 2,500 ppm of the ionic surfactant, for instance, the solution comprises less than or equal to 1000 ppm of the ionic surfactant. The solution may for instance comprise less than or equal to 3000 ppm of the ionic surfactant. Usually, the solution comprises less than or equal to 500 ppm of the ionic surfactant, for instance, the solution comprises less than or equal to 250 ppm of the ionic surfactant.

In some embodiments, the solution comprises less than or equal to 1,000 ppm of the charged species; and/or less than or equal to 10,000 ppm of the polymer comprising ionisable groups; and/or less than or equal to 25,000 ppm of the ionic surfactant. For instance, the solution may comprise: less than or equal to 100 ppm of the charged species; and/or less than or equal to 500 ppm of the polymer comprising ionisable groups; and/or less than or equal to 3,000 ppm of the ionic surfactant. In one embodiment, the solution comprises: less than or equal to 50 ppm of the charged species; and/or less than or equal to 500 ppm of the polymer comprising ionisable groups; and/or less than or equal to 3,000 ppm of the ionic surfactant. For instance, the solution may comprise: less than or equal to 100 ppm of the charged species; and/or less than or equal to 500 ppm of the polymer comprising ionisable groups; and/or less than or equal to 1,000 ppm of the ionic surfactant. In one embodiment, the solution comprises: less than or equal to 50 ppm of the charged species; and/or less than or equal to 500 ppm of the polymer comprising ionisable groups; and/or less than or equal to 1,000 ppm of the ionic surfactant.

As the skilled person will appreciate, the relative amounts of the charged species, the polymer comprising ionisable groups and the ionic surfactant in the solution may depend upon the identity of charged species the polymer comprising ionisable groups and the ionic surfactant in the solution.

The molar concentration may be varied significantly. As an example, the ratio of the molar concentration of the charged species to the molar concentration of the ionic surfactant, in mM, may be 1:20 to 2:1 and/or the ratio of the molar concentration of the charged species to the molar concentration of the polymer comprising ionisable groups, in mM, may be 1:10 to 2:1 and/or the ratio of the moalr concentration of the polymer comprising ionisable groups to the molar concentration of the ionic surfactant, in mM, may be 1:10 to 20:1. For instance, the ratio of the molar concentration

of the charged species to the molar concentration of the ionic surfactant to the molar concentration of the polymer comprising ionisable groups, in mM, may be 1:20:1 to 1:1:10.

The charge ratio of the charged species to the polymer comprising ionisable groups may, for example be 1:100 to 1:1, for instance, from 1:50 to 1:1. For example, the charge ratio of the charged species to the polymer comprising ionisable groups may be approximately 1:20. The charge ratio of the polymer comprising ionisable groups to the ionic surfactant may, for example, be from 1:1 to 1:100, for instance, from 1:1 to 1:50. For example, the charge ratio of the polymer comprising ionisable groups to the ionic surfactant may be from 1:1 to 1:20. The charge ratio of the charged species to the ionic surfactant may, for example, be from 1:1 to 1:40, for instance, from 1:1 to 1:20. For example, the charge ratio of the charged species to the ionic surfactant may be from 1:1 to 1:10.

As an example, the charge ratio for the charged species to the polymer comprising ionisable groups to the ionic surfactant may be from 1:1:40 to 1:80:1, for instance, from 1:1: 20 to 1:40:1. For example, the charge ratio for the charged species to the polymer comprising ionisable groups to the ionic surfactant may be from 1:1:10 to 1:20:1.

In the second process step, the step of separating the composition from the solution may comprise a process of separation selected from adsorption, decantation, elutriation, filtration, magnetic separation, sedimentation and sieving, or a combination thereof.

As used herein, adsorption is the adhesion of particles (e.g. particles in the composition, the complex, the charged species, the polymer comprising ionisable groups or the ionic surfactant) in solution to a surface.

As used herein, decantation is a process for the separation of mixtures, for example, by removing liquid layer.

As used herein, elutriation is a process for separating particles based on their size, shape and/or density. The processes typically uses a stream of gas or liquid flowing in a direction usually opposite to the direction of sedimentation.

As used herein, filtration is a process of separating solids from liquid using a medium that allows liquids to pass through it, but prevents solids of a certain size from passing through it.

As used herein, magnetic separation is a process of using a magnetic force to remove a magnetically susceptible material.

As used herein, sedimentation refers to the tendency for particles in suspension to settle out of a liquid.

As used herein, sieving is a process for separating solids from liquids using a sieve, i.e. a mesh or net capable of effectively trapping solid particles.

Typically, the step of separating the composition from the solution comprises filtration and/or sedimentation, for instance, the step of separating the composition from the solution may comprise passing the solution through a filter.

As the skilled person will understand, where treatment speed is important, a coarse filtration membrane, or indeed self-flocculation, offers higher flux than ultrafiltration and nanofiltration membranes with the same membrane area.

The second process step typically comprises a step of separating the composition from the solution comprises passing the solution through a filter, wherein the pore size of the filter is smaller than the size of said complex. The pore size may, for instance, be larger than the size of the charged species. Thus, typically, the complex will not be able to pass through the filter whereas any charged species that are not part of a complex will be able to pass through the filter.

As used herein, the pore size is the average diameter of the pore. If, for example, the pore is not spherical, the diameter of an individual pore is the diameter of a circle having the same area as the pore.

Typically, the step of separating the composition from the solution comprises passing the solution through a filter, wherein the filter has an average pore size of from 5 μm to 75 μm, for instance, from 5 μm to 50 μm. Usually, the filter has an average pore size of from 15 μm to 25 μm, for instance, about 20 μm.

**Third Process Step**

The process of the invention may further comprise removing the charged species from the complex comprising the charged species, the polymer comprising ionisable groups and the ionic surfactant, which process comprises forming a salt of the charged species.

The process for removing a charged species from a complex is referred to herein as the third process step.

Typically, in the third process step, the ionic surfactant is an ionic surfactant as defined herein, and/or the polymer comprising ionisable groups is a polymer comprising ionisable groups as defined herein, and/or the charged species is a charged species as defined in herein.

Usually, the complex is a complex as defined in herein.

The first process of the invention may be used to produce a complex in solution, the second process step may be used to separate the complex from the solution and the third process step may be used to remove a charged species from the complex, i.e. the third process step may be used to recover the charged species that was present in solution prior to the first process of the invention.

The third process step comprises forming a salt of the charged species. As the skilled person will appreciate, a salt is an ionic compound that may be formed when a positively charged species reacts with a negatively charged species to form an electrically neutral product. Typically, a salt is produced by the neutralization reaction between an

acid and a base. Thus, the formation of a salt may require the pH of a solution to be adjusted (i.e. increased or decreased) to produce the desired result. Further, for the charged species to form a neutral species, the salt formation typically requires the presence of a suitable counter ion. The charged species is a negatively charged species. The counter ion will, therefore, be a positively charged counter ion. The counter ion may be found in the solution or may be added to the solution as part of the process of salt formation.

Usually, the third process step comprises adjusting the pH, for instance, by treating the complex with an alkaline solution. An alkaline solution will typically increase the pH of the solution. If, for instance, the pH of the solution was 7 prior to the third process step, treating the complex with an alkaline solution would increase the pH of the solution to a pH of more than 7. The third process step may comprise treating the complex with a base.

Suitable bases include hydroxides such as sodium hydroxide (NaOH), potassium hydroxide (KOH), ammonium hydroxide ($NH_4OH$), calcium hydroxide ($Ca(OH)_2$), magnesium hydroxide ($Mg(OH)_2$), barium hydroxide ($Ba(OH)_2$), aluminium hydroxide ($Al(OH)_3$), iron (ii) hydroxide ($Fe(OH)_2$), iron (iii) hydroxide ($Fe(OH)_3$), zinc hydroxide ($Zn(OH)_2$) and lithium hydroxide (LiOH). The base may, for example, be sodium hydroxide or potassium hydroxide, for instance, potassium hydroxide.

Typically, the third process step further comprises separating the salt from the polymer comprising ionisable groups and the ionic surfactant. The step of separating the salt from the polymer comprising ionisable groups and the ionic surfactant may comprise a process of separation selected from adsorption, decantation, elutriation, filtration, magnetic separation, sedimentation and sieving, or a combination thereof. The process of separation may, for instance, be filtration or sedimentation, or a combination thereof.

Usually, the step of separating the salt from the polymer comprising ionisable groups and the ionic surfactant comprises filtration.

The step of separating the salt from the polymer comprising ionisable groups and the ionic surfactant may, for instance, comprise filtering a composition comprising (i) a solution of the salt, and (ii) a precipitate comprising the polymer comprising ionisable groups and the ionic surfactant.

Usually, filtering the composition comprises using a filter having an average pore size of from 5 $\mu$m to 75 $\mu$m, for instance, from 5 $\mu$m to 50 $\mu$m. Usually, the filter has an average pore size of from 15 $\mu$m to 25 $\mu$m, for instance, about 20 $\mu$m.

The third process step may further comprise, after the step of separating the salt from the polymer comprising ionisable groups and the ionic surfactant, a step of recovering the polymer comprising ionisable groups and/or the ionic surfactant.

It is presently thought that the polymer comprising ionisable groups and the ionic surfactant, when in solution together, for a polymer-surfactant aggregate.

Usually, the step of recovering the polymer comprising ionisable groups and/or the ionic surfactant comprises treating the polymer comprising ionisable groups and the ionic surfactant with an acidic solution. For instance, the step of recovering the polymer comprising ionisable groups and/or the ionic surfactant may comprise breaking apart the polymer-surfactant aggregate.

Typically, the step of recovering the polymer comprising ionisable groups and/or the ionic surfactant comprises adjusting the pH of a composition comprising the polymer comprising ionisable groups and the ionic surfactant.

For instance, the step of recovering the polymer comprising ionisable groups and/or the ionic surfactant may comprise adjusting the pH of a composition comprising the polymer comprising ionisable groups and the ionic surfactant by treating the polymer comprising ionisable groups and the ionic surfactant with an acidic solution. The step of recovering the polymer comprising ionisable groups and/or the ionic surfactant may, therefore, comprise decreasing the pH of the solution. If, for example, the solution had a pH of more than 7, decreasing the pH of the solution would result in the solution having a pH of less than or equal to 7, for instance, a pH of less than 7. The acidic solution may be an acid selected from an inorganic acid, a sulfonic acid, a carboxylic acid and a halogenated carboxylic acid, or a combination thereof. The inorganic acid may, for instance, be an inorganic acid as defined herein. The sulfonic acid may, for instance, be a sulfonic acid as defined herein. The carboxylic acid may, for instance, be a carboxylic acid as defined herein. The halogenated carboxylic acid may, for instance, be a halogenated carboxylic acid as defined herein.

After the step of recovering the polymer comprising ionisable groups and/or the ionic surfactant, the recovered polymer comprising ionisable groups and/or the recovered ionic surfactant may, for instance, be used in another process, i.e. the recovered polymer comprising ionisable groups and/or the recovered ionic surfactant may recycled. In one embodiment, the third process step comprises using the recovered polymer comprising ionisable groups and/or the recovered ionic surfactant in a further process for treating a solution with an ionic surfactant and a polymer comprising ionisable groups (i.e. the first process of the invention) as defined herein.

## Removing a Charged Species from a Solution

The process of the invention may be a process for removing a charged species from a solution, which process

comprises: (i) treating a solution with an ionic surfactant and a polymer comprising ionisable groups, which solution comprises a charged species dissolved in a solvent, wherein the charged species is a negatively charged species and the ionic surfactant is a cationic surfactant, wherein the polymer comprising ionisable groups and the ionic surfactant form a polymer-surfactant aggregate, and the polymer-surfactant aggregate adsorbs the charged species from the solution to produce a complex, which complex comprises: the charged species, the polymer comprising ionisable groups and the ionic surfactant, and wherein the solution is an aqueous solution, wherein (a) the charged species comprises a metal anion or a complex anion which comprises a metal or metalloid; and (b) the polymer comprising ionisable groups is a negatively charged polymer when in aqueous solution; and (ii) separating from the solution a composition comprising: the charged species, the polymer comprising ionisable groups, and the ionic surfactant.

Thus, for instance, the process for removing a charged species from a solution may comprise the first process of the invention and the second process step.

Typically, said composition is a complex which comprises the charged species, the polymer comprising ionisable groups, and the ionic surfactant, and the process further comprises: (iii) removing the charged species from the complex.

Thus, for instance, the process may further comprise the third process step, i.e. the process may comprise the third process step as well as the first process of the invention and the second process step.

Usually, in the process for removing a charged species from a solution the ionic surfactant is an ionic surfactant as defined herein, and/or the polymer comprising ionisable groups is a polymer comprising ionisable groups as defined herein, and/or the charged species is a charged species as defined herein.

In one embodiment of the invention, the process for removing a charged species from a solution comprises: (i) treating a solution with an ionic surfactant and a polymer comprising ionisable groups comprises a process as defined herein; and/or (ii) separating from the solution said composition comprises a process for removing a charged species from a solution as defined in herein; and/or (iii) removing the charged species from the complex comprises a process as defined herein.

The process for removing a charged species from a solution may, for instance, further comprises recovering the polymer comprising ionisable groups and/or the ionic surfactant by a process as defined herein, and using the recovered polymer comprising ionisable groups and/or the recovered ionic surfactant in a further process for treating a solution with an ionic surfactant and a polymer comprising ionisable groups as defined herein.

In this way, the polymer comprising ionisable groups and/or the ionic surfactant can be recycled. The amount of the recovered polymer comprising ionisable groups and/or the recovered ionic surfactant may be sufficient to being the whole process again, i.e. to return to the first process of the invention. In some embodiments, however, additional polymer comprising ionisable groups and/or additional ionic surfactant may be added.

**Use of a polymer-surfactant aggregate**

Also described herein is the use of a polymer-surfactant aggregate to extract a charged species from a solution, which polymer-surfactant aggregate comprises a polymer comprising ionisable groups and an ionic surfactant and which solution comprises a charged species dissolved in a solvent, wherein the charged species is a negatively charged species and the ionic surfactant is a cationic surfactant.

Typically, the ionic surfactant is an ionic surfactant as defined herein, and/or the polymer comprising ionisable groups is a polymer comprising ionisable groups as defined herein, and/or the charged species is a charged species as defined herein.

The invention will be further described in the following Examples.

**EXAMPLES**

**Glossary**

CAC: critical aggregate concentration
$C_{14}$TAB: myristyltrimethylammonium bromide
MTAB: myristyltrimethylammonium bromide
CF: coarse filtration
CMC: critical micelle concentration
MEUF: micellar enhanced ultrafiltration
MF: microfiltration
PDAC: poly diallyl dimethyl ammonium chloride
PEI: polyethylenimine

PEUF: polymer enhanced ultrafiltration
PSAs: polymer surfactant aggregates (necklace)
PSS: poly(sodium 4-styrenesulfonate)
SDS: sodium dodecyl sulphate
ST: surface tension
UF: ultrafiltration
PAA: poly(acrylic acid)

## EXAMPLE 1

### Methodology

#### Materials

Poly (diallyl dimethylammonium) chloride (PDAC) (average MW<100,000, 35 wt.% in $H_2O$, charge density 0.62 eqv/mol), poly(ethyleneimine) solution (PEI) (average MW~750,000, 50 wt.% in $H_2O$, poly(ethyleneimine) solution (average MW~25,000), poly (sodium 4-styrenesulfonate) (PSS) (average MW~1,000,000) and Myristyltrimethylammonium bromide ($C_{14}TAB$) (purity ≥ 99%) were provided by Sigma Aldrich. Sodium Dodecyl Sulphate (SDS) (purity ≥ 99.9%) was obtained from Fisher Scientific. The SDS was further purified before use by recrystallization from an ethanol solution three times. Chromium (III) Nitrate nonahydrate and Zinc Sulfate were purchased from Acros Organics and Fisher Scientific, respectively (all purity ≥ 99%). Chromium and Zinc cuvette test kits were obtained from Hach Lange. Hyamine 1622 solution (0.004M), Chloroform stabilized with ethanol, and Dimidium Bromide/Disulphine Blue solution were obtained from Fisher Scientific, Acros Organics and Camlab Chemicals, respectively. 30kDa regenerated cellulose membranes, 0.22 μm and 20 μm mixed cellulose ester membrane filters were obtained from Millipore.

Acidification and alkalisation were achieved by using pre-prepared pH 1 and 13.2 solutions, prepared from concentrated $H_2SO_4$ and NaOH solutions.

### Reference Example - not in accordance with the invention

#### Step 1: Treating a Solution with an Ionic Surfactant and a Polymer Comprising Ionisable Groups

500 ml solutions (80 ppm 750K branched PEI, 1 mM SDS and 0.3 mM $ZnSO_4$) were prepared from 2000 ppm polymer PEI, 0.1 M SDS and 0.01 M $ZnSO_4$ stock solutions which were made in large volumetric flasks. A calculated amount of metal ions and cationic polymer solution were mixed first and then diluted with deionised water. Then, the surfactant solution was added and finally topped up with deionised water. The solution was stirred by a PTFE-coated magnetic stir bar at 200 rpm overnight to achieve equilibrium (transparent solution with precipitates at the bottom and on the beaker wall). These solutions were coarse-filtered.

#### Step 2: Separating the Complex from Solution

The complex was removed by a coarse filter (20 μm). All solutions were filtered by a Millipore model 8050 dead-end filtration cell with a stirrer. The feed generated in step 1 was passed through the 20 μm by gravity feed, such that solutes above the filter pore size were retained in the cell, while water and solutes below the pore size passed into the permeate. The purpose was to separate the metal ions bound to polymer-surfactant precipitates from free metal ions, surfactant monomers and polymers in solution. The flux was calculated from the weight of permeate, which was measured by a scale, and the time spent.

#### Step 3: Removing the Charged Species from the Complex

The zinc was recovery by acidification. A calculated amount of an $H_2SO_4$ solution having pH of 1 was added to the beaker and then stirred at 250 rpm for at least 20 min until the precipitates were floating on the surface. The solution then was transferred to the filtration cell, and stirred at 250 rpm for another 20 min before the filtration started. The filtration stopped until all solution passed through the 20 μm filter. The weight of permeate was record by a scale.

#### Step 4: Recovering the Polymer Comprising Ionisable Groups and the Ionic Surfactant

The polymer and the surfactant were recovered by alkalisation. A calculated amount of a NaOH solution having a pH of 13.2 was added to the beaker and then stirred at 250 rpm for at least 10 min until all the precipitates dissolved.

The solution then was transferred to the filtration cell, and stirred at 250 rpm for another 10 min to recover the polymer and surfactant in the cell. The filtration started when all the precipitates in the cell dissolved. The filtration stopped until all solution passed through the 20 μm filter. The weight of permeate was record by a scale.

**Step 5: Recycling the Polymer Comprising Ionisable Groups and the Ionic Surfactant**

The polymer comprising ionisable groups and the ionic surfactant are optionally recycled for use in the process of steps 1 to 4. As discussed below, the efficiency of the metal ion removal over several complete cycles of steps 1 to 4 was assessed. Optionally, 10 % additional surfactant was added to the system during the recycling step.

**Measurement techniques**

**Total carbon measurement (TOC - VCPH)**

A total organic carbon analyser (TOC - VCPH) from Shimadzu was used to measure the total carbon (TC) in the solution. The only two carbon sources in the solution are SDS and PEI. Thus the TC value reveals the degree of flocculation and de-flocculation.

**Metal ions concentration measurement (Hach DR2800 spectrophotometer)**

A Hach DR2800 spectrophotometer and an Agilent Technologies 200 Series AA Atomic Adsorption Spectrometer were used to determine the concentration of metal ions in the permeate.

**SDS concentration measurement (Two- phase mixed indicator titration)**

6 ml of permeate sample was taken and diluted to 25ml by deionized water. 9-10ml chloroform was poured into each beaker in the fume cupboard. 0.4 ml Dimidium bromide/Disulphine blue was added to the solution as indicator while stirring vigorously with a magnetic stirrer; 0.004M Hyamine 1622, acting as a titrant, was slowly added to the solution by a 20 μl pipette until the bottom phase (chloroform phase) turns from pink to blue. The permeate concentration of SDS can be calculated from the volume and concentration of Hyamine 1622 used. The reproducibility of this titration is ± 3%.

$$C_{\text{SDS original}} = \frac{C_{\text{Hyamine}} \times V_{\text{Hyamine}}}{V_{\text{original}}} = \frac{0.004\text{M} \times V_{\text{Hyamine}}}{6\text{ml}}$$

**pH measurement (pH meter)**

The pHs of solutions were measured by a Jenway pH meter.

**Surface tension measurement (Kruss K10T maximum pull digital tensiometer)**

The surface tension (ST) measurement is widely used to determine the ST at the air/liquid interface. The changes of ST provide an indirect insight into the state of the interaction between polymer and surfactant in the bulk. This will lead to the optimal dosage ratio between polymer and surfactant at different temperature. This dosage ratio can be confirmed by the changing of heavy metal removal efficiency with different ratio. Moreover, a plot of the ST can also yield information about CMC and CAC, which allows the effect of the addition of surfactant and polymer to be studied and compared. Finally, it can be used to check the purity of SDS.

The surface tension measurements were performed by a Kruss K10T maximum pull digital tensiometer using the du Nouy ring method with a platinum-iridium ring. The ring was rinsed in UHQ water and then flame dried until no flame colour change was observed with a Bunsen burner before each measurement. Each measurement was repeated until equilibrium was established, and the variation in the ST was less than 0.2 mN/m between the latest three measurements.

**Process Overview - not in accordance with the invention**

Figure 1 provides a schematic flow diagram of the whole process to remove single component metal ions. The dotted lines present the recycle loop, and the dashed lines present the first treatment cycle. The flow diagram provides

an illustration of steps 1 to 5 discussed at the start of the Examples section.

**Discussion**

As discussed above, the polymer comprising ionisable groups and the ionic surfactant can be recycled for further use in steps 1 to 4 discussed in the Examples section. Figure 2 shows the efficiency of the metal ion removal over 4 cycles of steps 1 to 4. The removal efficiency decreased slightly after the first cycle of treatment. Between the second and third cycle there was no addition of 10 % of the surfactant into the system. This resulted in a decrease in the removal efficiency in the third cycle as the polymer and surfactant dosage ratio was not at its optimum. Just before the fourth cycle, 10% of surfactant was added, so the removal efficiency remained at approximately 90%. In conclusion, the recovered polymer and surfactant are capable of removing metal ions to a high level.

A salt is formed during the repeated cycles of the process. The inventors therefore looked at the effect of salt forming on the efficiency of metal ion removal. Figure 3 shows the salt forming in the recycle system did not significantly decrease the zinc ions removal efficiency. From the Figure 1, the salt in the system after the first cycle was about 3 mM, for which the efficiency decrease will be approx. 0.5%.

The flux at different stages of the process was also assessed. Figure 4 suggests the treatment flux through a coarse filter was close to the water flux and remained constant after one hour. This proves the fouling did not happen in the two hour filtration period. From Figure 3, the removal efficiency through coarse filtration was comparable to the removal efficiency through microfiltration. Coarse filtration was therefore selected as the filtration method because it has a higher flux. Indeed, due to the fact that precipitates can be observed by naked eye, most of them can be removed via sedimentation.

The recovery efficiency of: (i) the zinc, and (ii) PEI and SDS, was measured for different concentration factors, with the retention time held constant. The results are shown in Figure 5. Further, the recovery efficiency of: (i) the zinc, and (ii) PEI and SDS, was also measured over a range of pH values at a volume reduction factor of 12. The results are shown in Figure 6.

From Figures 5 and 6, it can be seen that the recovery efficiency decreased with an increase in the concentration factor and with more moderate pH values. In addition, the retention time is another factor that affects the recovery efficiency. Presumably, with the increase of retention time, the recovery efficiency will increase. It was measured that 97% of the zinc was recovered at 50 concentration factor for about 2 hours retention time for the acid solution having a pH of 1.

**Removal of Multiple Charged Species**

Thus far the removal of a single metal ion has been demonstrated. It is also possible to use the process of the invention to remove multiple charged species from a single solution. Figure 7 (not in accordance with the invention) presents a flow diagram of the whole process for sequentially removal of multi-components metal ions, exemplifying the removal of zinc and magnesium as $ZnSO_4$ and $MgSO_4$.

The competitive adsorption between 0.3 mM (48 ppm) $ZnSO_4$ and different $MgSO_4$ concentrations at optimal dosage for zinc removal (80 ppm PEI and 230 ppm SDS) was investigated, with the results provided in Figure 8. The results in Figure suggest that there is a degree of selectivity between metal ions. This selectivity will lead to the recovery of a high purity metal ion or charged species in sequence for further use.

**Example of the invention**

**The Mirror-Image System**

The examples discussed above have looked at the removal of a positively charged species. As will be apparent from the description, the process of the invention is used to remove negatively charged species. The removal of negatively charged species, referred to as the mirror-image system, was investigated.

Specifically, the removal of dichromate, using $C_{14}$TAB/MTAB and PSS/PAA was investigated. Figure 9 illustrates how the efficiency of dichromate removal changes with increasing $C_{14}$TAB/MTAB concentration at 10.4 mg Cr(VI) and 300 ppm PSS. This study of the mirror system demonstrates that electrostatic interactions dominated in the removal process of metal ions. The negatively charged dichromate can therefore be removed by an anionic polymer (PSS or PAA) and a cationic surfactant ($C_{14}$TAB/MTAB).

**Further Investigation of the Removal Concept for Cationic Polymer - Polymer-Surfactant Aggregates - not in accordance with the invention**

The efficiency of zinc removal was mapped against measurements of the surface tension. Figure 10 shows the zinc removal efficiency via 30 kDa ultrafiltration, mapped against surface tension for 20 ppm 25K branched PEI and 7 mg/l zinc.

It is thought that the metal ion removal is facilitated by the formation of polymer-surfactant aggregates (PSAs) at low concentration under the assistance of ultrafiltration, in this case PSAs adsorbing the metal ions from the dilute solution. This phenomenon has been confirmed by correlating the removal efficiency with the surface tension. The sample preparation follows the protocol described in Material and Methods, and all the solution were filtered by ultrafiltration. The surface tension measurement is a commonly-used approach to reveal the interaction mechanisms between polymer and surfactant. The results are shown in Figure 10, and are discussed below. Reference to points **a, b, c** and **d** are references to points **a, b, c** and **d** on Figure 10.

Initially, the PEI forms complexes with metal ions via chelation, so there is a roughly 65% zinc rejection via UF. With increasing SDS concentration from zero to point **a,** the SDS binds to the PEI to form polymer surfactant surface complexes, which lowers the ST, until the PSAs form around point **a.** Thus the removal efficiency slowly increase from zero to the point **a.** The ST plateau from **a** to **b** is due to the saturation process of the bulk polymers; additional surfactant moves to the polymer chains, as the PSAs form. At the same time, the removal efficiency dramatically increases through the saturation process, since an increasing number of PSAs form in the bulk.

After the entire bulk polymer has been saturated, additional SDS associates with the surface polymer surfactant complexes and pulls them back into the bulk to form further PSAs. Therefore, a peak in ST arises at point **c** at which point most of the surface complexes have been dragged back. At this point **c,** the removal efficiency reaches its first peak, since the maximum amount of PSAs exists at this dosage ratio. At higher SDS concentrations, the additional SDS moves to the surface in primarily disassociated form, so that the ST values decrease again. The addition of SDS acts like the addition of extra electrolyte into the system, which weakens the inter-association between aggregates, so some of the small aggregates are able to pass through the UF membrane. Thus, a gentle decrease of removal efficiency is observed. After point **d,** at which the CMC is achieved, further additional SDS forms micelles. At this SDS concentration, a further significant increase of removal efficiency is caused by the formation of bulk solution micelles, which adsorb oppositely charged heavy metals. In essence, the heavy metal ion removal process has reverted to that of MEUF and PEUF, but at a surfactant or polymer concentration almost 10 times higher than that required for heavy metal ion removal associated with the formation of PSAs.

**Investigation of pH Effects on the Removal of Cr(III) and Zn(II) - not in accordance with the invention**

The removal efficiency of Cr(III) and Zn(II) were found to vary with pH, as demonstrated by the data in Figures 11 and 12 respectively.

The chromium removal efficiency by a direct hydroxide precipitation method was very effective at the high pH range (pH 10-12) (Figure 11). Although the PDAC/SDS system was about 3% less efficient at the high pH range, it performed effectively over most of the pH range (pH 3-12). It is important to note that the polymer/surfactant system worked considerably better than the chemical precipitation method at low pH; the hydroxide precipitation became ineffective below pH 7. In general, the predominant mechanism of chromium removal is different for low and high pH ranges. At low pH, the removal is due to adsorption to the PSAs. At high pH, it is mainly due to the precipitation of chromium hydroxide.

In real world water treatment scenarios, one may have to deal with wastewaters of various pH ranges. Indeed, for heavy metal contaminated water, it is more likely to be in the acidic range. Thus, the proposed polymer surfactant complexation and flocculation process has a much wider application range than the chemical precipitation method (which might otherwise be considered a comparable and competitive technique).

Comparing with figure 11, the zinc removal efficiency when the pH decreased below 5, which shows less tolerance for acid conditions. This suggests that an important factor in the process of the invention is the electrostatic interaction between the PSA and the charged species. In this particular example, the trivalent chromium ions have stronger electrostatic binding ability than divalent zinc ions.

**Investigation of Zinc and Chromium Removal and Optimisation for PDAC via ultrafiltration - not in accordance with the invention**

The polymer-surfactant complexation and flocculation system and the pure surfactant system were tested to confirm that the polymer surfactant aggregates (PSAs) are more effective at removing dilute heavy metal ions than the MEUF process, and to demonstrate that the removal is mainly caused by the PSAs rather than the surfactant multi-layers formed in the vicinity of the membrane (Figure 13). For these purposes, the estimated optimal polymer-surfactant dosage ratio from the ST results (Figure 21) and the optimization test (Figure 15) were used in the presence of the same charge equivalent concentration of SDS and salt (NaCl). The latter was to simulate the addition of intrinsic counter ions when adding PDAC. All solutions were filtered by 30 kDa cellulose membranes. In fact, this ultrafiltration step can be omitted due to the formation of flocs via intra-molecular interactions.

In Figure 13, the Zn(II) removal efficiency for the PSAs is almost four times higher than for the same SDS and electrolyte concentrations without polymer at low zinc concentration, which shows the PSAs were more effective at absorbing Zn(II), especially in dilute solutions. The gentle decrease of efficiency from low zinc concentrations (<0.5 mM) may well suggest the existence of a dynamic binding equilibrium in the binding processes between PSAs and Zn(II) at the low zinc concentrations. A steep decline was observed above 0.5 mM Zn(II), which suggests most of the PSAs had been saturated by Zn(II). By contrast, the salt-only case shows the low removal efficiency much more independent of zinc concentration.

At dilute $Cr(NO_3)_3$ concentrations (<0.4 mM), the Cr(III) removal efficiency of the SDS/PDAC system is higher than the SDS/NaCl system (Figure 14). This suggests that the adsorption ability and capacity of PSAs is stronger than that of micelles at the low chromium concentration. The slightly increasing removal efficiency of the SDS/NaCl system at low concentration is caused by the significantly decreased CMC with increasing $Cr(NO_3)_3$ concentration. This is supported by the results from surface tension measurements (Table 3 and Figure 22f). For example, the CMC of SDS in the presence of 0.1 mM $Cr(NO_3)_3$ was about 3.1mM (i.e. the micelles existed in the bulk at 0.1 mM $Cr(NO_3)_3$ in the tests.) Thus, with increasing $Cr(NO_3)_3$ concentration, the percentage of SDS forming micelles is increasing, which rises the adsorption capacity of Cr(III).

Above 0.4 mM $Cr(NO_3)_3$ the linear decline of efficiencies is due to the saturation of PSAs and micelles. The important finding is that the removal efficiency of Cr(III) is slightly lower in the presence of PDAC. This is caused by the neutralization of PDAC by a small amount of SDS, which would otherwise form micelles to adsorb Cr(III). This implies that the efficiency of using SDS in the presence of PDAC is lower than in the presence of pure SDS micelles, when the SDS concentration is a few times higher than the CMC.

Further optimisation experiments have been performed close to the best optimal dosage ratio between SDS and PDAC. The highest zinc removal efficiency is nearly 80% at 75 ppm PDAC and 3.2 mM SDS (Figure 15).

**Comparisons with MEUF and PEUF - not in accordance with the invention**

Figure 16 and 17 provide a comparison between the polymer-surfactant microfiltration and MEUF/PEUF. With a small addition of polymer/surfactant to a MEUF/PEUF process, the removal performance has been significantly enhanced. It is found that the membrane pore size and the intermolecular aggregates size are important in influencing the removal efficiency. Hence, one option to reduce the requirement of a fine membrane pore size without affecting the removal efficiency is to enlarge the intermolecular aggregates size. In order to enlarge the intermolecular aggregates size, more PEI, which acts as flocculant, was added into the solution. The increasing amount of PEI in the bulk will increase the number of PSAs which can form more and larger flocculated particles due to the intermolecular associations. The following section reveals the relation among removal efficiency and polymer and surfactant concentrations.

**Investigation of upgrading the filtration method from UF to MF - not in accordance with the invention**

Figures 18-20 show how the increasing polymer concentrations affect the zinc removal efficiency via MF. The latter has a close relationship with the polymer concentrations due to the change of intermolecular aggregates size. Since PEI acts as a flocculant, increasing polymer concentration leads to a higher removal efficiency. It is worthy of note that when the PEI concentration lay below 40 ppm, the removal efficiency when using MF was only about 25%, while 85% removal was achieved when using a UF membrane. It is mainly caused by the fact that most of the intermolecular aggregates have a size between 30 kDa (about 0.015 $\mu$m) and 0.22 $\mu$m. When the PEI concentration reaches 60 ppm (Figure 17), satisfactory zinc removal efficiency for the MF membrane is achieved (~75%). With further increase in PEI concentration to 80 ppm (Figure 20), the removal efficiency of MF was almost the same as UF at 90%; this indicates most of the size of intermolecular aggregates exceeds 0.22 $\mu$m in size.

The advantages of swapping the membrane from UF to MF are a lower membrane capital cost, a lower applied trans-membrane pressure, and a higher flux. First of all, the cost per unit area for a 30 kDa UF membrane is about 15 times higher than for a 0.22 $\mu$m MF filter. The lower trans-membrane pressure arises because of the use of a larger membrane pore size, which offers a much lower flow resistance. The larger pore size also leads to a higher flux, which reduces the required filtration time. This is advantageous in real-world wastewater treatment plants.

With increasing PEI and zinc sulphate concentrations, the overall ST pattern was similar for Figure 10 and Figure 21. At low SDS concentrations (< 0.2 mM), the removal efficiency remains at roughly 25% since most of the PEI chelated zinc passed through the microfiltration membrane (Figure 21). After the formation of PSAs at higher SDS

concentration (0.5 mM - 2 mM), the rejection dramatically increases with a greater amount of PSAs in the bulk, which inter-molecularly associate with each other to form larger intermolecular aggregates. The diameter of those aggregates was large enough to be rejected by a microfiltration membrane. The highest rejection is obtained around the peak of the ST plot which represents the maximum amount of PSAs present in the bulk. It suggests that most of the PSAs were flocculated / precipitated and then rejected via a 0.22 μm membrane. After the peak, the zinc rejection drop significantly due to the negative repulsion between anionic surfactant groups attached on the polymer chains; this inhibits the formation of larger intermolecular aggregates. The zinc loaded PSAs, therefore, passed through the membrane. In conclusion, the replacement of ultrafiltration with microfiltration is possible when the dosage between polymer and surfactant is in an optimal ratio range which allows the formation of intermolecular aggregates.

**Fundamental Investigation of Interaction Between Polymer, Surfactant and Heavy Metals - not in accordance with the invention**

**Surface tension measurements**

To understand the association mechanisms of PDAC, SDS and heavy metal ions, and heavy metal ion effects on the surface and bulk properties, different amounts of PDAC, SDS and $ZnSO_4$ were mixed and surface tension measurements performed. The results show that, overall, the pattern of ST did not change by adding a small amount of $ZnSO_4$, especially the SDS concentration at the peak (Figure 22). Aggregation number, however, increases significantly with increasing ionic strength, as shown using small angle neutron scattering.

***(a) Peak***

The height of the peak decreases with increasing PDAC concentration in the absence of NaCl (Figure 22a). This suggests that there was an equilibrium existing between the surface polymer-surfactant complexes and bulk PSAs. The higher bulk concentration of PDAC gives rise to a higher bulk concentration of PSAs, so a greater amount of surface active complexes are present at the air-water interface due to the surface complexes - bulk aggregates equilibrium. This results in the decrease of peak height.

By adding divalent zinc ions, the repulsions between the anionic groups of surfactant are reduced. This repulsion reduction allows more SDS to move to the air-water interface, which lowered the ST value (peak height). Thus, the SDS concentration at the peak is lower at the higher concentration of $ZnSO_4$. In addition, the effects of addition of $ZnSO_4$ on the peak SDS concentration are significantly less with increasing $ZnSO_4$ concentration (Figure 22d). This implies that the increase of surface capacity to $DS^-$ ions by adding $ZnSO_4$ has a limited effect, and this capacity is easily saturated by adding a small amount of $ZnSO_4$. For the removal process, these results suggest that the higher concentration of heavy metal ions slightly decreases the SDS concentration requirement to reach the peak (i.e. the free (non-functional) SDS concentration is lowered).

***(b) Surface tension value***

Below CAC, the rate of ST decline decreases with increasing SDS concentration at a relatively large amount of electrolytes (Figure 22c). However, the rate of ST decline increases with increasing SDS concentration at relatively small amount of electrolytes (Figure 22a & 22b). This suggests that a relatively large amount of electrolytes promotes the formation of polymer surfactant complexes at the interface, so the ST declines quicker at very dilute SDS concentration. However, this presence does not affect the surface capacity of the complexes. Hence the ST values at the plateau from CAC to peak are the same.

Below CMC, the ST value of pure SDS was noticeably higher than that of PDAC with SDS (Figure 22a). This reveals that not all complexes left the interface even when the CMC was reached. In addition, the ST values are lower for higher concentrations of $ZnSO_4$ (Figure 22d & 22e). It is caused by the increase of concentration of $ZnSO_4$ enhancing the surface activity of polymer-surfactant complexes and screening in general. However, $ZnSO_4$ has little effect on the ST above the CMC, because Zn(II) has a strong binding affinity with micelles in the bulk.

***(c) Precipitation***

The precipitation zone occurs around the CAC in the absence of NaCl and in the presence of a small amount of $ZnSO_4$. The reason for precipitation is that the PDACs have been neutralised by the SDS and become hydrophobically self-associated in solution, forming a turbid dispersion. The repulsion between PSAs are minimised when these aggregates are neutralised, so they intra-molecularly associate with each other which leads to precipitation. It only occurs when a certain PDAC concentration threshold is reached (>100 ppm) (Figure 22a). Therefore, a dosage of PDAC less

than 100 ppm for heavy metal removal is not recommended, as there is little flocculation occuring below that dosage. The advantageous goals of self-flocculation and sedimentation are then diffcult to achieve in a water treatment process.

It has been found that addition of larger amounts of electrolytes inhibited the phase separation. With increasing amounts of electrolytes, the strength of the attractive interactions between polymer and surfactant are weakened. This leads to a weak net repulsion between polymer chains, which are the primary force keeping PSAs stable in a colloidal sense; hence the turbidity range is narrower (Figure 22d).

***(d) Effects of addition of $ZnSO_4$ (a dip around the CMC)***

A dip is observed in the ST plot for $ZnSO_4$ with varying SDS concentrations, and the CMC decreases and the depth of dip is deeper with increasing $ZnSO_4$ concentrations (Figure 22f). An explanation for this is that the charge screening effects are stronger with increasing $ZnSO_4$ concentration. The Zn(II) may increase the surface capacity of monomers through re-conformation or compaction of surface monomers, mainly under charge screening, and monomer chains associate at the surface due to hydrophobic forces. This phenomenon further lowers the ST value. After the minimum point of ST (just below the CMC), the Zn(II) becomes energetically more favoured to associate with micelles than monomers at the interface. Hence, at a constant Zn(II) concentration, the surface Zn(II) go into bulk to bind to the increasing amount of newly forming micelles, which form at a lower SDS concentration than in the absence of Zn(II) due to charge screening at the micellar surface. At the interface, decreasing amounts of Zn(II) shift the conformation of monomers to the conformation of pure SDS solution which is more loosely compacted. Thus, the ST after the minimum point increases. The higher the concentration of Zn(II) is, the more Zn(II) could potentially be present at the interface, which could potentially be removed into the bulk after the CMC is reached. Thus the dip is deeper with increasing $ZnSO_4$ concentration. The final ST plateau values are independent of $ZnSO_4$ concentration. This reveals that there is little Zn(II) present at the interface at high SDS concentrations (a few times CMC).

It has been found that the dip of ST around the CMC is less obvious in the presence of PDAC at 0.1 mM $ZnSO_4$ (Figure 22b). At 0.4 mM $ZnSO_4$, however, the dip is similar in the absence and in the presence of PDAC (Figure 22c). This suggests that the Zn(II) is more energetically favoured to associate with bulk PSAs than the monomers at the interface. When a limited amount of $ZnSO_4$ is present in the solution, they preferably associate with the bulk PSAs. Thus, there are a few zinc ions present at the interface, and even fewer Zn(II) ions could leave the surface to go to the bulk. Therefore, the dip is much less clear in the presence of PDAC with a limited amount of $ZnSO_4$ (Figure 22e). If the added $ZnSO_4$ is slightly higher than the capacity, the extent of reduction of the depth of the dip decreases with the degree of difference between the amount of added $ZnSO_4$ and the adsorption capacity of PSAs and existing micelles (Figure 22b & 22d). When a large amount of $ZnSO_4$ is added which is over the adsorption capacity of PSAs plus existing micelles, the ions go onto the interface after these aggregates and micelles are saturated (Figure 22c). Then it becomes a very similar environment in the absence of PDAC system. Therefore, the dip was similar in the absence and the presence of PDAC at an excess amount of $ZnSO_4$. The reduction of the depth of the dip depends on the adsorption capacity of aggregates and micelles, and the amount of added multivalent ions, like $ZnSO_4$. In conclusion, this may be used as a tool to roughly determine the maximum adsorption capacity of PSAs. The surface tension for PEI, SDS and zinc ions also has been investigated. Since the results are similar with the PDAC cases, they are not shown in the report.

Table 3: Summary of CMC, CAC, peak and peak height at different PDAC and $ZnSO_4$ concentrations.

| Solution substance(s) | CMC (±0.2 mM) | CAC (±0.2 mM) | Peak (±0.2 mM) | Peak height (± 1 mN/m) | Turbidity |
|---|---|---|---|---|---|
| SDS | 7.96 | N/A | N/A | N/A | Clear |
| 0.1mM $ZnSO_4$+SDS | 6.57 | N/A | N/A | N/A | Clear |
| 0.4mM $ZnSO_4$+SDS | 4.44 | N/A | N/A | N/A | Clear |
| 0.1mM $Cr(NO_3)_3$+SDS | 3.06 | N/A | N/A | N/A | Clear |
| 75ppm PDAC+SDS | 8.54 | 0.58 | 1.30 | 54.33 | High turbidity, no precipitation |
| 100ppm PDAC+SDS | 8.64 | 0.62 | 1.58 | 48.63 | High turbidity, no precipitation |
| 150ppm PDAC+SDS | 9.30 | 0.60 | 1.77 | 45.80 | Precipitation |
| 75ppm PDAC+0.1mM $ZnSO_4$+SDS | 6.88 | 0.51 | 0.86 | 42.93 | Precipitation |

(continued)

| | | | | | |
|---|---|---|---|---|---|
| 150ppm PDAC+0.1mM $ZnSO_4$+SDS | 7.85 | 0.53 | 1.51 | 42.50 | Precipitation |
| 75ppm PDAC+0.4mM $ZnSO_4$+SDS | 5.00 | 0.16 | 0.79 | 42.63 | High turbidity, no precipitation |

**Conclusions**

The concept of mixing a polymer comprising ionisable groups, and an ionic surfactant to sequentially remove a charged species such as metal ions from dilute aqueous solution has been developed. Some promising surface tension results have been generated that further elucidate the interactions between polymer and surfactant, and the effects of adding metal ions on the interactions. By comparing with metal ion removal efficiency results (Figure 10 and 21), the interaction mechanisms correspond to the changes in removal efficiency via UF and MF. Moreover, from the investigations in various pH ranges (Figure 11 and 12), the polymer-surfactant aggregates demonstrated a wide working pH range (pH>3) for trivalent ions and >5 for divalent ions). In addition, it was found that mixing the surfactant and polymer together can achieve significantly higher removal efficiency than the surfactant or polymer only system at the same dosage (Figure 16 and 17). Moreover, 90-99% zinc removal has been obtained at 80 ppm PEI for all of ultra- (UF), micro- (MF), and coarse-filtration (CF). This swapping of the membrane filtration method from UF to MF and then to CF leads to lower membrane capital cost, low applied trans-membrane pressure, and higher flux. In addition, the recovery results (Figure 5 and 6) have shown that it is possible to strip out the metal ions from the separated aggregates in a concentrated form via acidification, and recycle the polymer and surfactant back into the process via alkalinisation. It therefore has shown great promise for the inexpensive and concentrated recovery and recycle of dilute metal ions from industrial effluents, by using widely available chemicals in small amount and with minimum energy and equipment.

**EXAMPLE 2**

**Section 1 - not in accordance with the invention: Whole cation treatment process (removal, recovery and recycle)**

Zn(II), Cd(II), Cr(III) and Rh(III) have been studied as examples of positively charged species. Results for Zn(II) treatment are included in Example 1 and are not therefore mentioned in this Example.

**Optimum dosages for removing metal ions using PSAs**

Surface tension and electrical conductivity measurements have revealed an estimated optimum dosage between PEI and SDS. The removal and PEI-SDS usage efficiencies are directly measured to identify the optimum dosage between PEI, SDS and Zn(II) for the later experiments. At 80 ppm PEI and 19 ppm Zn(II), with increasing SDS concentration from 0.7 mM to ImM, the removal efficiency increases, but the PEI-SDS usage efficiency decreases. The reason is that part of the increased amount of SDS are formed more PSAs that can remove the metal ions, and the rest of SDS reports in the filtrate. The 80 ppm PEI and 0.8 mM SDS is selected as the optimum dosage for 19 ppm Zn(II) (0.3 mM), considering the balance between the removal and removal agent usage efficiencies. If the leakage of removal agent is relatively high, their concentrations in the filtrate will be higher, which can be regarded as contaminants. In this case, the process uses two contaminants (PEI and SDS) to replace another contaminant, such as Zn(II). The polymer-surfactant usage efficiency, therefore, is as important as the removal efficiency.

The optimum dosages for each metal ions are also studied and listed in Table 4. From all three individual optimum dosages for metal ions, 20 ppm PEI are needed to effectively remove each 0.1 mM metal ion, and the SDS concentration is about the valence of the metal ion times its concentration, and then plus 0.1-0.3 mM.

Table 4: Optimum dosages for removing metal ions using PSAs

| Metal ion | Ion concentration (mM) | PEI (ppm) | SDS (mM) | Removal efficiency % |
|---|---|---|---|---|
| **Zn(II)** | 0.3 | 80 | 0.8 | 98+ |
| **Cr(III)** | 0.2 | 60 | 0.7 | 99+ |
| **Cd(II)** | 0.1 | 40 | 0.5 | 99+ |
| **Rh(III)** | 0.2 | 60 | 0.7 | 99+ |

**Organics have little effect on the removal of metal ions**

With regard to the effect of organics, the metal ion removal efficiencies remain the same with the addition of acetone, phenol and ethanol up to 100 mM (Figure 23).

The addition of aniline, however, decreases the metal removal efficiency after the concentration above 20 mM. As a weak base containing an amino group, it can precipitate the Cd(II) to some extent, but it also may disrupt the formation of PSAs with the increase of pH. The disruption may due to the fact that some of the SDS tails bind with hydrolysed aniline via hydrophobic and electrostatic forces. Therefore, with addition of the weak base, the removal mechanism is slowly shifted from binding with PSAs to precipitation. At a higher aniline concentration (>100 mM), the removal may be dominated by the precipitation. These results suggest that the process is not affected by some inorganic and organic components at moderate concentrations, and gives confidence in the robustness of applying the PSAs to real world industrial effluents.

**pH effects on the Rh(III) removal at optimum dosage of PEI and SDS**

The polymer-surfactant process works very effectively around pH of 5-9. All the metal ions tested had a very similar trend in the removal efficiency at various pH values. This suggest that the binding ability of the metal ions are similar. Figure 24 shows Rh(III) (0.2 mM) removal efficiency changes at different pH values under 60 ppm PEI and 0.7 mM SDS. Rh(III) is completely removed at a pH of 7 and above. The reason is that the charge density for the Rh(III) is relatively small compared with the other metal ions as it is a relatively large atom. Thus, the proposed PSA process is suitable to treat a range of industrial effluents, the tolerance to extreme pH environment depends on the charged density of targeted metal ion.

**Kinetics of the removal and flocculation of the cation treatment process**

Apart from effectively treating dilute metal ion solutions to a ppb level, this PSA process is largely completed within 20 min (Figure 25). A series of time studies are conducted to study the kinetics of the process. Within 20 min, 99% of each metal ion is adsorbed by the PSAs. The total carbon in the filtrate indicates the degree of flocculation between polymer and surfactant, since they are the only two carbon sources in this system. Thus, the decrease of total carbon suggests the flocculation process continued up to one hour of stirring at 200 rpm, but it is calculated that 85-95% of the PEI and SDS formed flocs within 20 min. This corresponds with the attainment of maximum metal removal efficiency. The kinetics of the removal and flocculation of the cation treatment process are quick.

**Effects of the order of acidification and basification and the pH**

Figures 26-28 demonstrate the effects of the order of acidification and basification and its pH values on the recovery of metal ions and polymer-surfactant aggregates in relatively pure forms. The orders of addition of acid and base solutions were investigated to develop the recovery procedure and further understand the interactions between PEI, SDS and metal ions. High metal ion and PEI-SDS recovery efficiencies are found when 0.05 M $H_2SO_4$ is added first before 0.1 M NaOH. The results in figure 26 show that the Zn(II) recovery efficiency increases with the decrease of pH values, because the kinetics of displacing the Zn(II) that are bound to the PSAs are promoted with increasing concentration of hydrogen ions. Importantly, little PEI and SDS in Zn(II) loaded PSAs is recovered in the acid solution, and less than 15% of them is recovered even at a pH of 13. The reasons are probably that at an acidic condition, the PEI is fully protonated as a cationic polymer, which strengthens the electrostatic binding with SDS. At a basic condition, the bridging effects from divalent zinc ions inhibit the disassociation of PSAs, because the zinc ions may bind to two aggregates on different PSAs that can strengthen the associations between PSAs. Thus, the base solution should be added after the acidification; the latter is to displace the Zn(II) from flocs and mitigate the bridging effects. The PEI-SDS recovery efficiency consequently increases to a high level with the increase of pH values (Figure 27), because now a greater amount of hydroxide ions can enhance the kinetics of displacing SDS from PEI chains. To further confirm the bridging theory, various pH values of acid solutions are used to displace the Zn(II) to varying extents to obtain flocs containing different amounts of bound Zn(II) (Figure 28). After acidification, the flocs are treated with pH 13 NaOH solutions. The results in Figure 28 suggest that less PEI-SDS is regenerated in the presence of a higher amount of Zn(II) in the flocs. In conclusion, the pHs of 1 and 13 solutions are used in sequence to recover more than 95% of the metal ions and the PEI-SDS respectively. It is a win-win situation as higher recovery of zinc allows higher recycle of PEI-SDS.

**Variable effects on recovery efficiency**

Figure 29 shows the recovery efficiencies of Zn(II) at pH 1 and that of PEI-SDS at a pH of 13 for different periods

of residence time at concentration factors of 10 and 40. To show the quick kinetics of recovery of metal ions in the cation treatment process. The effects of concentration factor, residence time, salinity and number of cycles on the metal ion and PEI-SDS recovery efficiencies were also investigated to determine the optimum operational environment and robustness of the recovery and recycle stages. Apart from the pH effects on the recovery, the concentration factor also plays a key role. The concentration factor is the ratio of the total volume of the treated effluent to the volume of the added acid or base solution:

$$\text{Concentration factor} = \frac{\text{Volume of treated effluent (ml)}}{\text{Voulume of added acid or base solution (ml)}}$$

With increase of concentration factors, the PEI, SDS and Zn(II) recovery efficiencies decrease. The decrease at a higher concentration factor may be primarily caused by the recovered $ZnSO_4$ in the acidic solution approaches to the saturation at the room temperature, leading to the equilibrium of the recovery process slows down dramatically. Thus, at the same residence time, the recovery efficiency decreases with increasing concentration factor (i.e. slow kinetics/dissolution rate). To further understand the kinetics, in Figure 29, the correlations between recovery efficiency and residence time suggest that the kinetics is fast at the first 5 min, and slows down afterward, particularly after 15 min. The rate of increase recovery efficiencies for the concentration factor of 10 is quicker than that of 40, much clearer for the removal agent regeneration in the first 5 min (Figure 29). This suggests that the increasing concentration factor indeed reduces the dissolution rate/kinetics of the recovery process.

**Recovered PEI and SDS also effectively remove metal ions**

Results show that there is no deterioration in the removal ability of recovered PEI and SDS. Figure 30 shows Cd(II) removal and PEI-SDS usage efficiencies in 6 cycles using regenerated PEI and SDS.

**Section 2: Whole anion treatment process**

Figure 31 shows a flow chart of the whole anion treatment process. $Fe(CN)_6^{3-}$ and $CrO_4^{2-}$ have been studied as the examples of negatively charged species.

**Optimisation of dosages for MTAB (cationic surfactant) with PSS and PAA (anionic polymers) in the removal of metallic anions**

PSS or PAA are mixed individually with MTAB to remove anions from dilute solutions. In Figure 32, it may seem that the addition of PSS is unnecessary, because $Fe(CN)_6^{3-}$ can act as a flocculant to precipitate with MTAB as $(MTA+)_3Fe(CN)_6^{3-}$, and lead to a complete removal of itself in the absence of PSS; however, nearly 70% of the added MTAB passes through coarse filtration, and reports in the filtrate. Without the addition of PSS, the process only replaces one unwanted species ($Fe(CN)_6^{3-}$) with another species (MTAB) in the solution, which is not ideal for the quality of treated effluents and the polymer surfactant usage efficiency.

With increasing amounts of PSS in the solution, the $Fe(CN)_6^{3-}$ removal efficiencies remain at a high level, but more importantly the polymer surfactant usage efficiency increases from 30% to around 95% at 300 ppm PSS. The increase of the efficiency is due to the formation of PSAs by PSS and MTAB. When both the removal and usage efficiencies reach the highest value, the polymer and surfactant dosage is at its optimum ratio. Upon further increasing the PSS concentration, the amount of surfactant is now not enough to saturate all the PSS to form PSAs. Thus some of the surfactant monomers are moved from PSAs, and bound to polymer chains in the form of polymer-surfactant complexes rather than in aggregates. The polymer-surfactant complex is not as effective as the PSA in binding $Fe(CN)_6^{3-}$ ions, because its overall charge is almost neutralised by monomers. Therefore, the removal efficiency of $Fe(CN)_6^{3-}$ decreases rapidly.

With regard to the PAA-MTAB system, the removal performance of $Fe(CN)_6^{3-}$ is broadly similar to that for the PSS-MTAB system (Figure 33). The major difference is that the charge percentage of PAA strongly depends on the pH of the solution, which can be used to manipulate the charge density and the interactions between PAA and MTAB. This manipulation may be the key for recycling the polymer and surfactant. In Figure 33, 0.5 mM and 1 mM MTAB are tested with varying amounts of PAA without adjusting pH. Without any addition of PAA, at 0.5 mM MTAB, almost 100% of $Fe(CN)_6^{3-}$ and 70% of MTAB are retained by the filter in the form of the $Fe(CN)_6^{3-}$-MTAB precipitates. In other words, 30% of MTAB passes into the filtrate as an unwanted species Interestingly, with increasing PAA concentration to 150 ppm, the removal efficiency decreases from 100% to 70%, because some of the MTAB that was used to form the $Fe(CN)_6^{3-}$-MTAB precipitates is now bound with the PAA. Thus, the remaining MTAB monomers are insufficient to from

precipitates with all of the $Fe(CN)_6^{3-}$.

At a higher MTAB concentration (ImM), the decrease in the initial removal efficiency still occurs for the same reason as that in the 0.5 mM MTAB curve. However, upon further increase of the PAA concentration, the removal efficiency returns to above 99%, and the main mechanism is probably shifted from precipitating with the MTAB to electrostatic binding with the PSAs. The polymer surfactant usage efficiency gradually increases with the increase of PAA concentration until 350 ppm; after that, the PAA-MTAB ratio is not optimal for the formation of PSAs to bind the anions. The ratio seems rather high in terms of the PAA usage, because the PAA is not fully dissociated or charged in the original solution (~ a pH of 4) without adjusting the pH, and only the charged segments in PAA can electrostatically interact with MTAB. Thus, increasing the charge percentage of PAA by adjusting the pH is a way to reduce the PAA usage.

$CrO_4^{2-}$ is also removed in the PAA-MTAB system. The charge density of the chromate group is lower than that of the $Fe(CN)_6^{3-}$ group, which results in a relatively weak binding strength to MTAB. For this reason, without increasing the charge percentage of PAA, only 5% of the 0.2mM chromate is removed at the optimum dosage which applies for removing 0.1 mM $Fe(CN)_6^{3-}$ (350 ppm PAA and 1.5 mM MTAB in Figure 33). To increase the charge percentage of the PAA, the pH of the original solution is increased from 4 to 5.3 to disassociate PAA above 90%, as the pKa of PAA is 4.2. This latter value means that 50% of PAA is disassociated at a pH of 4.2, and 90% of PAA at a pH of 5.2. When most of the PAA is negatively charged, the highest chromate removal efficiency increases from 5% to about 80% using only 100 ppm PAA (see Figure 34). Considering both the removal and usage efficiencies, the optimum dosage for removing 0.2 mM chromate is 100 ppm PAA and 2.5 mM MTAB (Figure 34). After adjusting the pH, the PAA usage in the optimum dosage decreases from 350 ppm to 100 ppm, owing to the increase of charge percentage. The polymer surfactant usage efficiency is only 60%. The calculated results from MTAB titration and total carbon analysis in the filtrate suggest that almost all carbon leakage comes from the MTAB, which is about 1.2mM. This leakage at 100 ppm PAA is probably equivalent to the critical flocculation concentration (CFC); note the CFC is about 1.6 mM in the 200 ppm PAA curve via the conductivity measurements.

## Filtration method

Coarse filtration as a means of separating the flocs from solution is as effective as microfiltration and ultrafiltration; under certain cases, gravity settling is good enough. The treatment outcome for removing $Fe(CN)_6^{3-}$ is almost the same for the after coarse filtration and gravity settling (Figure 35). Thus, coarse filtration is a method of speeding up the gravity settling. The $Fe(CN)_6^{3-}$ ions have a high charge density. This allows them to be removed effectively as a targeted component, and enhance the speed and effectiveness of the flocculation of PSAs. This synergistic effect can obviate the need for a filtration, which further increases the speed of the process, and subsequently increases the treatment capacity.

Regarding the chromate removal, owing to the relatively low charge density, the synergistic effect in the chromate system is weak. The chromate flocculated solutions are filtered by both micro-filtration and coarse filtration, respectively. In Figure 36, the results show there is little difference in removal and usage efficiencies for the two filtration methods due to the highly effective self-flocculation of PSAs. Furthermore, a coarse filter is capable of separating the flocs and/or colloids from the solution with less filtration time than using microfiltration. In short, the use of either coarse filtration or gravity settling for rapid separation depends upon the charge density of anions.

## Removal limit and capacity

With regard to the $Fe(CN)_6^{3-}$-PAA-MTAB system, the removal efficiency of $Fe(CN)_6^{3-}$ starts to decrease as the $Fe(CN)_6^{3-}$ concentration rises slightly above 20mg/l, and gradually decreases with increasing $Fe(CN)_6^{3-}$ concentration (Figure 37). This suggests that the adsorption capacity of PSAs at the optimum dosage is limited. From the $Fe(CN)_6^{3-}$ concentration in the filtrate, the PSAs can effectively remove $Fe(CN)_6^{3-}$ down to concentration of 10 ppb.

With regard to the $K_2CrO_4$-PAA-MTAB system, the overall trend in the low $CrO_4^{2-}$ concentration range is rather different to that for $Fe(CN)_6^{3-}$ (Figure 38). The chromate removal efficiency at 100ppm PAA increases to above 90% with increasing chromate concentration until levelling off at 70mg/l. The subsequent level and then decreasing removal efficiency is due to the limited adsorption capacity of the PSAs. This capacity can limit the removal efficiency at a high concentration of metallic ions, but at a low concentration, the removal limits play an important role, which is defined as the minimum concentration of metallic ions can be treated down to in the filtrate. As chromate has a relatively low charge density, the removal limit of PSAs for chromate is relatively high (7 ppm) when compared with 10 ppb for the $Fe(CN)_6^{3-}$. Given the relatively high removal limit, at a low chromate feed concentration (< 70 mg/l), the available binding sites in PSAs are not fully saturated. Thus, before reaching the saturation point, the increase of removal efficiency is a result of the increasing amount of chromate that saturates the PSA with constant concentration in the filtrate at the removal limit.

In Figure 38, the removal efficiency for the 200ppm PAA system continues to increase until the chromate feed concentration reaches ~174 mg/l, which is about twice as high as the adsorption amount in the 100 ppm PAA system.

This is also supported by the adsorption isotherm. The results show that both 100ppm and 200ppm PAA systems level off at the same amount of chromate adsorption per gram of PSA (~140mg/g), and the 100 ppm PAA curve reaches the plateau first, which indicates the PSAs are saturated first. This is useful for determining the polymer and surfactant dosages to remove a certain amount of metallic anions, which are mainly based on the linear relationship between the polymer dosage and ion concentration, and the surfactant dosage should be just enough to saturate the polymer to form PSAs.

The effective pH range for chromate removal in the PAA-MTAB system is relatively narrow (pH of 4.5-6 see Figure 39). As a consequence of adding 100 ppm PAA, the natural pH of the original solution is approximately 4. To enhance the formation of PSAs, hydroxide ions are added to promote the disassociation of PAA, and subsequently increase the charge percentage of PAA. The added hydroxide ions, however, also compete with the chromate ion to bind with the PSAs. As chromate ions have a relatively low charge density, the changes in removal and polymer surfactant usage efficiencies are strongly related to the charge percentage of PAA. Increasing the pH to 6.2 means 99% of the PAA is theoretically disassociated. Therefore, the polymer surfactant usage efficiency reaches its highest value (~70%). Beyond this pH, further increasing the pH has little effect on the usage efficiency and formation of PSAs (Figure 39). Although the usage efficiency increases by 5% from pH 5.3 to 6.2, the removal efficiency is compromised by 20%. The reason is that the undesired competing effect of hydroxide on chromate binding is stronger than the desired disassociation of PAA, leading to displace the weakly bound chromate ions by the hydroxide ions. Therefore, upon further increasing the pH to 7 and beyond, less than 5% chromate is removed. In conclusion, due to the relatively low charge density of chromate ions, in order to achieve a high removal efficiency, a fine balance between the extra formation of PSAs and the lower removal of chromate must be made by adjusting the pH. In addition, pH adjustment can generate salt and increase the ionic strength, which may have some effects on the treatment outcome.

Figures 40-42 show that the pH, organic, inorganic and temperature effects on the removal efficiency of anions.

The effects of salinity and organic contaminants on the treatment performance were studied. Organic contaminants such as acetone and aniline have little effect on the process (Figure 40). However, a 20% decrease in the removal efficiency is caused by the addition of phenol and the solution did not return to a clear state from a turbid one even after prolonged agitation. The KCl is used as an example salt in the solution, and the concentration is studied up to 1M KCl which is relatively high for industrial effluents. In the $Fe(CN)_6^{3-}$ system, the polymer surfactant usage efficiency decreases rapidly above 50 mM KCl, but the removal efficiency only starts to drop around 100 mM KCl (Figure 41). The delayed decrease in the removal efficiency may be caused by the unbound surfactant monomers forming $Fe(CN)_6^{3-}$-MTAB precipitates at higher salinity. In the chromate system, the removal efficiency starts to decrease around 50 mM KCl, so the chromate system is less resistant to salinity effects than the $Fe(CN)_6^{3-}$ system. Interestingly, the usage efficiency increases slightly until 100mM, before decreasing with further addition of KCl. This initial increase is probably due to the decrease of the CFC in a solution of moderate ionic strength, which promotes the formation of PSAs at a lower surfactant concentration. In summary, the $Fe(CN)_6^{3-}$ possesses a higher charge density than the chromate, and this leads to a relatively high tolerance to the ionic strength environment. In conclusion, the PSA process works effectively for removing anions in the presence of moderate ionic strength and organic contaminants, and the tolerance of environment increase with the charge density of the targeted anion.

The performance and robustness of PSA treatment at different solution temperatures are studied. In Figure 42, with increasing temperature, both the chromate removal and usage efficiencies decrease. This is probably caused by the exothermic nature of the formation of PSAs and their binding with chromate ions, so that higher temperature moderately inhibits both. Most importantly, the performance of PSA treatment is still high at room temperature (25 °C), and the extent of decrease with increasing temperature is small. The process may thus have a slightly better performance during the winter season. In conclusion, the treatment process is robust over a moderate temperature range (25-50 °C).

**Variables in the recovery of anions via basification**

**pH**

The order of pH adjustment (basification then acidification) and their kinetics for the recovery of anions and then polymer and surfactant are shown; relatively pure anions and polymer/surfactant are recovered in sequence within 10-15 min.

As a mirror-image pH adjustment method to the cation recovery method, a base solution is applied first to displace the bound chromate ion from the floes. In Figure 43, with increasing pH values, the chromate and polymer-surfactant recovery efficiencies increase because hydroxide ions can effectively displace the bound chromate and PAA from MTAB. The MTAB monomers form aggregates on the PAA chains, and the aggregates also bind with chromate. To some extent, MTAB aggregates act as interlinks between negatively charged PAA and negatively charged chromate via electrostatic binding. Once the concentration of hydroxide ions increases, the PAA or chromate ions are competitively displaced via hydroxide ions. This displacement effect results in the recovery of most of the chromate and a little PAA,

because the disassociation of PAA is promoted when the pH value increases. The aggregates have a relatively stronger binding strength with the highly charged PAA chains than with the chromate (Figure 43). Owing to the loss of PAA from floes, which serves as the backbone for MTAB aggregates, some of the MTAB is also dissolved into the basic solution. However, a relatively pure chromate recovery solution is desired that requires little further treatment before reuse. To maximise the chromate recovery and minimise the impurity from PAA and MTAB, a pH of 12 is selected as the optimum recovery pH because it sits between the dissociation of $CrO_4^{2-}$-MTAB and PAA-MTAB. At this pH, the results show that 94% chromate with only 6% PAA-MTAB is recovered in the basic solution (Figure 43). There is still some room for improvement between pH 11-12 to lower the percentage of PAA-MTAB recovery and maintain a high chromate recovery efficiency.

**Residence time**

The kinetics of the chromate recovery step is relatively fast. In the first 2 min, about 80% of the bound chromate has been recovered. After that, the dissolution rate slows downs dramatically. After 20 min, 97% of the bound chromate and 6% of the flocculated PAA-MTAB are recovered in a basic solution (Figure 44). The results indicate that at a relatively moderate pH and concentration factor, the chromate can be quickly recovered into a concentrated solution with a small residue of polymer and surfactant. With the same treatment capacity, for instance, a shorter residence time can reduce the capital cost of building extra reaction tanks and the space volume they occupy. Alternatively, it can increase the total treatment rate with the same equipment. In addition, a higher concentration factor could be achieved given a longer residence time, because the rate of recovering is finite. Thus, there is another balance to be made between the speed of operation and the concentration of recovered anions.

**Variables in the regeneration of PAA and MTAB via acidification**

**pH**

After the basification, a small volume of acid solution is added to dissolve the chromate leached flocs and subsequently regenerate the PAA and MTAB. The acid solution neutralises the PAA and displaces the MTAB from the PAA chains. The regenerated PAA-MTAB contains a small chromate residue left from the previous step. At a pH of 0, 98% of the flocculated PAA-MTAB is regenerated, but a slightly lower regeneration (94%) is achieved at a relatively moderate pH of 1.5. Although this might still be considered an extreme pH, it is nevertheless sensible to trade-off 4% of the regeneration efficiency while reducing the acid usage more than 30 times. This reduction can significantly save chemical costs and improve health and safety during the operation. Further increasing the pH value to 2.5, the regeneration efficiency declines to 30% (Figure 45). Therefore, a pH of 1.5 is used as the optimum pH for the PAA-MTAB regeneration.

**Residence time**

At the PAA-MTAB regeneration step, the concentration factor and residence time were also studied. The results for the concentration factor are rather similar, which may also result from the kinetics and equilibrium of the regeneration process. There is a subtle difference, however: the PAA-MTAB regeneration efficiency is constantly about 5% higher than the chromate recovery for the same concentration factor and residence time. One of the reasons is probably that the surface of the floes are dissolved with time and fresh surface is created and exposed to the acidic solution. The base solution, however, needs to penetrate inside the tortuous floc structure to recover some of the anions, which then takes a longer time to contact with the same surface area. For the same reason, the PAA-MTAB regeneration efficiencies remain almost constant after 15 min residence time, which is 5 min shorter than that for the chromate recovery (Figure 46). In conclusion, the optimum conditions for PAA-MTAB regeneration are at a pH of 1.5, a concentration factor of 5 and 15 min residence time.

**Section 3: Removal selectivity**

Figure 47 shows PSA binding selectivity between 0.2 mM $K_3Fe(CN)_6$ and 0.2 mM $K_2CrO_4$ in the PAA-MTAB system at different pH values (100 ppm PAA+ 2.5 mM MTAB).

Having obtained the results for the removal of single metallic anion species, the mixtures of them were studied to understand the binding selectivity of PSA. The selectivity is important for industrial applications, which allows the process to remove and subsequently recover the desired components into a relative pure solution. The solution can be reused or purified with little further treatment. Two approaches have been studied to enhance the selectivity: reducing the PSA usage and adjusting the solution environment. The rationale of the first approach is that at a fixed amount of metallic anions, the anions with higher charge density can preferably bind with a limited amount of PSAs, so that adding

a limited amount of PSAs may selectively remove the highest charge density anions first, and the rest can be removed in the order of charge density in the next cycles, if they are the targeted species.

Table 5: PSA binding selectivity between $K_3Fe(CN)_6$ and $K_2CrO_4$ in the PAA-MTAB system without pH adjustment.

| PAA (ppm) | MTAB (mM) | $K_3Fe(CN)_6$ (mM) | $K_2CrO_4$ (mM) | $Fe(CN)_6^{3-}$ removal efficiency % | $CrO_4^{2-}$ removal efficiency % | $Fe(CN)_6^{3-}$ selectivity coefficient |
|---|---|---|---|---|---|---|
| 350 | 1 | 0.1 | 0.00 | 99.2 | N/A | N/A |
| 350 | 1 | 0.1 | 0.05 | 98.7 | 0.8 | 127.4 |
| 350 | 1 | 0.1 | 0.10 | 98.9 | 5.2 | 18.1 |
| 350 | 1 | 0.1 | 0.20 | 99.0 | 6.5 | 14.1 |
| 350 | 1 | 0.1 | 0.30 | 98.3 | 8.0 | 11.3 |
| 350 | 1 | 0.1 | 0.50 | 97.6 | 8.4 | 10.7 |

In Table 5, the optimum dosage for 0.1 mM $Fe(CN)6^{3-}$ is used to treat mixtures of $Fe(CN)6^{3-}$ (fixed 0.1 mM) and $CrO_4^{2-}$ (increasing concentration). A strong selectivity is found at a low concentration of chromate, but with increase of its concentration, the selectivity coefficient (Equations below) decrease slowly because of the competitive displacement from a high concentration of chromate. Overall, the selectivity remains at a high level with a low dosage of PSAs. The second approach is to increase the ionic strength of the solution; in this case, the pH is increased to displace the relatively weak charge density chromate from PSAs, and maintain the binding between PSA and $Fe(CN)_6^{3-}$. In Figure 47, as a consequence, at the same anion molar concentration, almost 100% $Fe(CN)6^{3-}$ is removed over a wide range of pH, but the chromate removal efficiency decreases dramatically with increasing pH value. At a pH of 7, less than 5% of the chromate is removed, and the $Fe(CN)6^{3-}$ is still completely removed. This suggests that a minor adjustment of pH can lead to a major improvement in the selectivity between anions with difference valences. Calculations of selectivity coefficient between anion 1 and anion 2 are as follows:

$$PSA + Anion\ 1 \leftrightarrow PSA - Anion\ 1$$

$$K_{PSA-anion\ 1} = \frac{[PSA - Anion\ 1]}{[PSA][Anion\ 1]}$$

$$PSA + Anion\ 2 \leftrightarrow PSA - Anion\ 2$$

$$K_{PSA-anion\ 2} = \frac{[PSA - Anion\ 2]}{[PSA][Anion\ 2]}$$

$$PSA - Anion\ 1 + Anion\ 2 \leftrightarrow PSA - Anion\ 2 + Anion\ 1$$

$$K_{anion\ 1,2} = \frac{[PSA - Anion\ 2][Anion\ 1]}{[PSA - Anion\ 1][Anion\ 2]} = \frac{K_{PSA-anion\ 2}[PSA][Anion\ 1][Anion\ 2]}{K_{PSA-anion\ 1}[PSA][Anion\ 1][Anion\ 2]}$$

$$= \frac{K_{PSA-anion\ 2}}{K_{PSA-anion\ 1}} = \frac{\frac{[PSA - Anion\ 2]}{[PSA][Anion\ 2]}}{\frac{[PSA - Anion\ 1]}{[PSA][Anion\ 1]}} = \frac{[PSA - Anion\ 2][Anion\ 1]}{[PSA - Anion\ 1][Anion\ 2]}$$

Thus, a strong removal selectivity is found between divalent ions and trivalent ions for polymer surfactant

aggregates.

## Claims

1. A process comprising treating a solution with an ionic surfactant and a polymer comprising ionisable groups, which solution comprises a charged species dissolved in a solvent, wherein the charged species is a negatively charged species and the ionic surfactant is a cationic surfactant,
wherein the polymer comprising ionisable groups and the ionic surfactant form a polymer-surfactant aggregate, and the polymer-surfactant aggregate adsorbs the charged species from the solution to produce a complex, which complex comprises: the charged species, the polymer comprising ionisable groups and the ionic surfactant,
and wherein the solution is an aqueous solution,
wherein

   (a) the charged species comprises a metal anion or a complex anion which comprises a metal or metalloid; and
   (b) the polymer comprising ionisable groups is a negatively charged polymer when in aqueous solution.

2. The process according to claim 1, wherein the process is for removing the charged species from the solution, which process further comprises separating the complex comprising the charged species, the polymer comprising ionisable groups and the ionic surfactant from the solution.

3. The process according to claim 2, wherein separating the complex from the solution further comprises filtration and/or sedimentation.

4. The process according to claim 2 or claim 3, wherein the process further comprises removing the charged species from the complex comprising the charged species, the polymer comprising ionisable groups and the ionic surfactant, which process comprises forming a salt of the charged species and separating the salt from the polymer comprising ionisable groups and the ionic surfactant.

5. The process according to claim 4, wherein the separating the salt from the polymer comprising ionisable groups and the ionic surfactant comprises filtration.

6. The process according to claim 4 or claim 5 wherein forming a salt of the charged species comprises adjusting the pH.

7. The process according to claim 6, wherein forming a salt of the charged species comprises adjusting the pH by treating the complex with a base selected from sodium hydroxide and potassium hydroxide.

8. The process according to claim 6 or claim 7, which process further comprises recovering the polymer comprising ionisable groups and/or the ionic surfactant.

9. The process according to claim 8, wherein the step of recovering the polymer comprising ionisable groups and/or the ionic surfactant comprises adjusting the pH of a composition comprising the polymer comprising ionisable groups and the ionic surfactant,
and wherein the process optionally further comprises using the recovered polymer comprising ionisable groups and/or the recovered ionic surfactant in a further process for treating a solution with an ionic surfactant and a polymer comprising ionisable groups as defined in any one of claims 1 to 7.

10. A complex comprising: a charged species and a polymer-surfactant aggregate, the polymer-surfactant aggregate comprising (i) a polymer comprising ionisable groups, and (ii) an ionic surfactant, wherein:

   (a) the charged species comprises a metal anion or a complex anion which comprises a metal or metalloid;
   (b) the ionic surfactant is a cationic surfactant; and
   (c) the polymer comprising ionisable groups is a negatively charged polymer when in aqueous solution.

11. A complex according to claim 10 wherein the cationic surfactant comprises (a) a cationic functional group comprising a quaternary nitrogen having the formula: $(NR_1R_2R_3R_4)^+$, wherein $R_1$, $R_2$, $R_3$ and $R_4$ are independently selected from a substituted or unsubstituted $C_1$-$C_{30}$ alkyl group or (b) a cationic nitrogen-containing group wherein the nitrogen is not a quaternary nitrogen.

**12.** A complex according to claim 10 or claim 11 wherein the polymer comprising ionisable groups is a polymer comprising units of formula (IV):

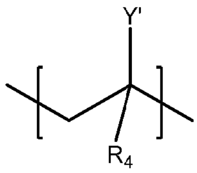

(IV)

wherein: $R_4$ is hydrogen or a substituted or unsubstituted $C_1$-$C_6$ alkyl; Y' is COOX', CONR'R" or 4-phenyl-$SO_3X'$; X' is H or a monovalent cation; and R' and R" are independently hydrogen or a substituted or unsubstituted $C_1$-$C_6$ alkyl.

**13.** The complex according to any one of claims 10 to 12 wherein the charged species is a negatively charged species comprising chromate, dichromate, permanganate or ferricyanide; the polymer comprising ionisable groups is PSS or PAA; and the ionic surfactant is Myristyltrimethylammonium bromide ($C_{14}$TAB) or Myristyltrimethylammonium chloride.

**14.** A complex according to any one of claims 10 to 13 wherein: the complex is in an aqueous solution, optionally wherein the solution comprises: less than or equal to 100 ppm of the charged species, and/or less than or equal to 500 ppm of the polymer comprising ionisable groups, and/or less than or equal to 3000 ppm of the ionic surfactant.

**15.** A complex according to any one of claims 10 to 14, wherein the charge ratio for the charged species to the polymer comprising ionisable groups to the ionic surfactant is from 1:1:10 to 1:20:1.

**Patentansprüche**

**1.** Verfahren, das ein Behandeln einer Lösung mit einem ionischen Tensid und einem Polymer, das ionisierbare Gruppen umfasst, umfasst, welche Lösung eine geladene Spezies umfasst, die in einem Lösungsmittel gelöst ist, wobei die geladene Spezies eine negativ geladene Spezies ist und das ionische Tensid ein kationisches Tensid ist, wobei das Polymer, das ionisierbare Gruppen umfasst, und das ionische Tensid ein Polymer-Tensid-Aggregat bilden, und das Polymer-Tensid-Aggregat die geladene Spezies aus der Lösung absorbiert, um einen Komplex zu bilden, welcher Komplex Folgendes umfasst: die geladene Spezies, das Polymer, das ionisierbare Gruppen umfasst und das ionische Tensid,
und wobei die Lösung eine wässrige Lösung ist,
wobei

(a) die geladene Spezies ein Metallanion oder ein Komplexanion, das ein Metall oder Metalloid umfasst, umfasst; und
(b) das Polymer, das ionisierbare Gruppen umfasst, ein negativ geladenes Polymer ist, wenn es sich einer wässrigen Lösung befindet.

**2.** Verfahren nach Anspruch 1, wobei das Verfahren zum Entfernen der geladenen Spezies aus der Lösung ist, welches Verfahren ferner ein Trennen des Komplexes, der die geladene Spezies, das Polymer, das ionisierbare Gruppen umfasst, und das ionischen Tensid umfasst, von der Lösung umfasst.

**3.** Verfahren nach Anspruch 2, wobei ein Trennen des Komplexes von der Lösung ferner eine Filtration/Sedimentation umfasst.

**4.** Verfahren nach Anspruch 2 oder 3, wobei das Verfahren ferner ein Entfernen der geladenen Spezies von dem Komplex umfasst, der die geladene Spezies, das Polymer, das ionisierbare Gruppen umfasst, und das ionische Tensid umfasst, welches Verfahren ein Bilden eines Salzes der geladenen Spezies und ein Trennen des Salzes von dem Polymer, das ionisierbare Gruppen umfasst, und dem ionischen Tensid umfasst.

**5.** Verfahren nach Anspruch 4, wobei das Trennen des Salzes von dem Polymer, das ionisierbare Gruppen umfasst und dem ionischen Tensid eine Filtration umfasst.

6. Verfahren nach Anspruch 4 oder 5, wobei ein Bilden eines Salzes der geladenen Spezies ein Einstellen des pH-Werts umfasst.

7. Verfahren nach Anspruch 6, wobei ein Bilden eines Salzes der geladenen Spezies ein Einstellen des pH-Werts durch Behandeln des Komplexes mit einer Base, die aus Natriumhydroxid und Kaliumhydroxid ausgewählt ist, umfasst.

8. Verfahren nach Anspruch 6 oder 7, welches Verfahren ferner ein Rückgewinnen des Polymers, das ionisierbare Gruppen umfasst, und/oder des ionischen Tensids umfasst.

9. Verfahren nach Anspruch 8, wobei der Schritt zum Rückgewinnen des Polymers, das ionisierbare Gruppen umfasst, und/oder des ionischen Tensids ein Einstellen des pH-Werts einer Zusammensetzung umfasst, die das Polymer, das ionisierbare Gruppen umfasst, und das ionische Tensid umfasst,
und wobei das Verfahren optional ferner ein Verwenden des rückgewonnenen Polymers, das ionisierbare Gruppen umfasst, und/oder des rückgewonnenen ionischen Tensids in einem weiteren Verfahren zum Behandeln einer Lösung mit einem ionischen Tensid und einem Polymer, das ionisierbare Gruppen umfasst, wie in einem der Ansprüche 1 bis 7 definiert, umfasst.

10. Komplex, der Folgendes umfasst: eine geladene Spezies und ein Polymer-Tensid-Aggregat, wobei das Polymer-Tensid-Aggregat (i) ein Polymer, das ionisierbare Gruppen umfasst, und (ii) ein ionisches Tensid umfasst, wobei:

(a) die geladene Spezies ein Metallanion oder ein Komplexanion, das ein Metall oder Metalloid umfasst, umfasst;
(b) das ionische Tensid ein kationisches Tensid ist; und
(c) das Polymer, das ionisierbare Gruppen umfasst, ein negativ geladenes Polymer ist, wenn es sich in einer wässrigen Lösung befindet.

11. Komplex nach Anspruch 10, wobei das kationische Tensid (a) eine kationische funktionelle Gruppe, die einen quaternären Stickstoff mit der Formel: $(NR_1R_2R_3R_4)^+$ umfasst, wobei $R_1$, $R_2$, $R_3$ und $R_4$ unabhängig aus einer substituierten oder unsubstituierten $C_1$-$C_{30}$-Alkylgruppe ausgewählt sind, oder (b) eine kationische stickstoffhaltige Gruppe umfasst, wobei der Stickstoff kein quaternärer Stickstoff ist.

12. Komplex nach Anspruch 10 oder Anspruch 11, wobei es sich bei dem Polymer, das ionisierbare Gruppen umfasst, um ein Polymer handelt, das Einheiten der Formel (IV) umfasst:

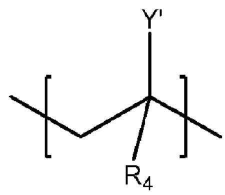
(IV)

wobei: $R_4$ Wasserstoff oder ein substituiertes oder unsubstituiertes $C_1$-$C_6$-Alkyl ist; Y' COOX', CONR'R" oder 4-Phenyl-$SO_3$X' ist; X' H oder ein einwertiges Kation ist; und R' und R" unabhängig Wasserstoff oder ein substituiertes oder unsubstituiertes $C_1$-$C_6$-Alkyl sind.

13. Komplex nach einem der Ansprüche 10 bis 12, wobei die geladene Spezies eine negativ geladene Spezies ist, die Chromat, Dichromat, Permanganat oder Ferricyanid umfasst; das Polymer, das ionisierbare Gruppen umfasst, PSS oder PAA ist; und das ionische Tensid Myristyltrimethylammoniumbromid ($C_{14}$TAB) oder Myristyltrimethylammoniumchlorid ist.

14. Komplex nach einem der Ansprüche 10 bis 13, wobei: der Komplex sich in einer wässrigen Lösung befindet, optional wobei die Lösung Folgendes umfasst: weniger als oder 100 ppm der geladenen Spezies und/oder weniger als oder 500 ppm des Polymers, das ionisierbare Gruppen umfasst, und/oder weniger als oder 3000 ppm des ionischen Tensids.

15. Komplex nach einem der Ansprüche 10 bis 14, wobei das Ladungsverhältnis für die geladene Spezies zu dem Polymer, das ionisierbare Gruppen umfasst, zu dem ionischen Tensid 1:1:10 bis 1:20:1 beträgt.

## Revendications

1. Procédé comprenant le traitement d'une solution avec un surfactant ionique et un polymère comprenant des groupes ionisables, laquelle solution comprend une espèce chargée dissoute dans un solvant, dans lequel l'espèce chargée est une espèce négativement chargée et le surfactant ionique est un surfactant cationique,
dans lequel le polymère comprenant des groupes ionisables et le surfactant ionique forment un agrégat polymère-surfactant,
et l'agrégat polymère-surfactant adsorbe l'espèce chargée à partir de la solution pour produire un complexe, lequel complexe comprend : l'espèce chargée, le polymère comprenant des groupes ionisables et le surfactant ionique, et dans lequel la solution est une solution aqueuse,
dans lequel

(a) l'espèce chargée comprend un anion métallique ou un anion complexe qui comprend un métal ou métalloïde ; et
(b) le polymère comprenant des groupes ionisables est un polymère négativement chargé lorsqu'il est dans la solution aqueuse.

2. Procédé selon la revendication 1, dans lequel le procédé est destiné à l'enlèvement de l'espèce chargée à partir de la solution, lequel procédé comprend en outre la séparation du complexe comprenant l'espèce chargée, le polymère comprenant des groupes ionisables et le surfactant ionique à partir de la solution.

3. Procédé selon la revendication 2, dans lequel la séparation du complexe à partir de la solution comprend en outre la filtration et/ou la sédimentation.

4. Procédé selon la revendication 2 ou la revendication 3, dans lequel le procédé comprend en outre l'enlèvement de l'espèce chargée à partir du complexe comprenant l'espèce chargée, le polymère comprenant des groupes ionisables et le surfactant ionique, lequel procédé comprend la formation d'un sel de l'espèce chargée et la séparation du sel à partir du polymère comprenant des groupes ionisables et du surfactant ionique.

5. Procédé selon la revendication 4, dans lequel la séparation du sel à partir du polymère comprenant des groupes ionisables et du surfactant ionique comprend la filtration.

6. Procédé selon la revendication 4 ou la revendication 5 dans lequel la formation d'un sel de l'espèce chargée comprend l'ajustement du pH.

7. Procédé selon la revendication 6, dans lequel la formation d'un sel de l'espèce chargée comprend l'ajustement du pH par l'intermédiaire du traitement du complexe avec une base sélectionnée parmi de l'hydroxyde de sodium et de l'hydroxyde de potassium.

8. Procédé selon la revendication 6 ou la revendication 7, lequel procédé comprend en outre la récupération du polymère comprenant des groupes ionisables et/ou du surfactant ionique.

9. Procédé selon la revendication 8, dans lequel l'étape de la récupération du polymère comprenant des groupes ionisables et/ou du surfactant ionique comprend l'ajustement du pH d'une composition comprenant le polymère comprenant des groupes ionisables et le surfactant ionique,
et dans lequel le procédé comprend optionnellement en outre l'utilisation du polymère récupéré comprenant des groupes ionisables et/ou du surfactant ionique récupéré dans un procédé supplémentaire pour le traitement d'une solution avec un surfactant ionique et un polymère comprenant des groupes ionisables, tel que défini dans l'une quelconque des revendications 1 à 7.

10. Complexe, comprenant : une espèce chargée et un agrégat polymère-surfactant, l'agrégat polymère-surfactant comprenant (i) un polymère comprenant des groupes ionisables, et (ii) un surfactant ionique, dans lequel :

(a) l'espèce chargée comprend un anion métallique ou un anion complexe qui comprend un métal ou métalloïde ;
(b) le surfactant ionique est un surfactant cationique ; et
(c) le polymère comprenant des groupes ionisables est un polymère négativement chargé lorsqu'il est dans la solution aqueuse.

**11.** Complexe selon la revendication 10 dans lequel le surfactant cationique comprend (a) un groupe fonctionnel cationique comprenant un azote quaternaire ayant la formule : $(NR_1R_2R_3R_4)^+$, dans lequel $R_1$, $R_2$, $R_3$ et $R_4$ sont indépendamment sélectionnés parmi un groupe alkyle $C_1$-$C_{30}$ substitué ou non substitué ou (b) un groupe contenant de l'azote cationique dans lequel l'azote n'est pas un azote quaternaire.

**12.** Complexe selon la revendication 10 ou la revendication 11, dans lequel le polymère comprenant des groupes ionisables est un polymère comprenant des unités de la formule (IV) :

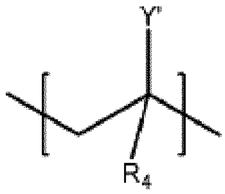

(IV)

dans lequel : $R_4$ est hydrogène ou un alkyle $C_1$-$C_6$ substitué ou non substitué ; Y' est COOX', CONR'R" ou 4-phényl-$SO_3$X' ; X' est H or un cation monovalent; et R' et R" sont indépendamment hydrogène ou un alkyle $C_1$-$C_6$ substitué ou non substitué.

**13.** Complexe selon l'une quelconque des revendications 10 à 12 dans lequel l'espèce chargée est une espèce négativement chargée comprenant : chromate, dichromate, permanganate ou ferricyanure ; le polymère comprenant des groupes ionisables est PSS ou PAA ; et le surfactant ionique est bromure de myristyltriméthylammonium ($C_{14}$TAB) ou chlorure de myristyltriméthylammonium.

**14.** Complexe selon l'une quelconque des revendications 10 à 13 dans lequel : le complexe est dans une solution aqueuse, optionnellement dans lequel la solution comprend : une quantité de l'espèce chargée inférieure ou égale à 100 ppm, et/ou du une quantité du polymère comprenant des groupes ionisables inférieure ou égale à 500 ppm, et/ou une quantité du surfactant ionique inférieure ou égale à 3000 ppm.

**15.** Complexe selon l'une quelconque des revendications 10 à 14, dans lequel le rapport de charge pour l'espèce chargée par rapport au polymère comprenant des groupes ionisables par rapport au surfactant ionique est de 1:1:10 à 1:20:1.

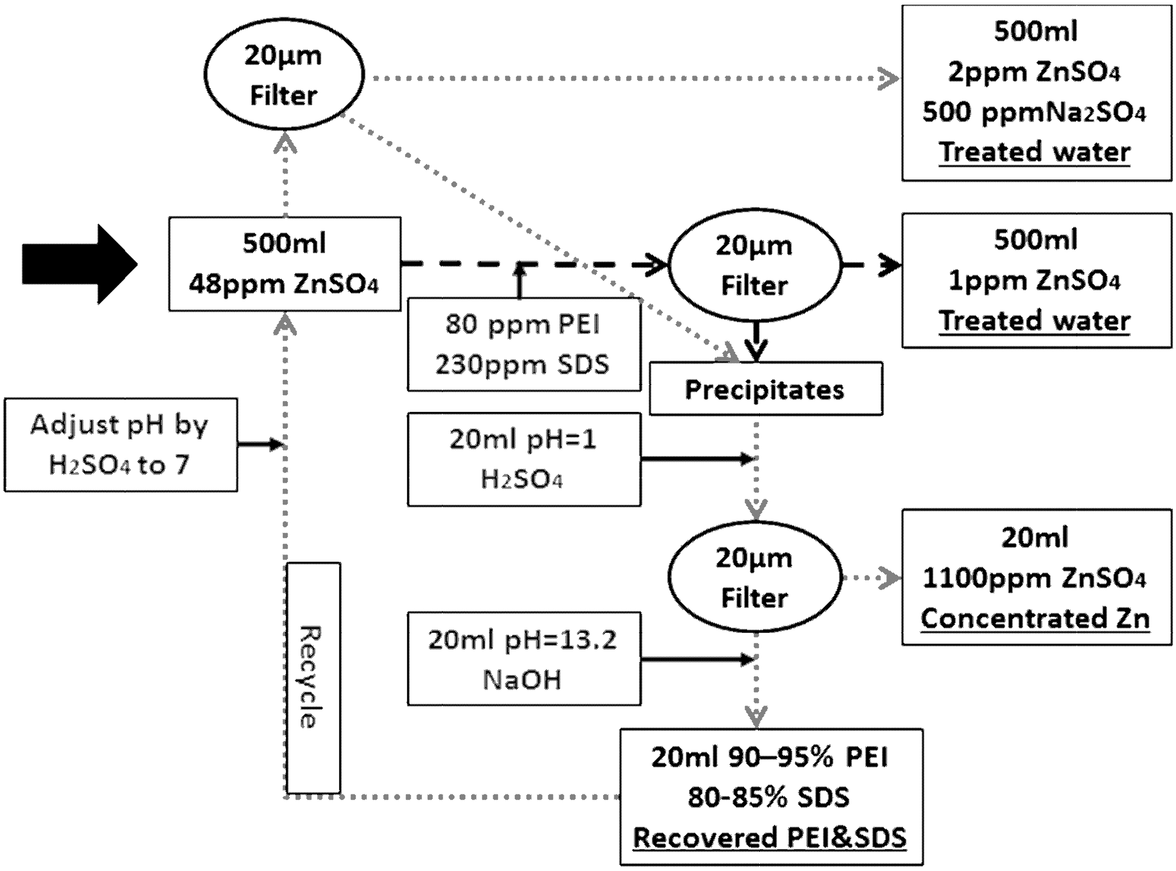


Figure 1

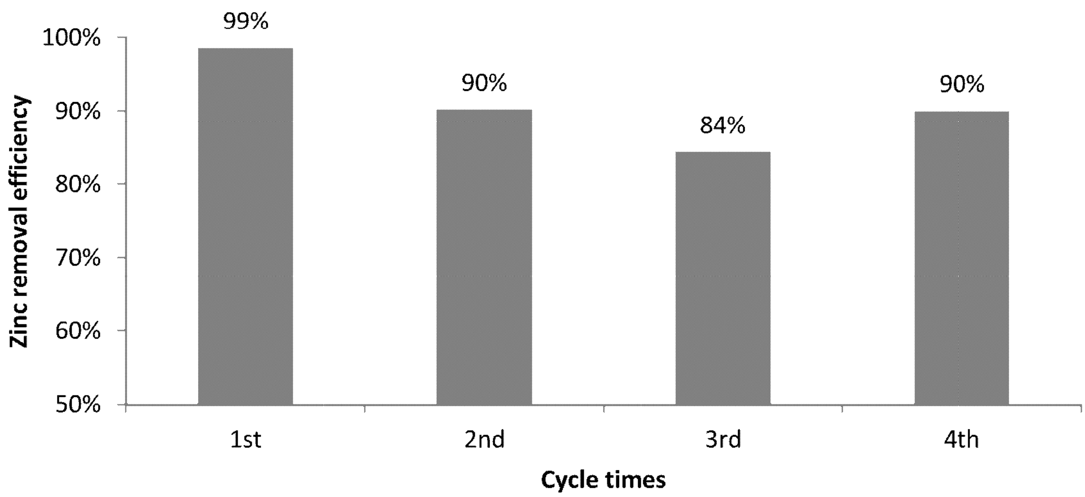


Figure 2

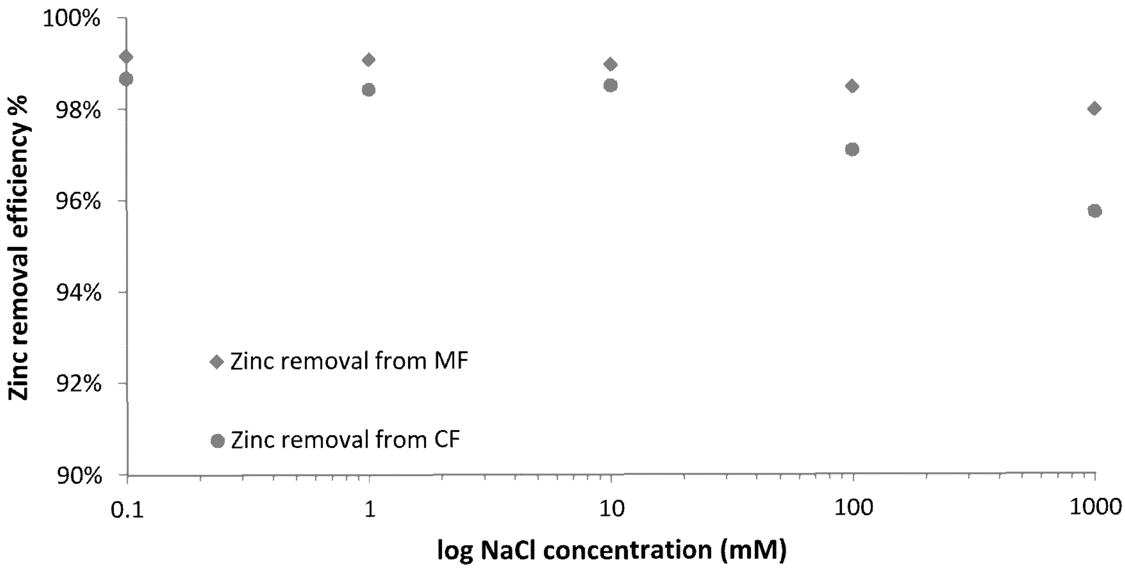


Figure 3

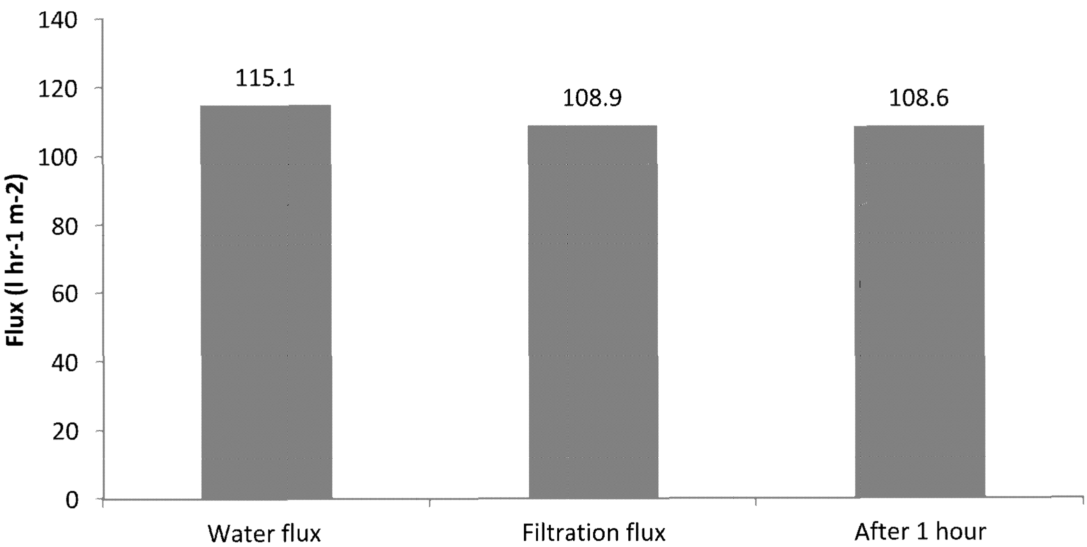


Figure 4

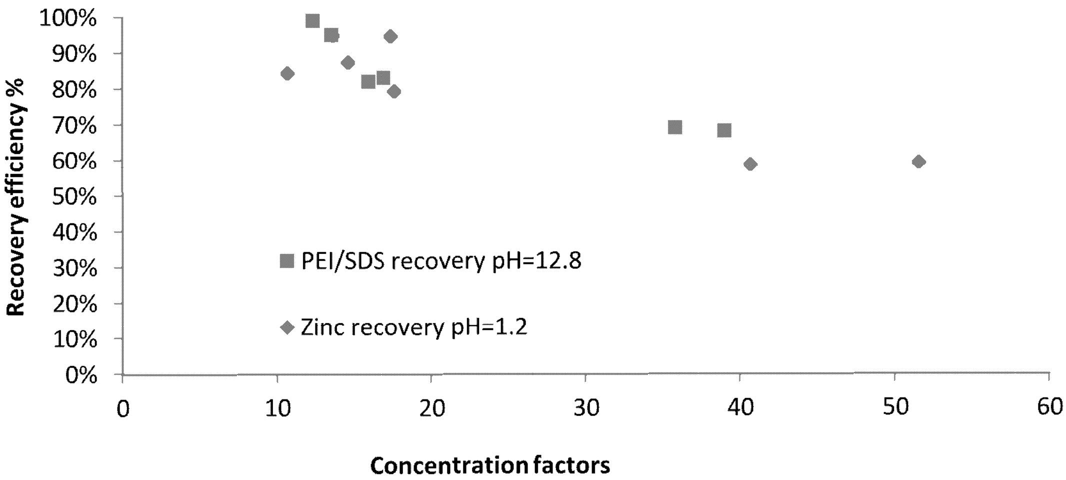


Figure 5

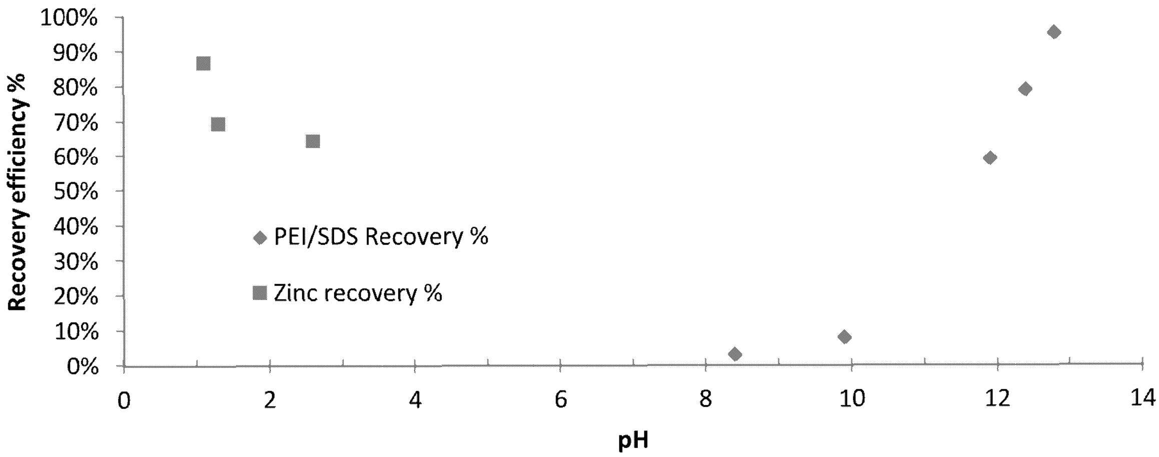


Figure 6

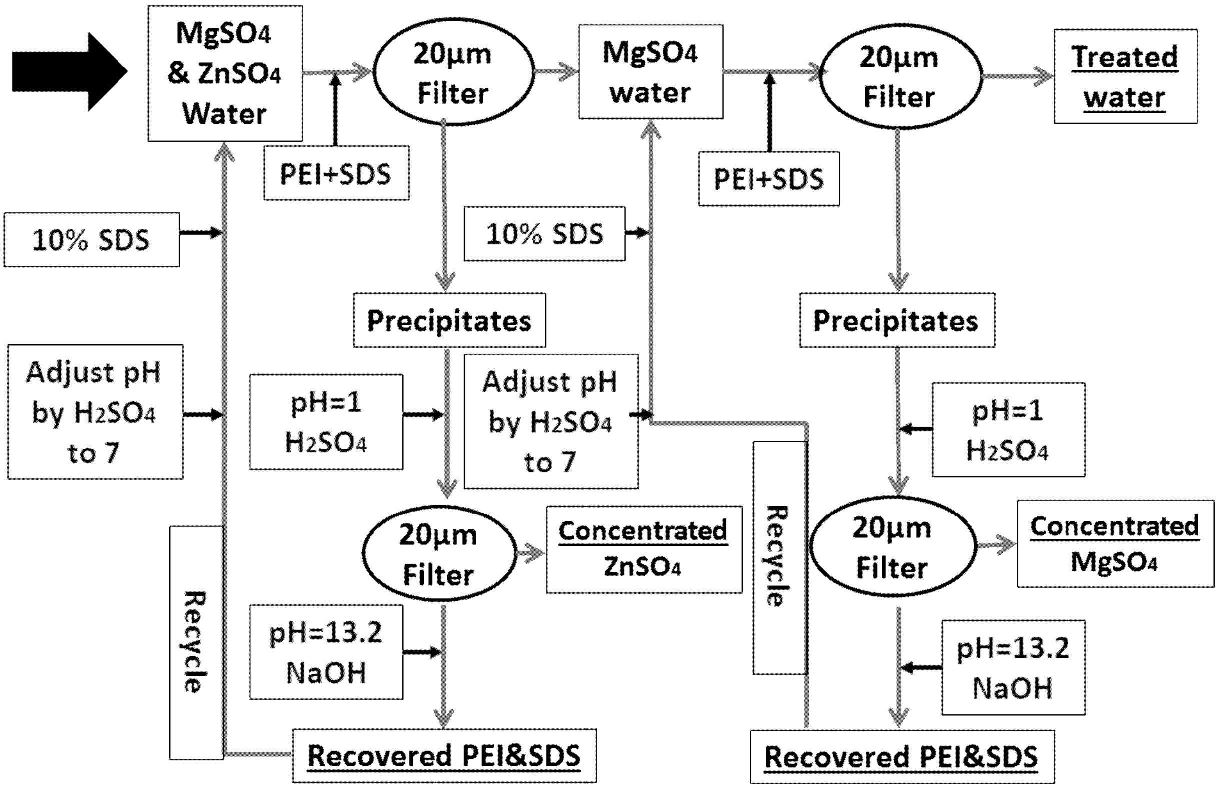


Figure 7

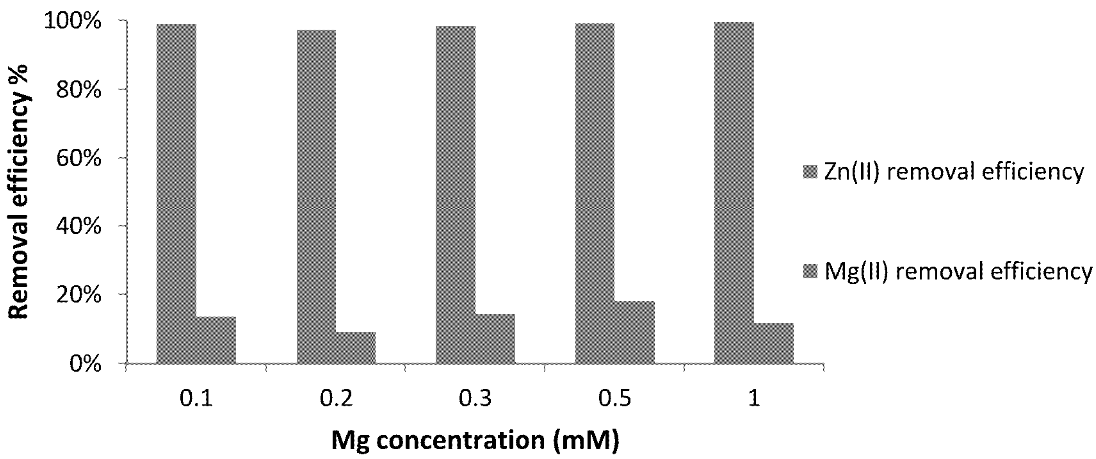


Figure 8

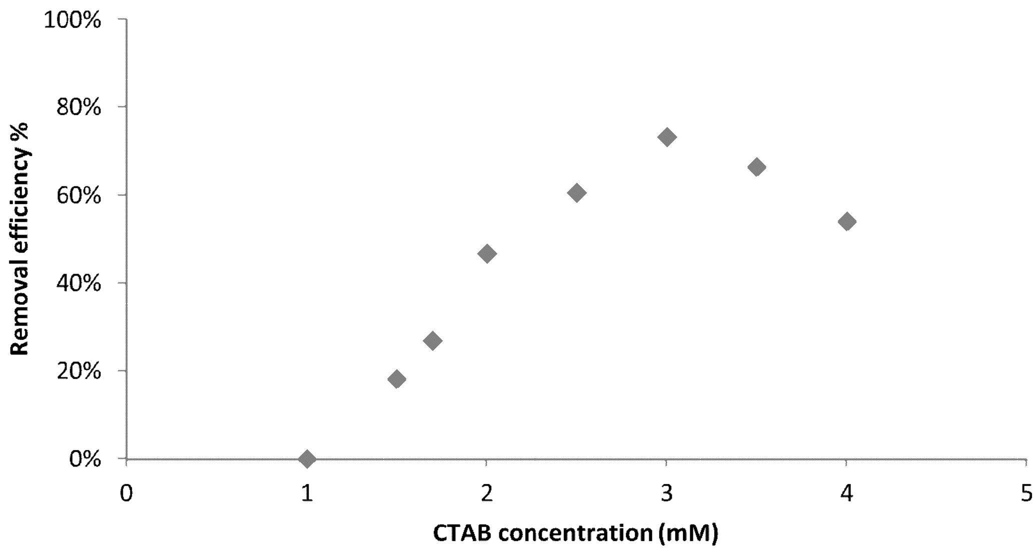


Figure 9

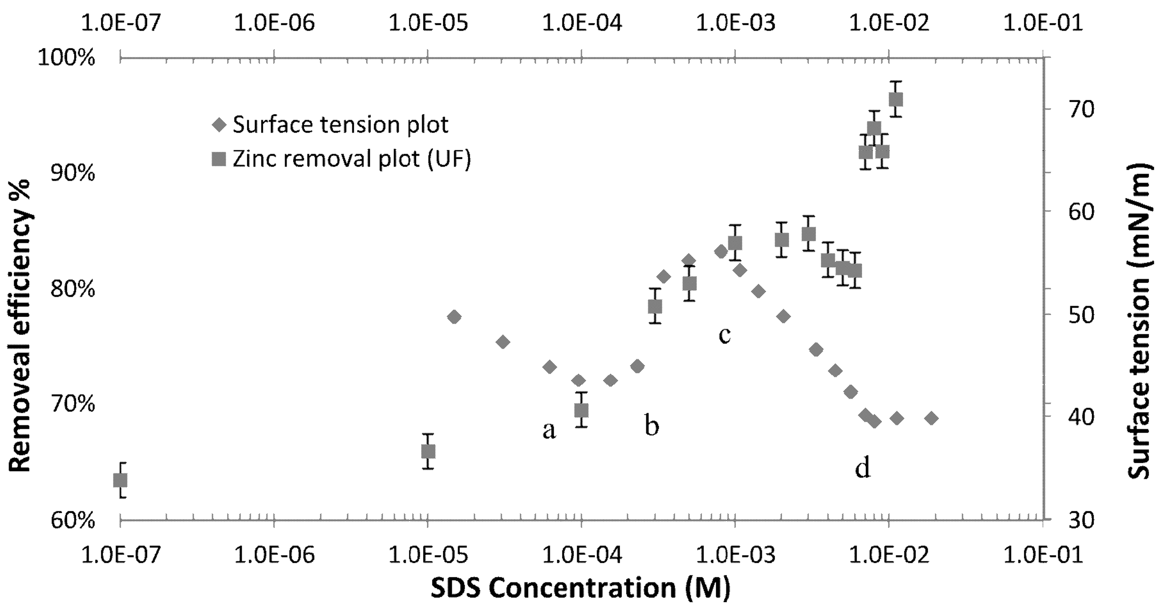


Figure 10

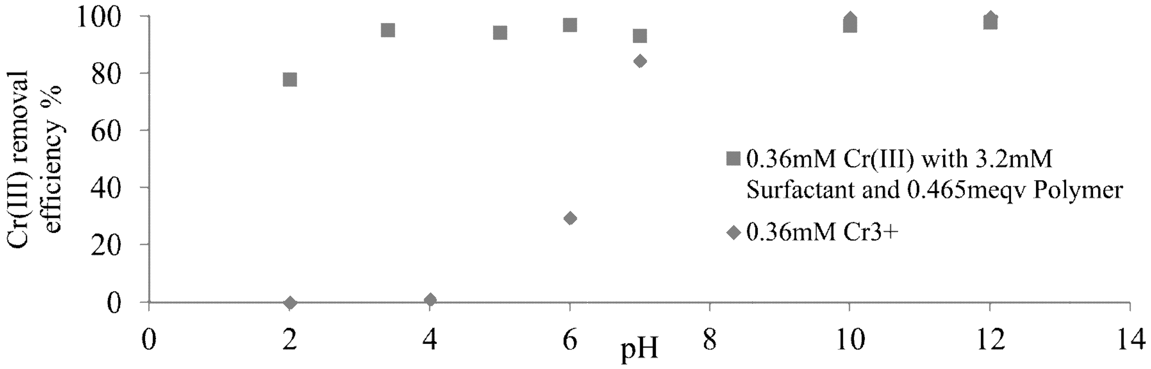


Figure 11

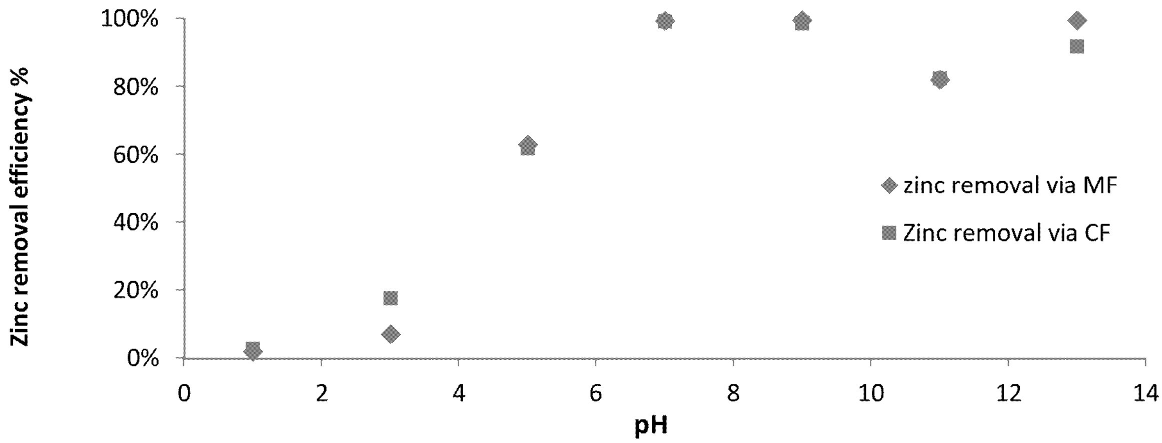


Figure 12

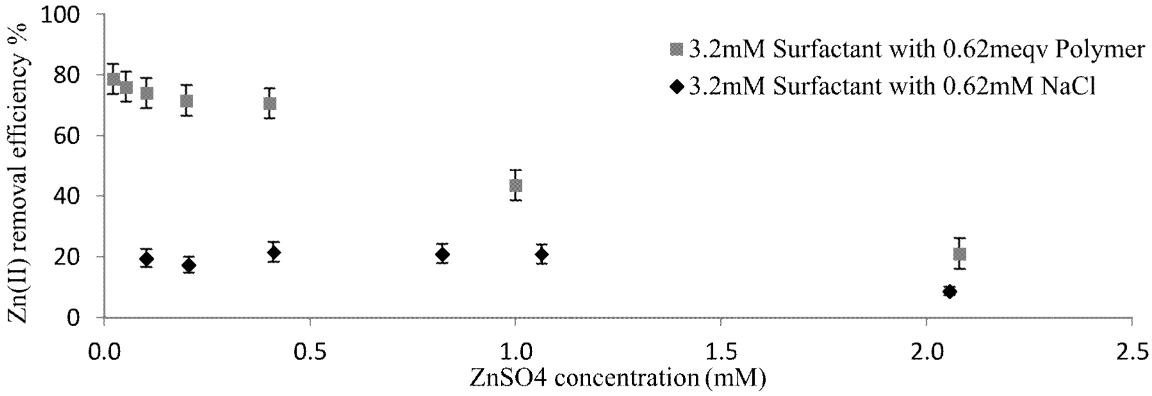


Figure 13

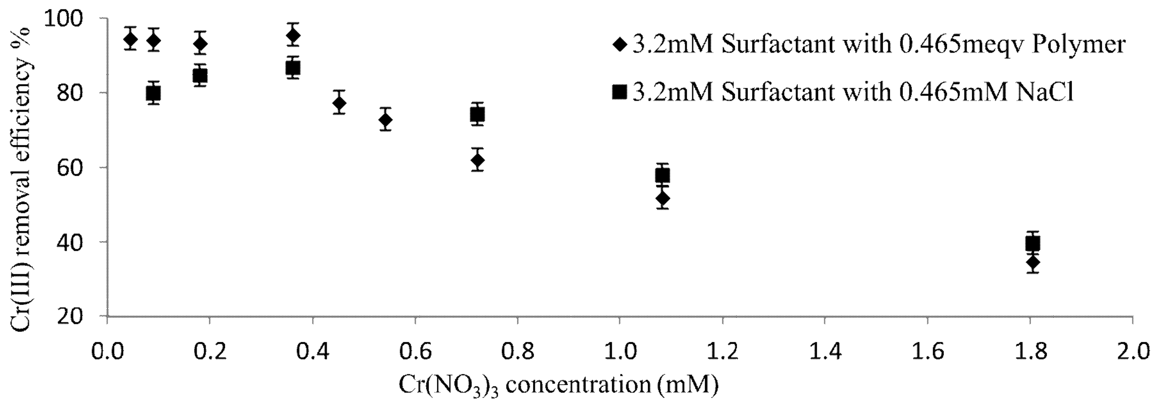


Figure 14

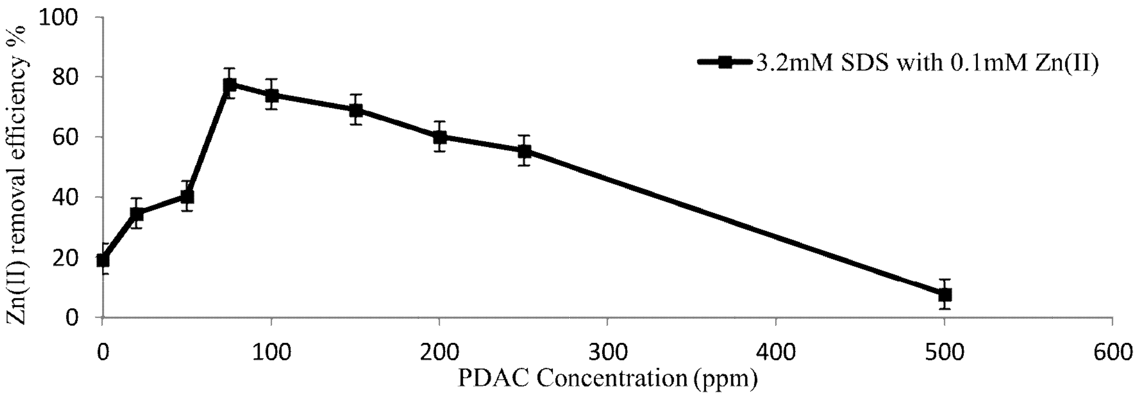


Figure 15

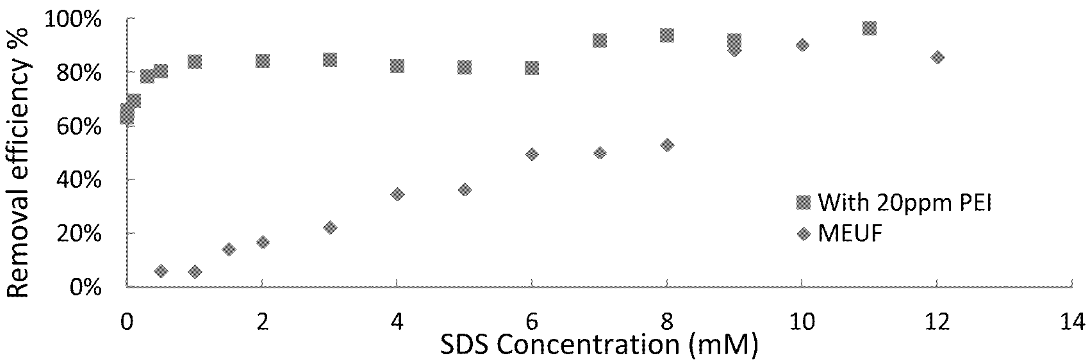


Figure 16

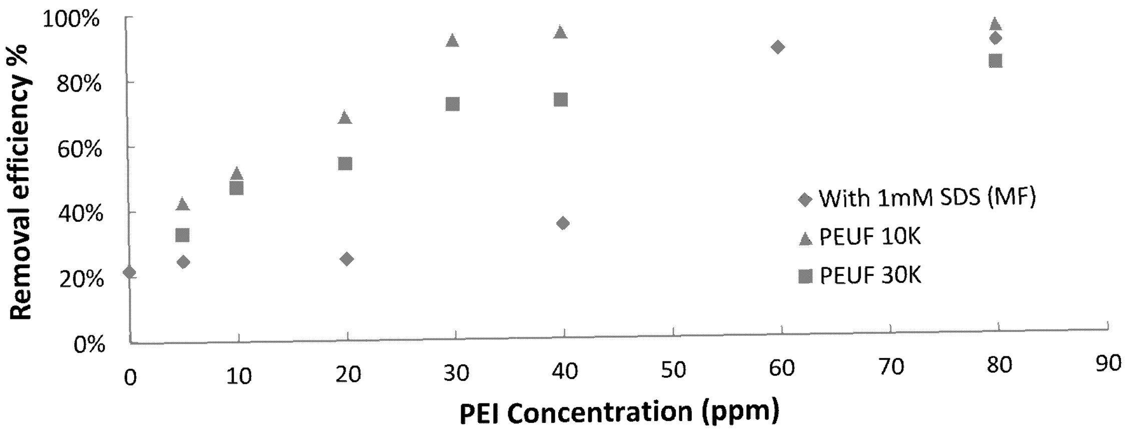


Figure 17

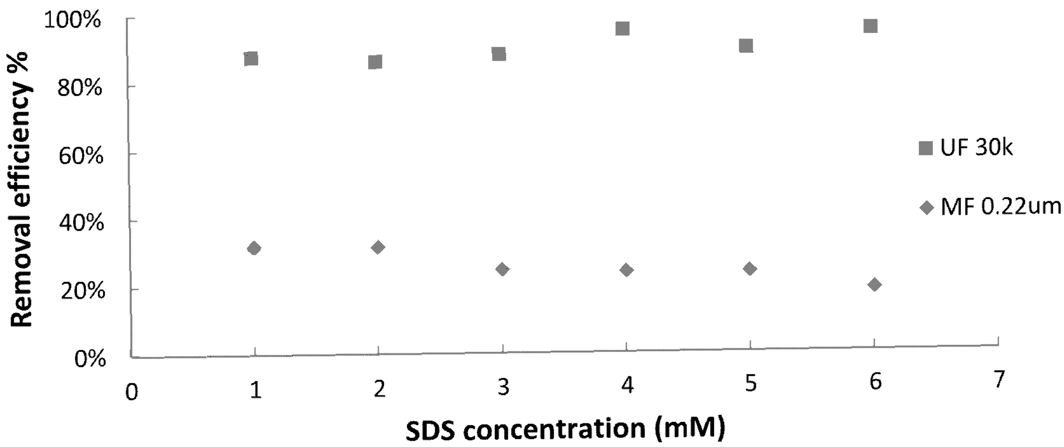


Figure 18

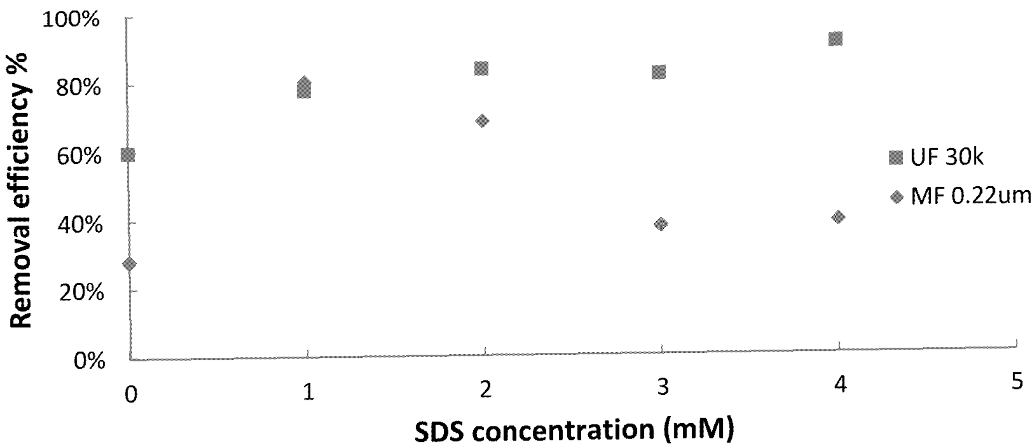


Figure 19

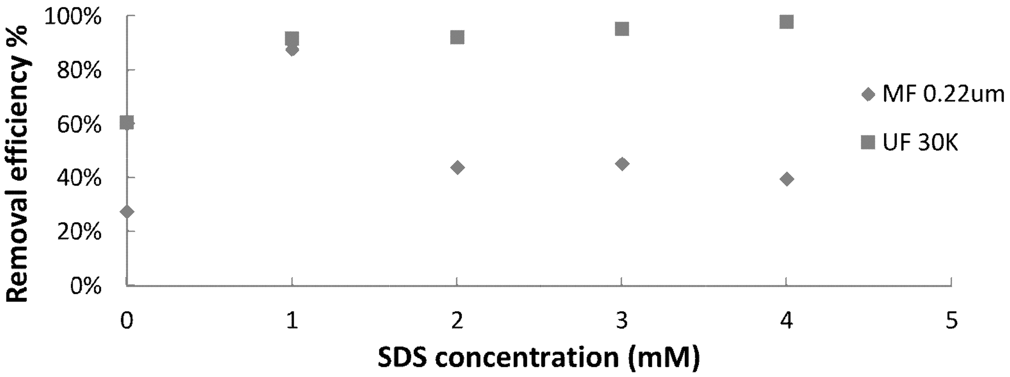


Figure 20

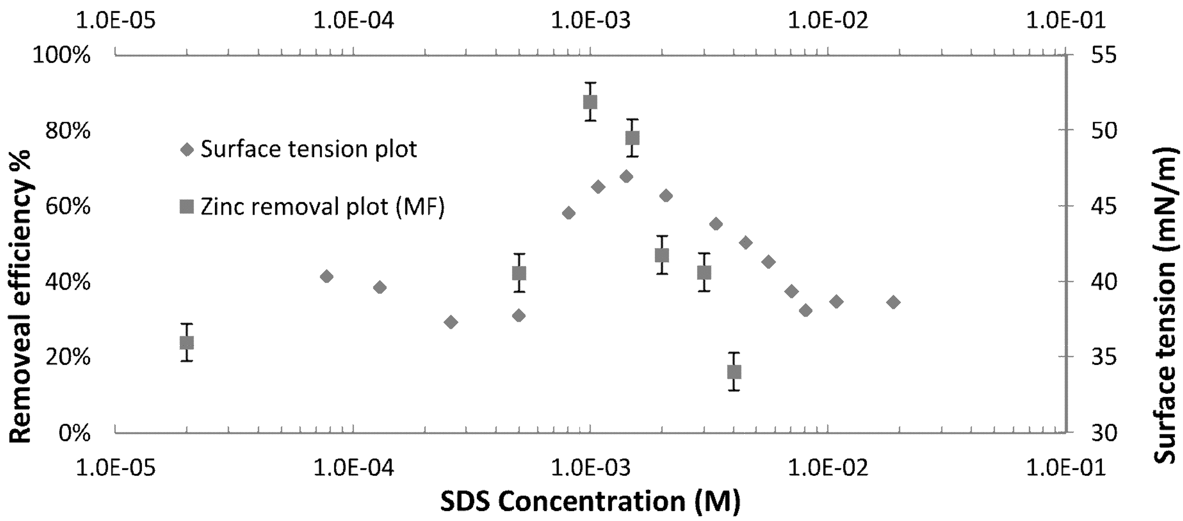


Figure 21

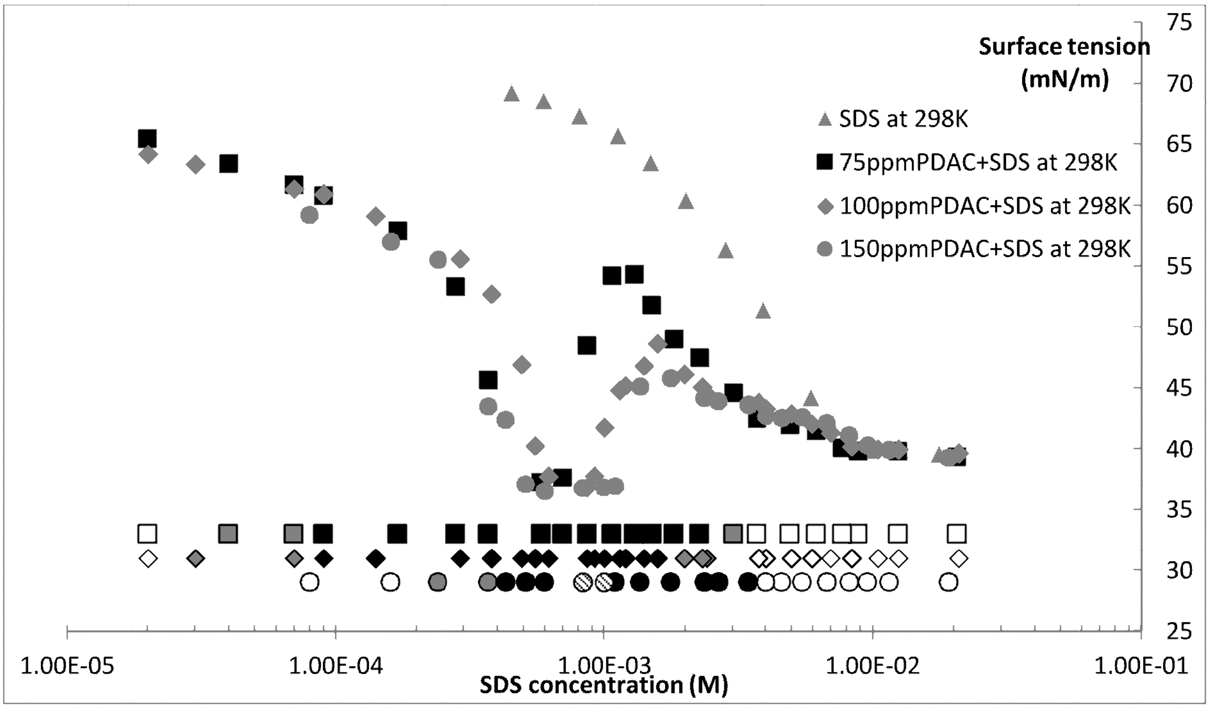


Figure 22(a)

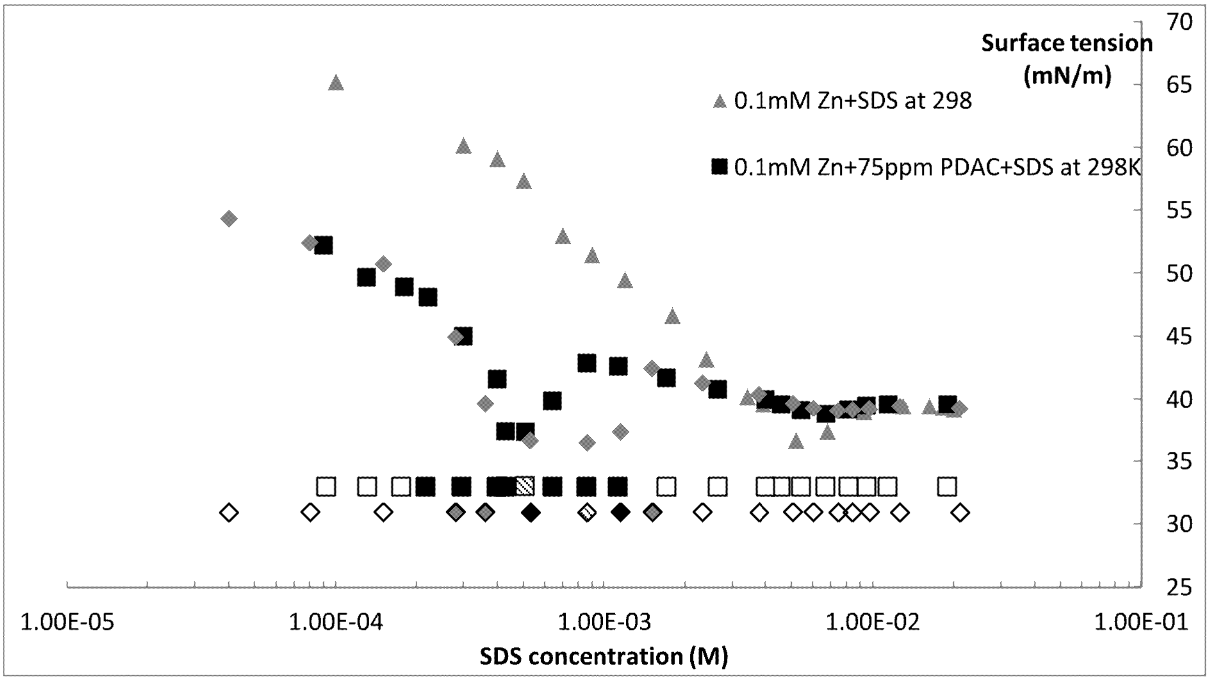


Figure 22(b)

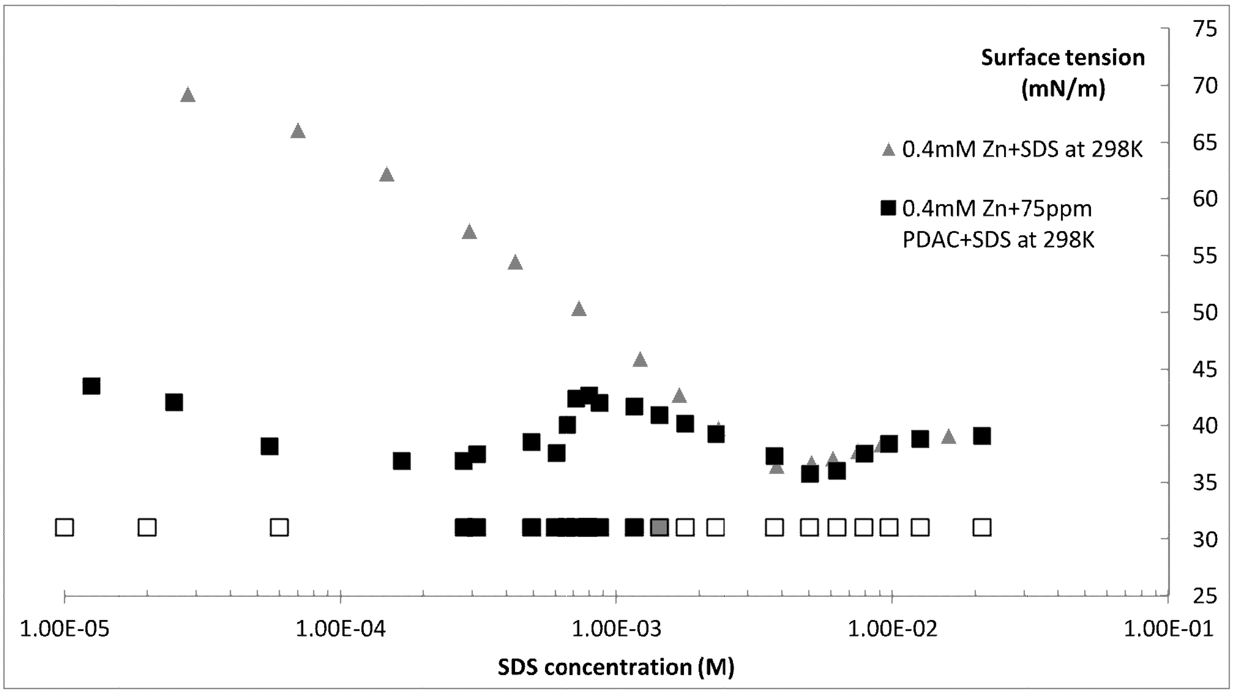


Figure 22(c)

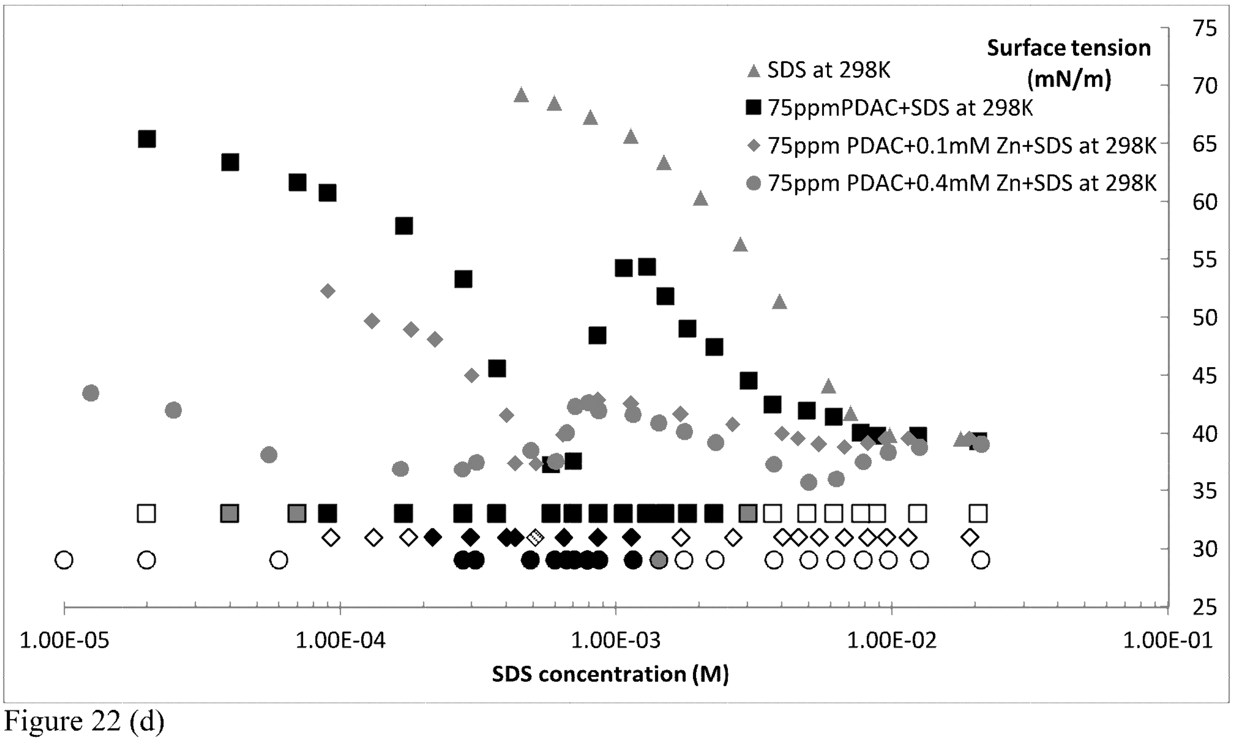


Figure 22 (d)

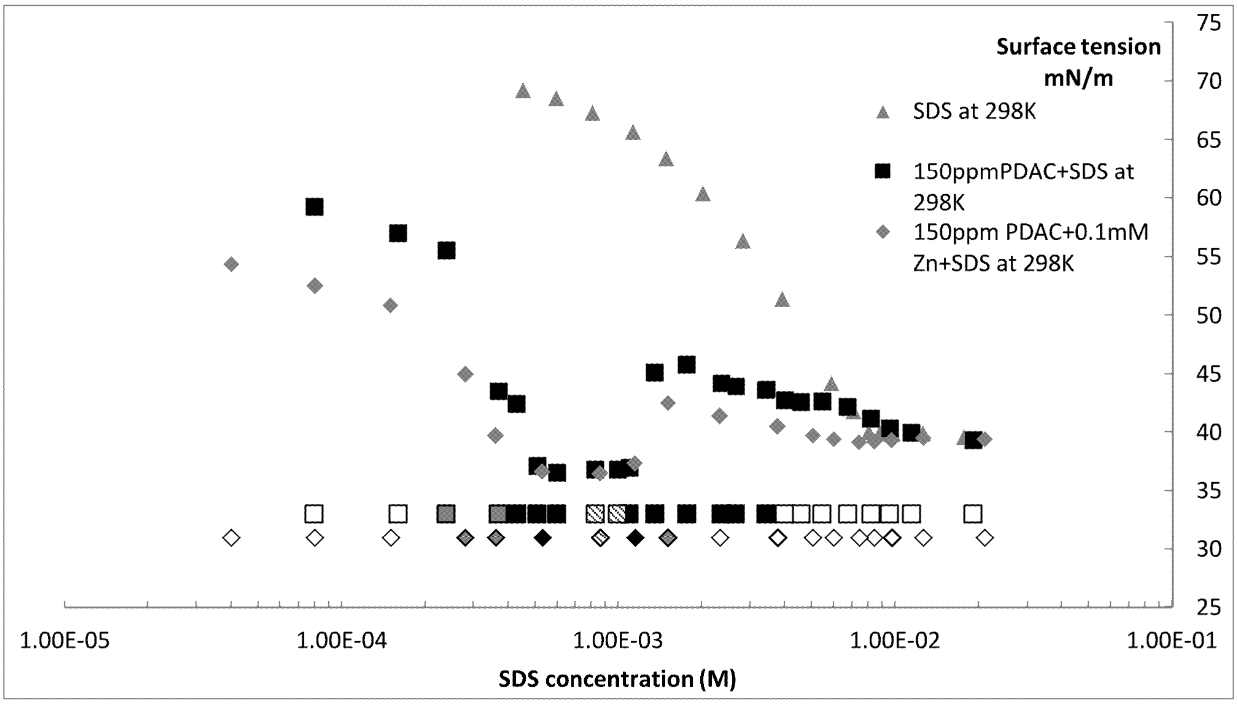


Figure 22 (e)

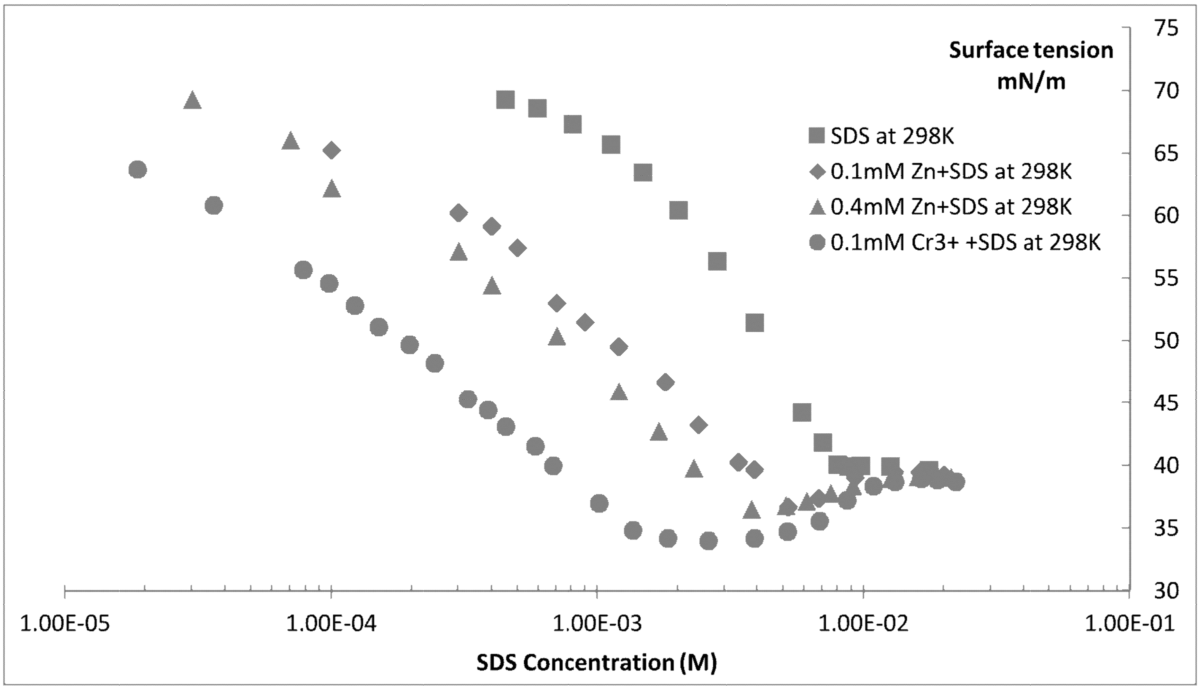


Figure 22(f)

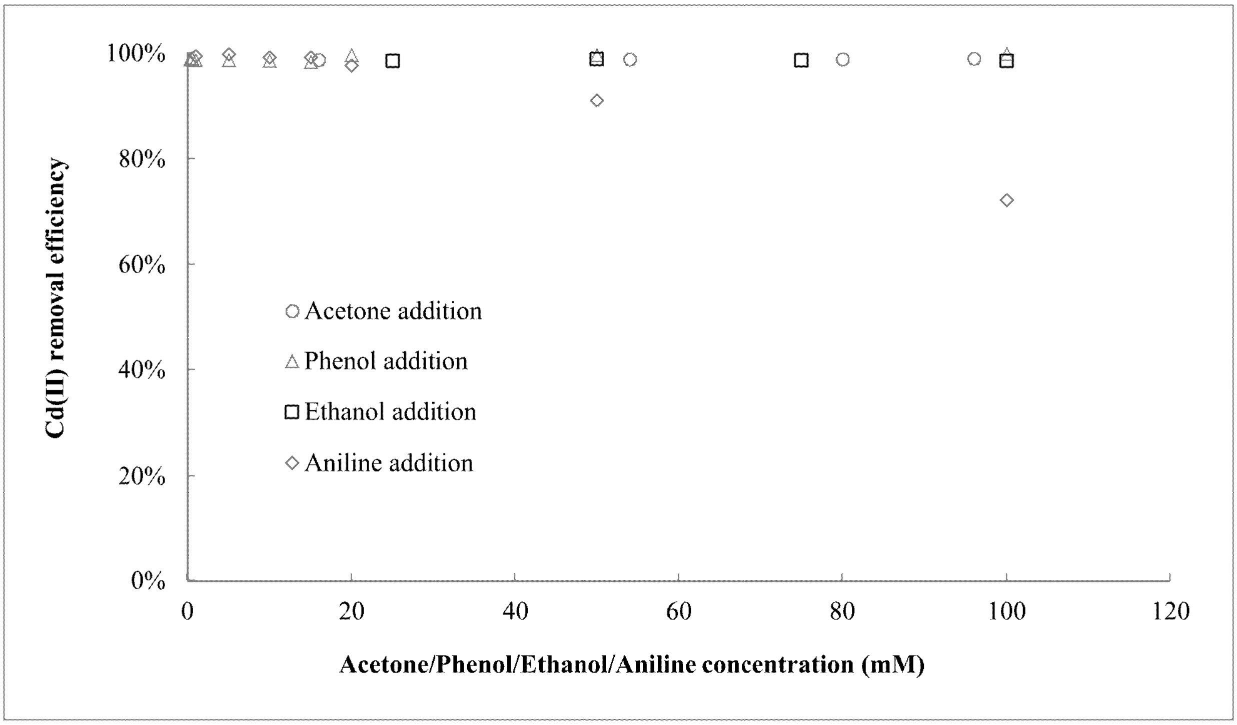


Figure 23

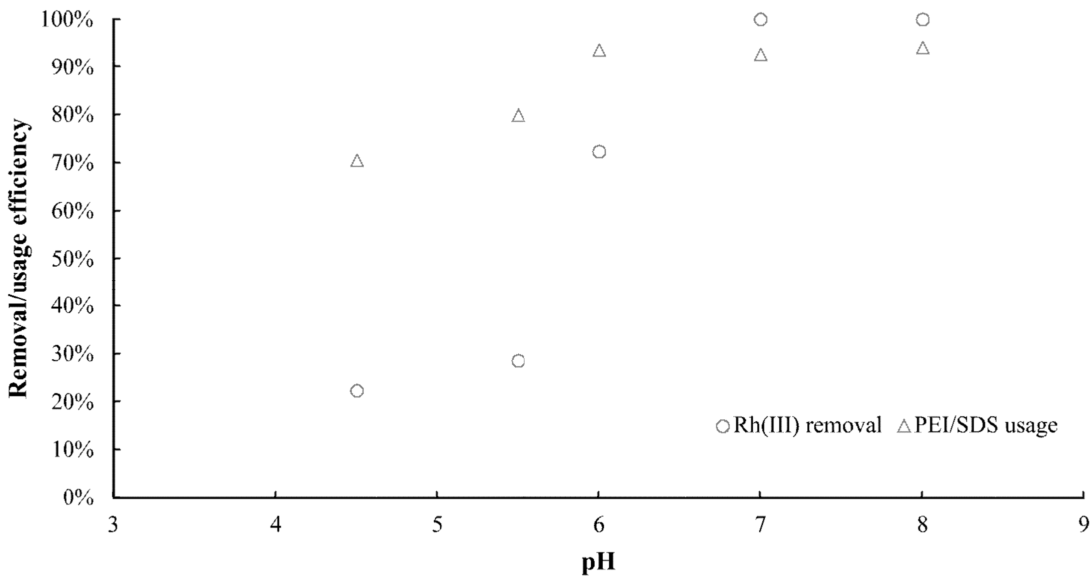


Figure 24

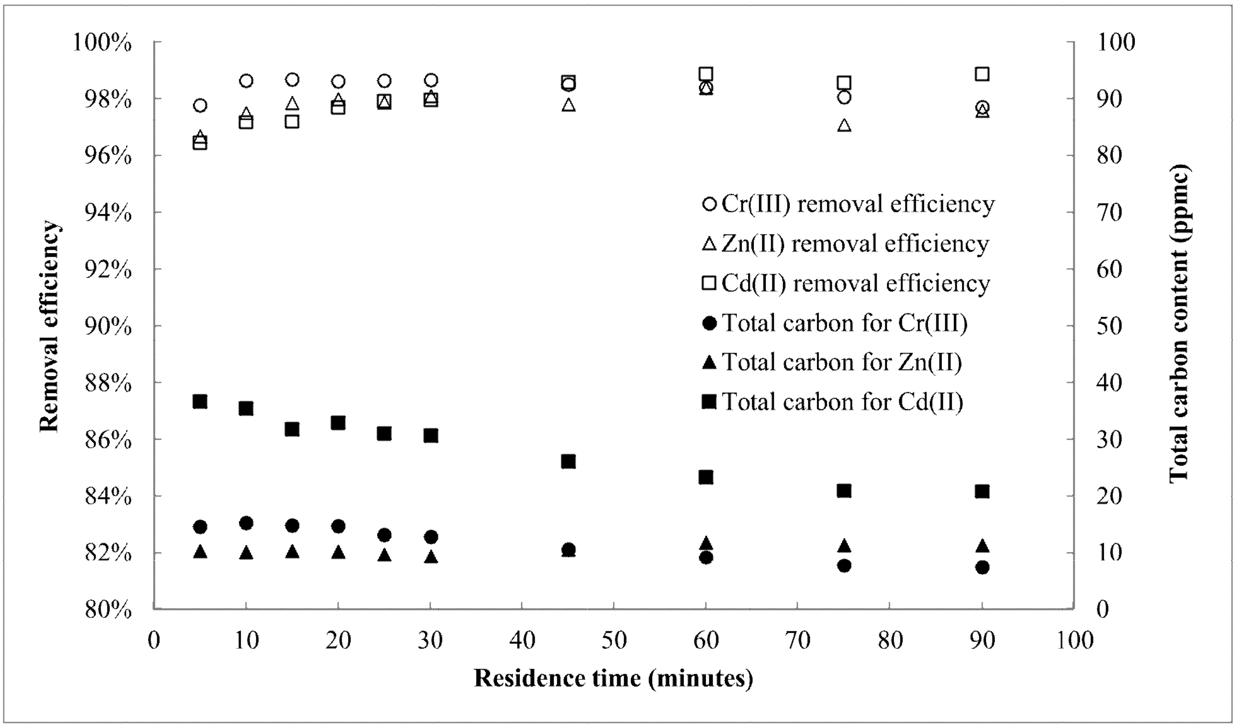


Figure 25

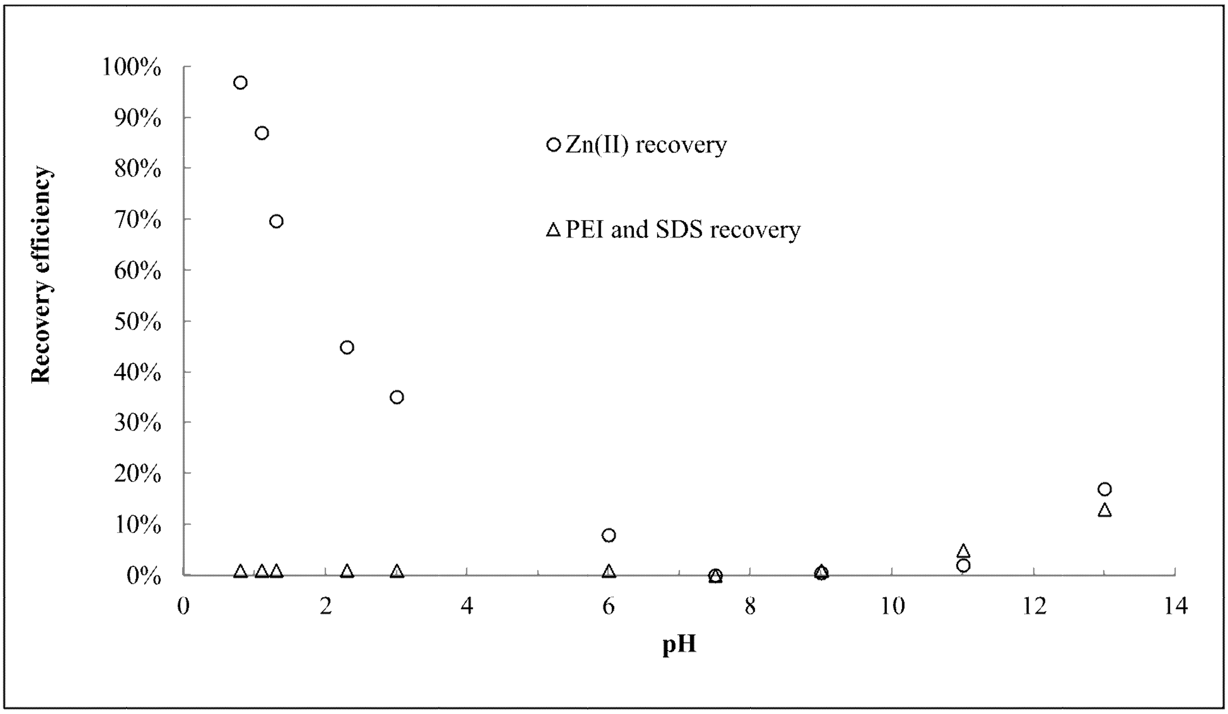


Figure 26

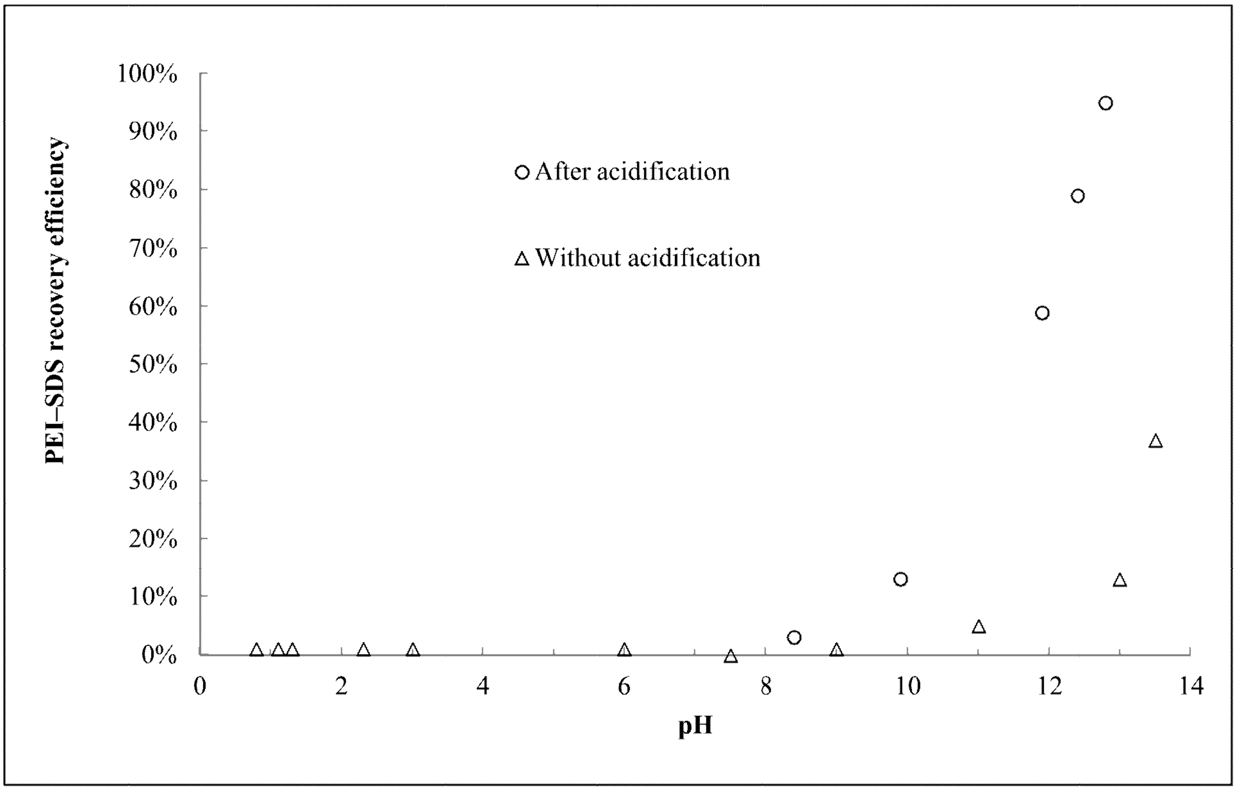


Figure 27

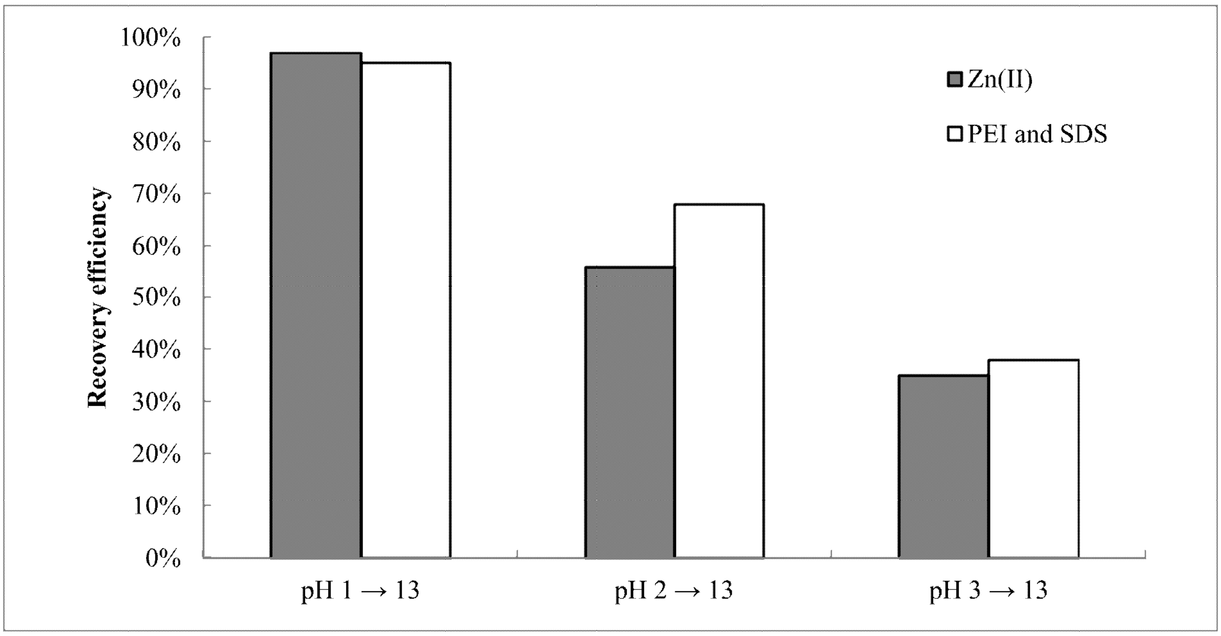


Figure 28

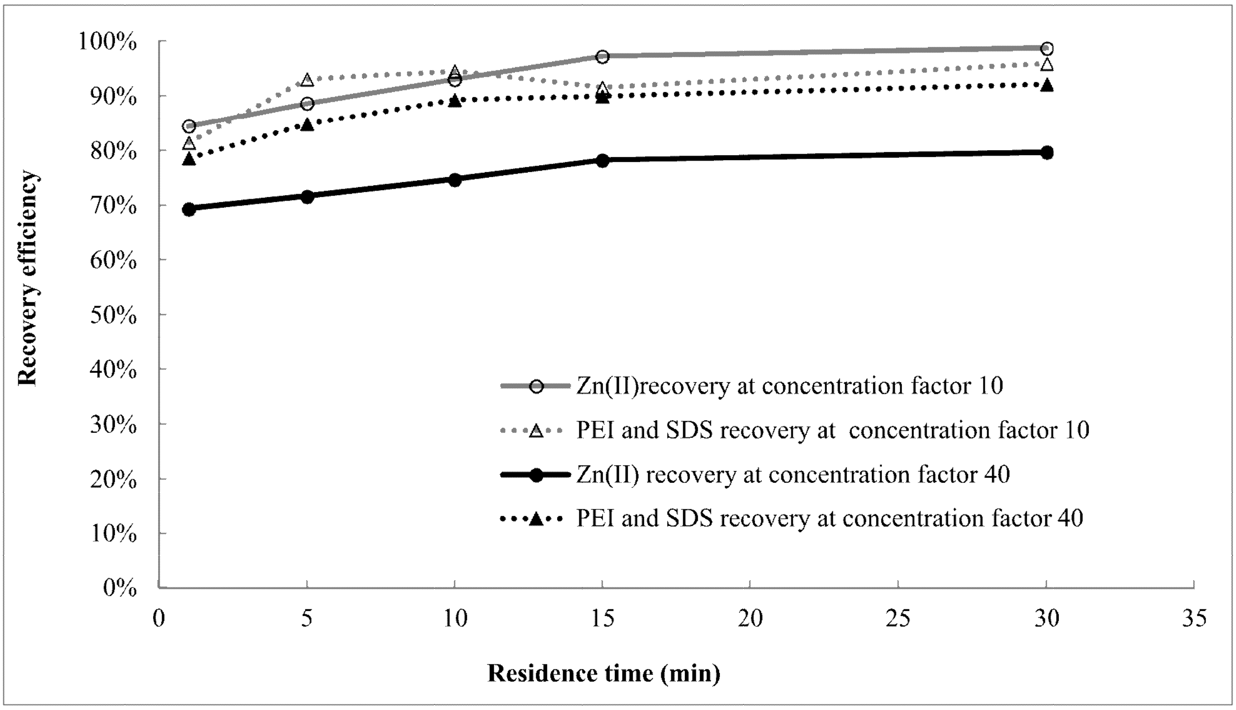


Figure 29

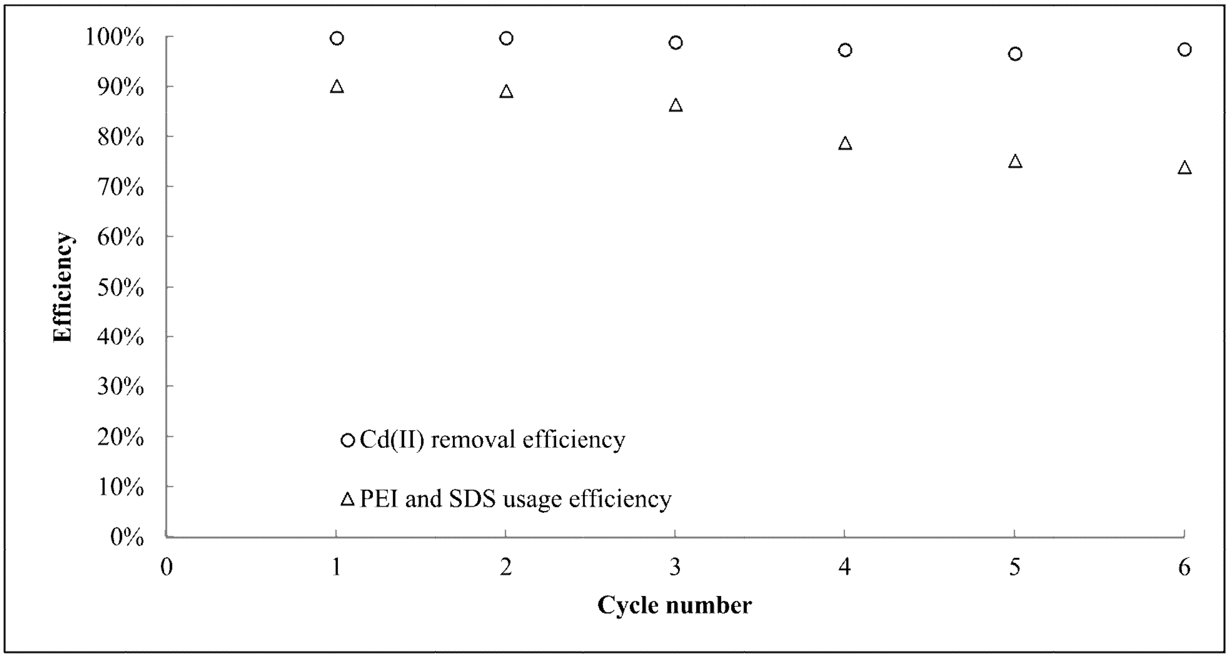


Figure 30

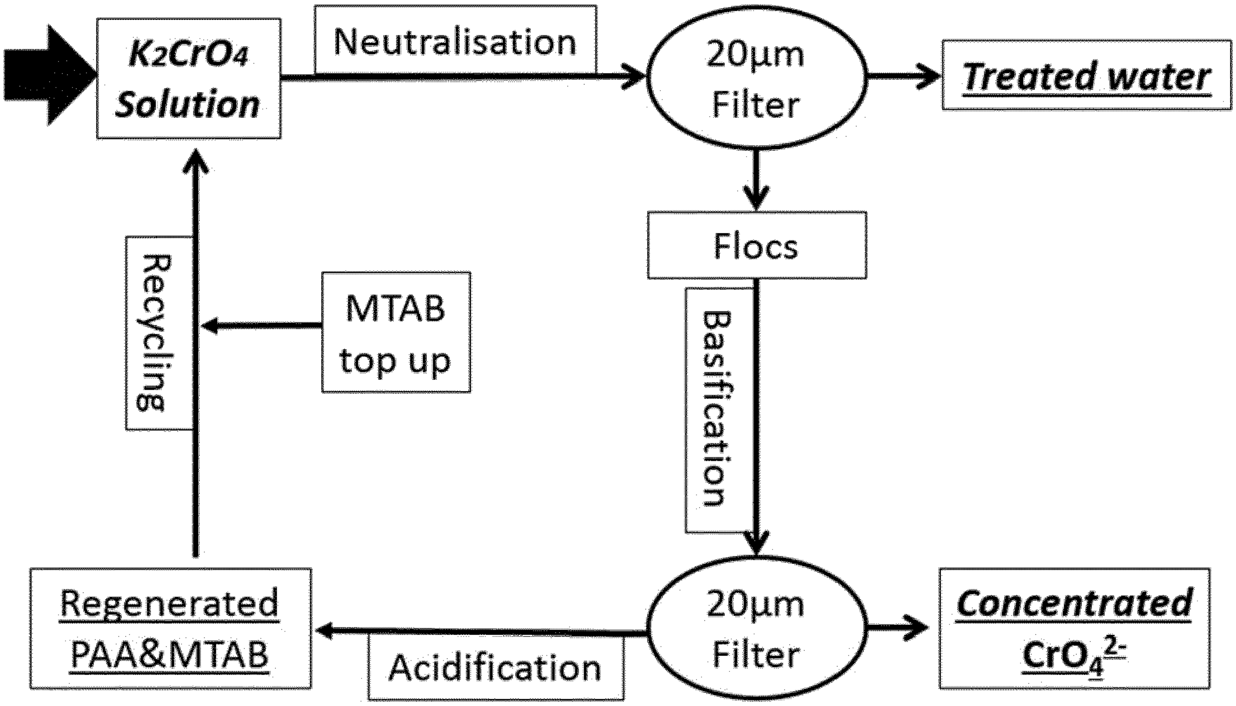


Figure 31

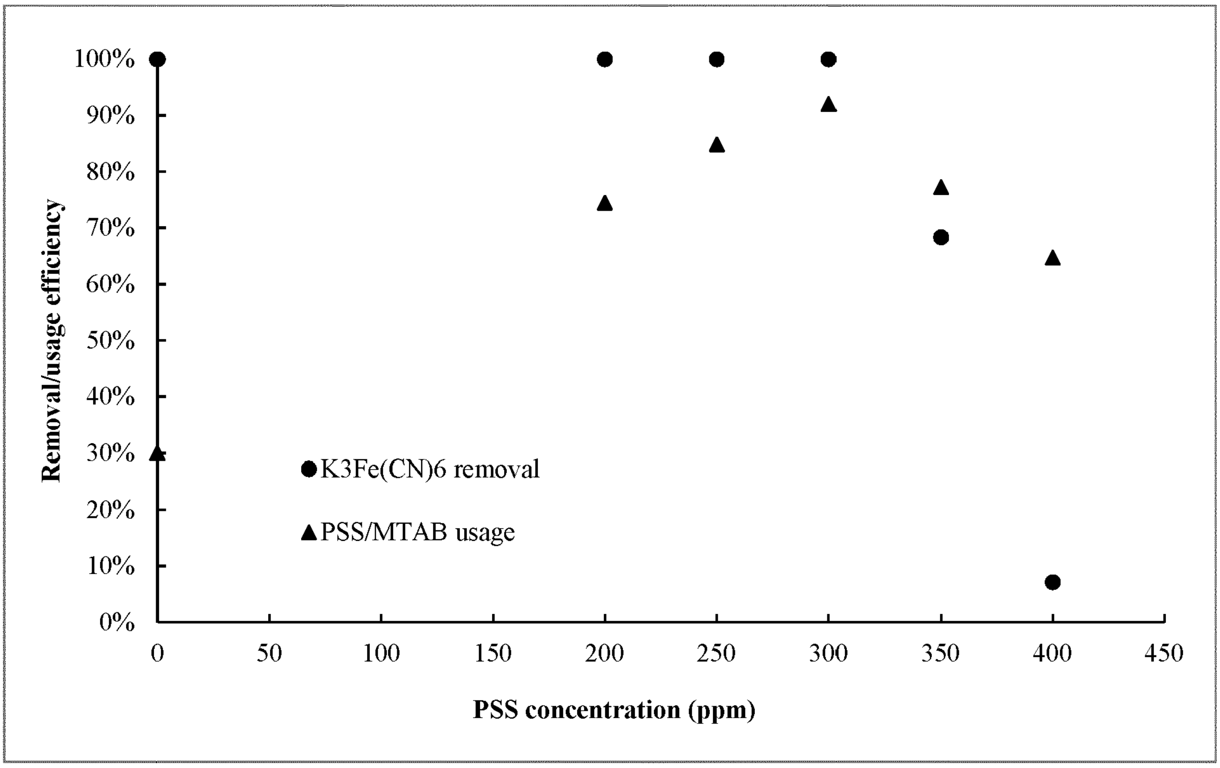


Figure 32

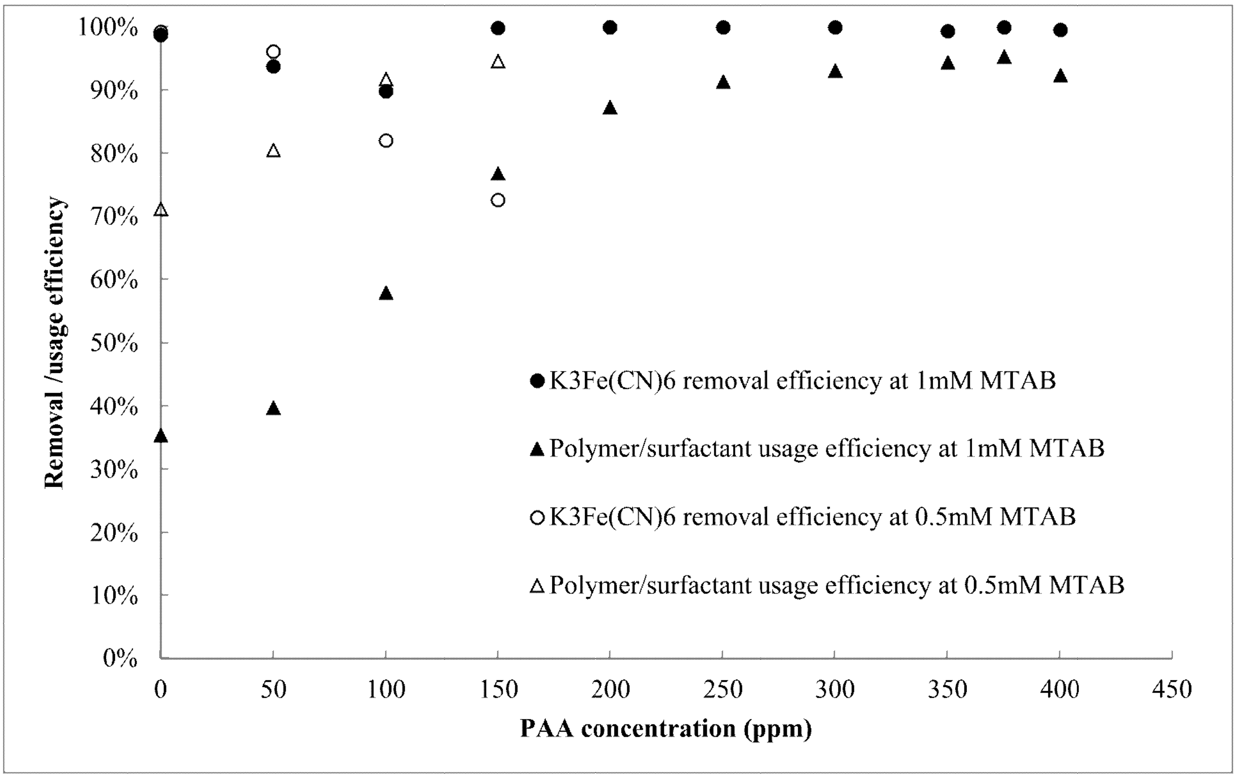


Figure 33

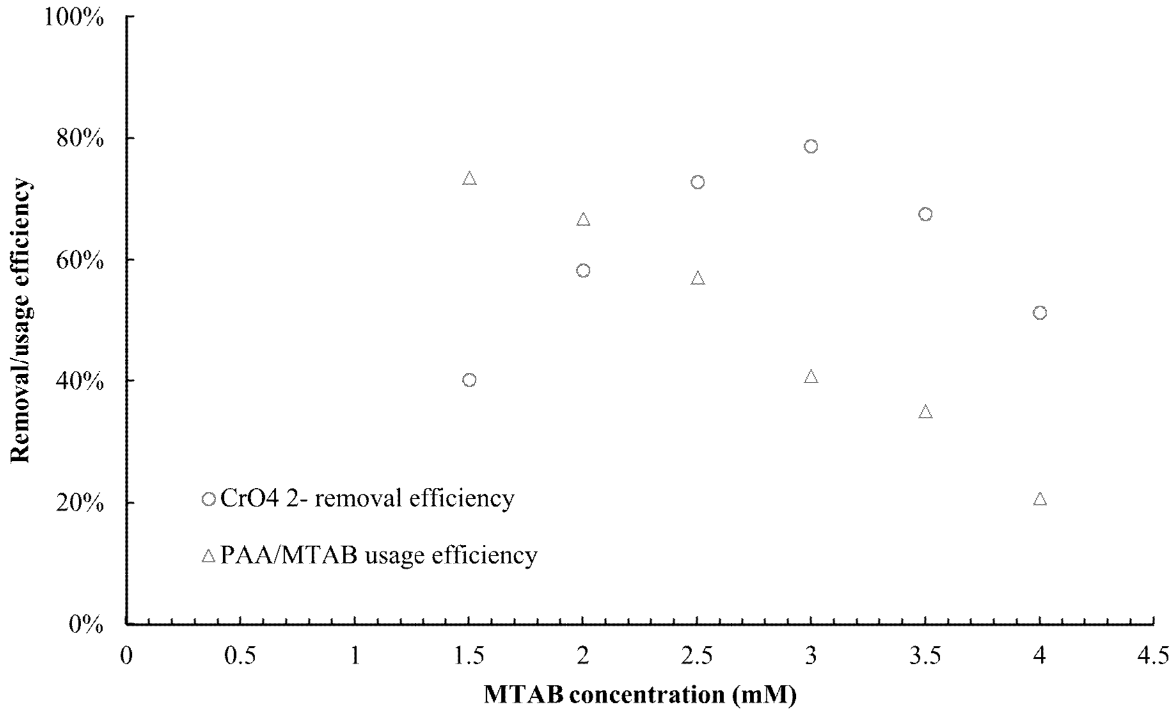


Figure 34

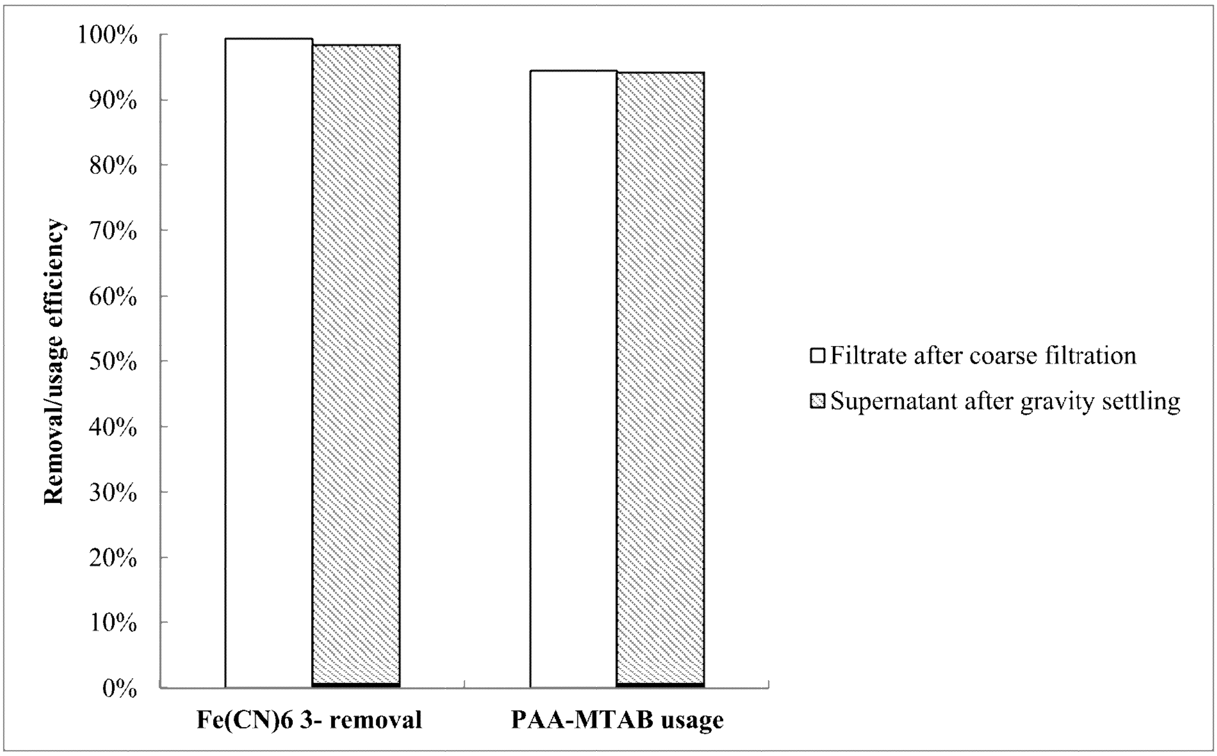


Figure 35

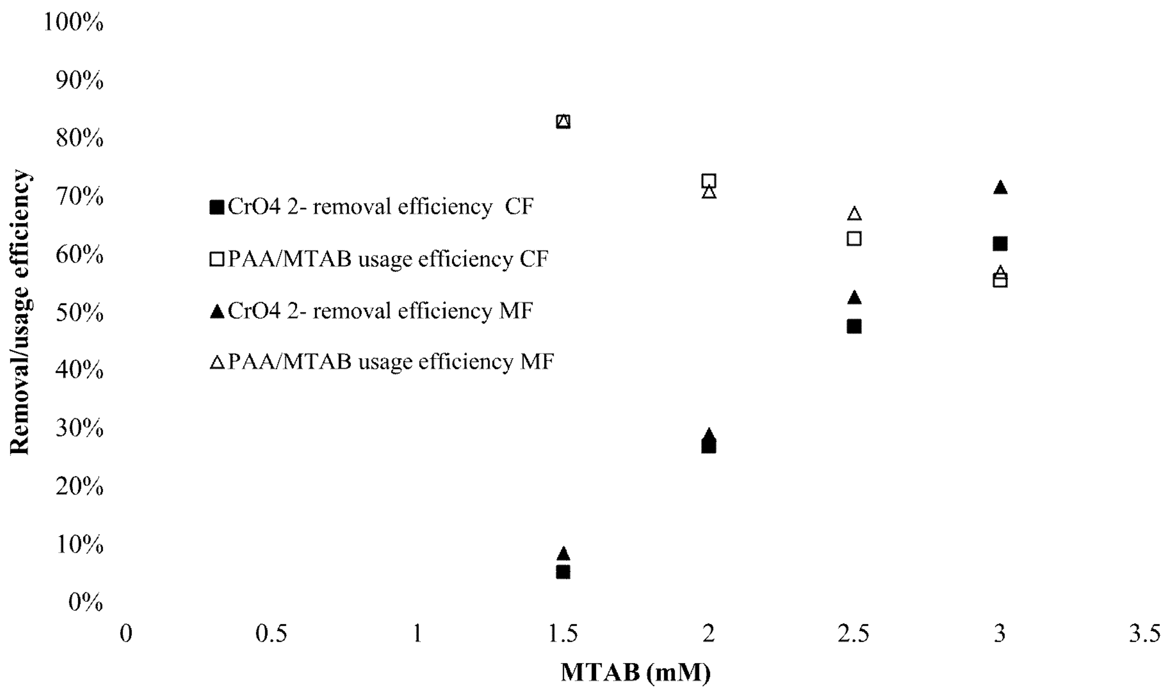


Figure 36

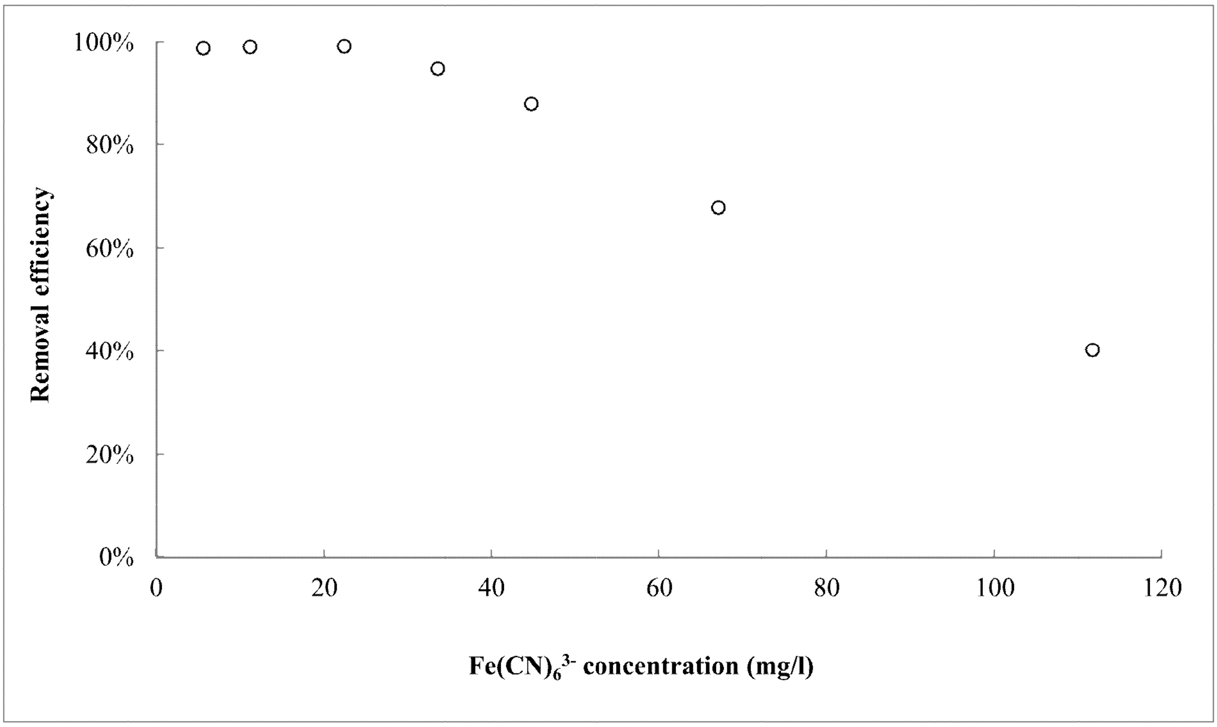


Figure 37

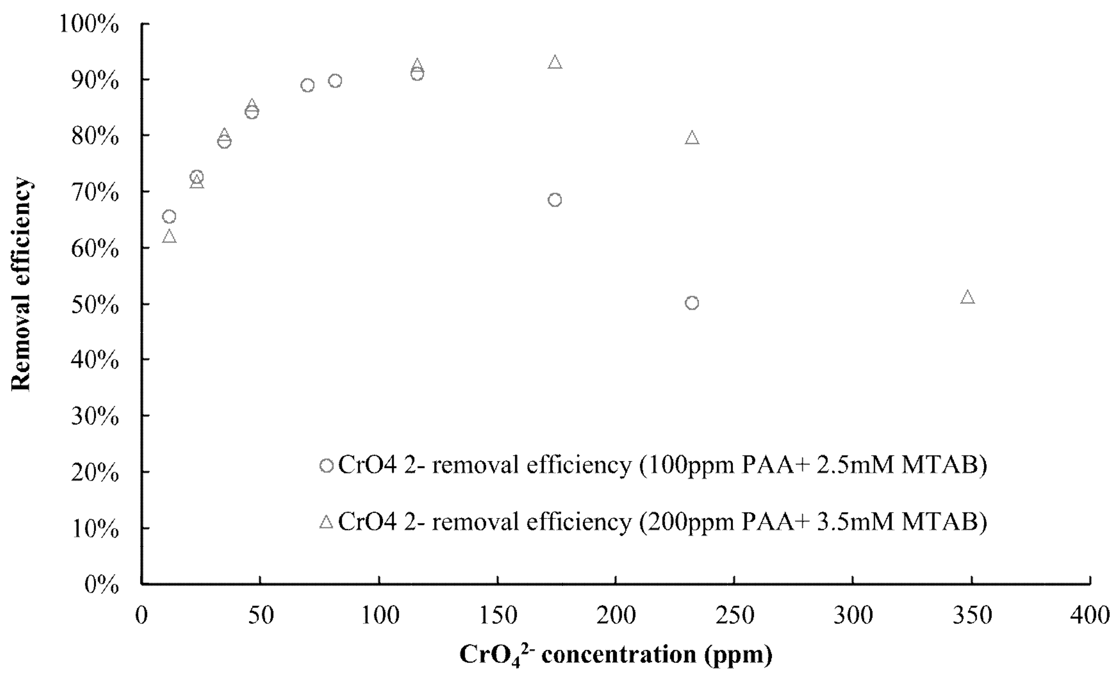


Figure 38

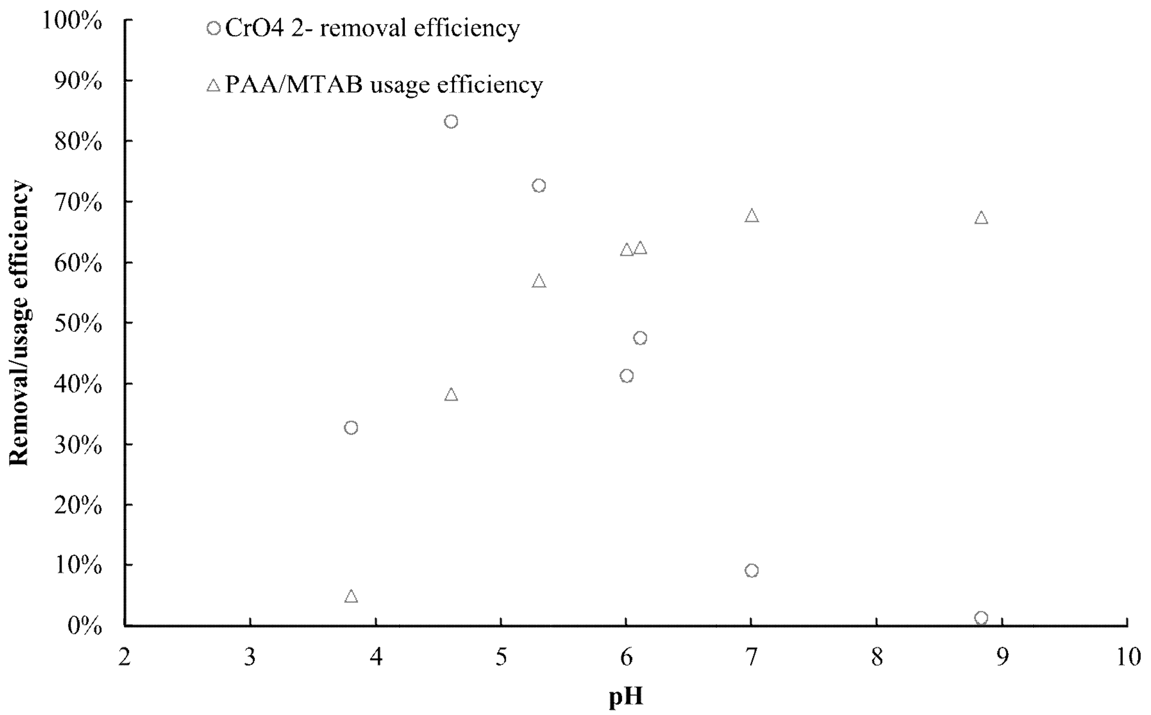


Figure 39

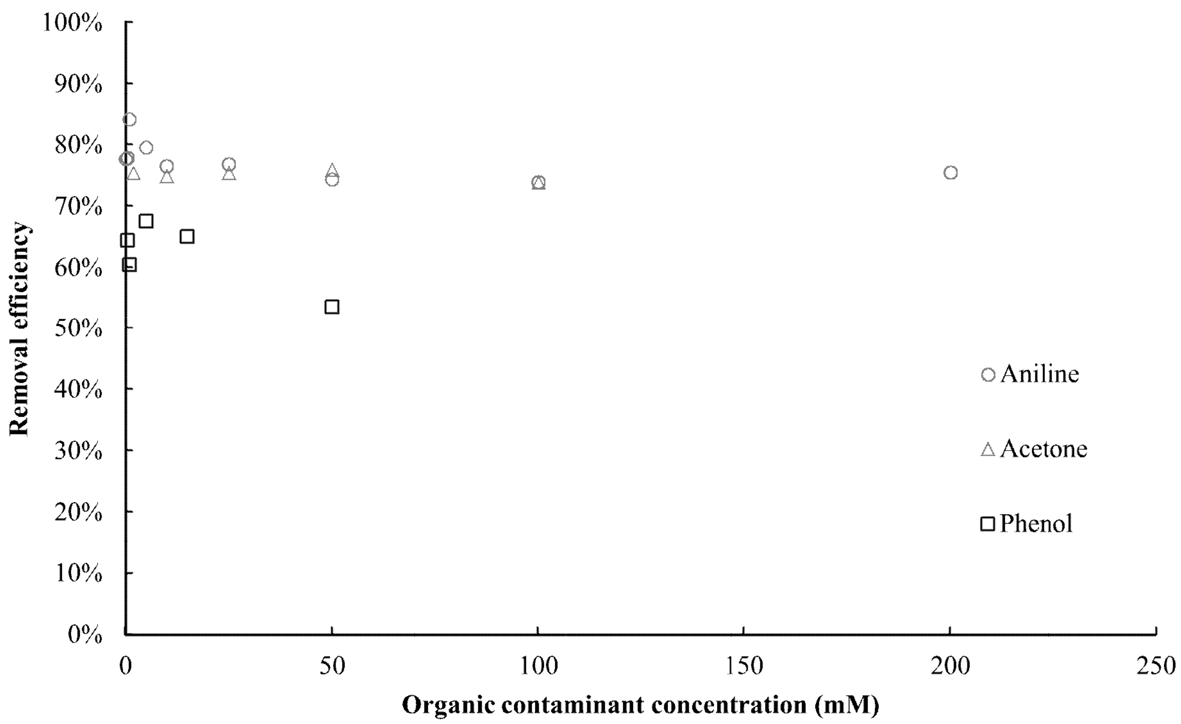


Figure 40

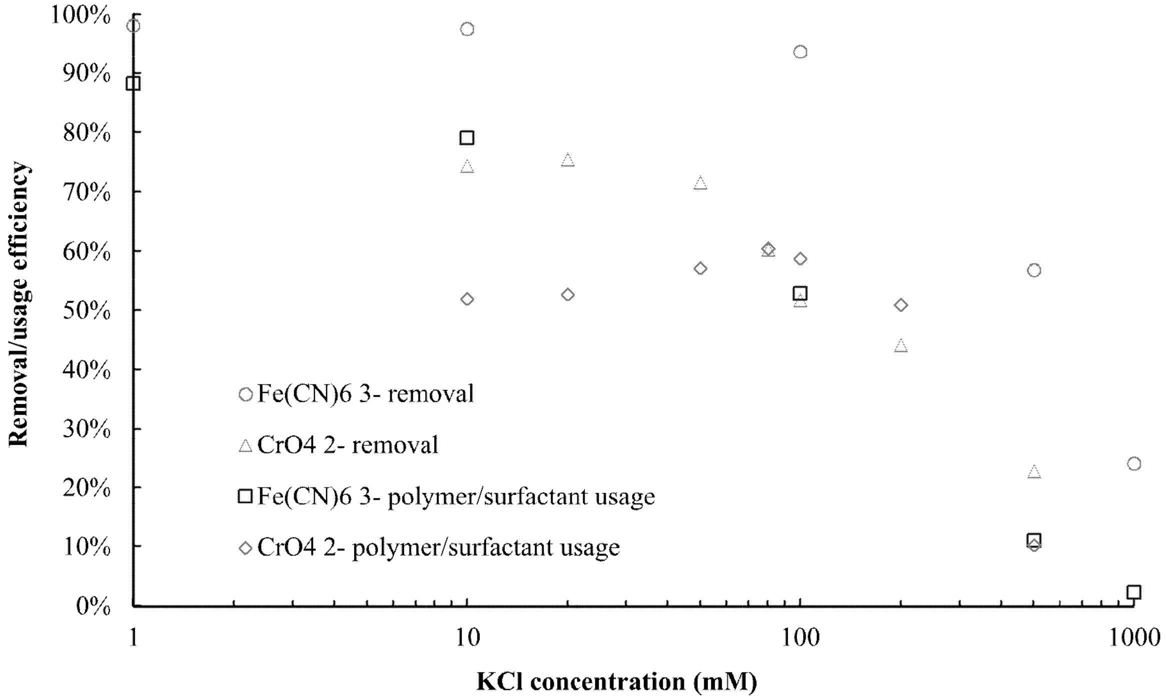


Figure 41

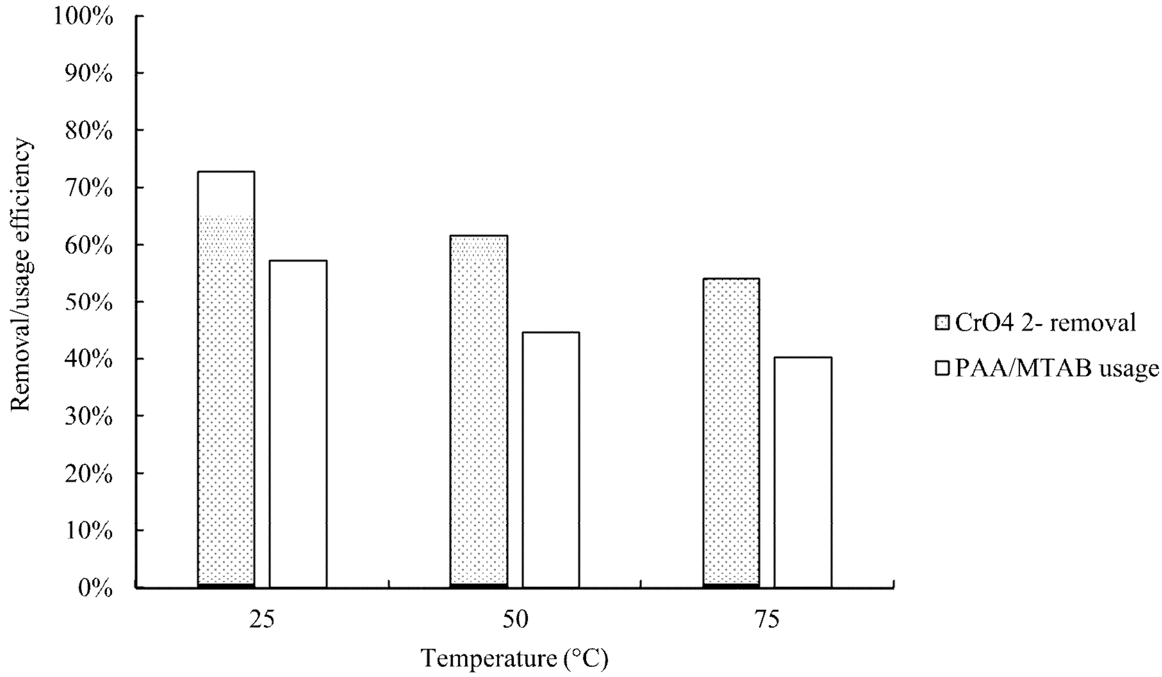


Figure 42

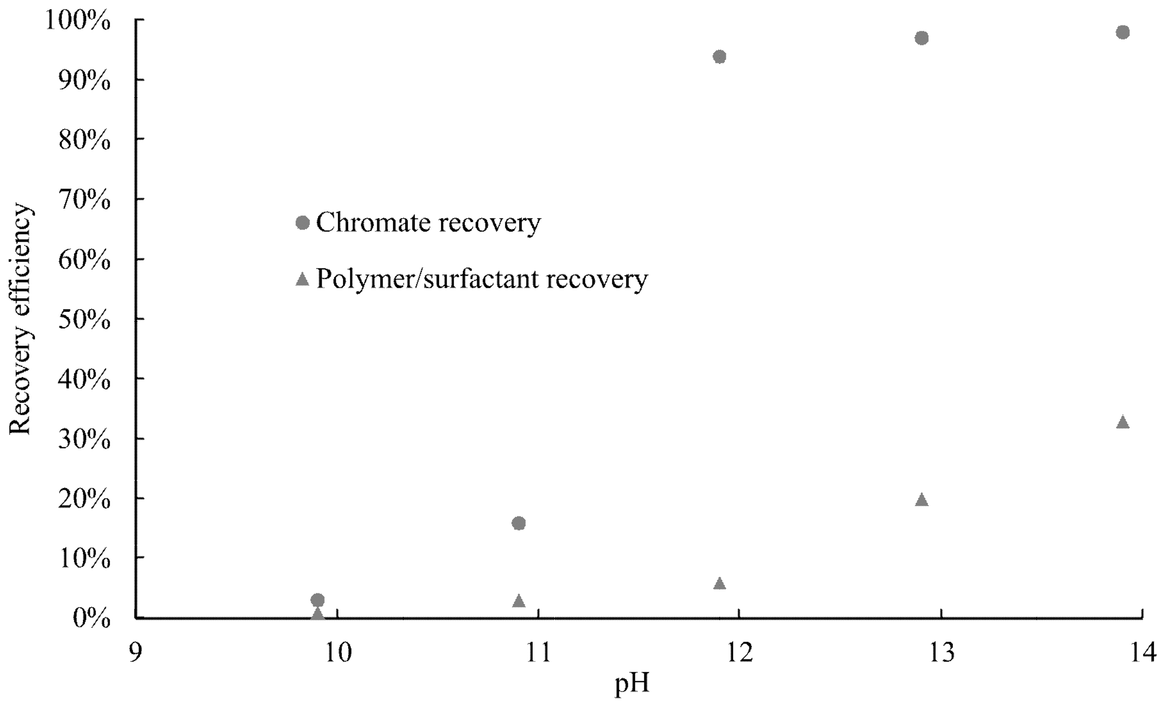


Figure 43

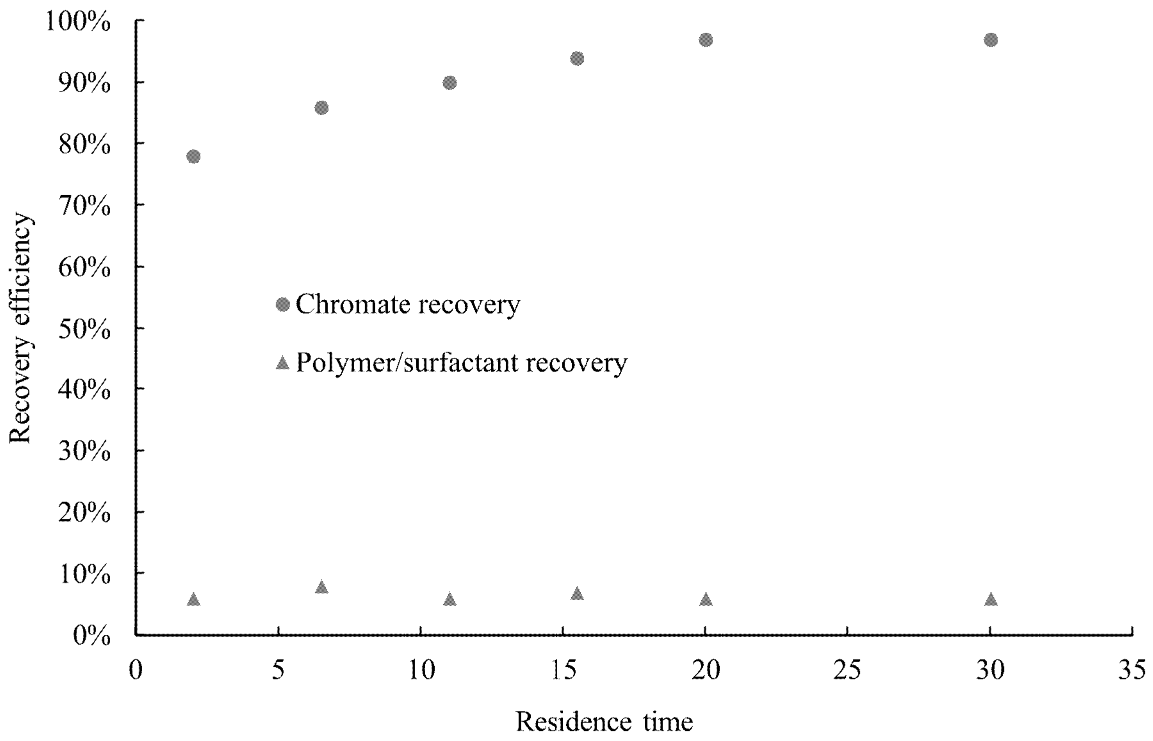


Figure 44

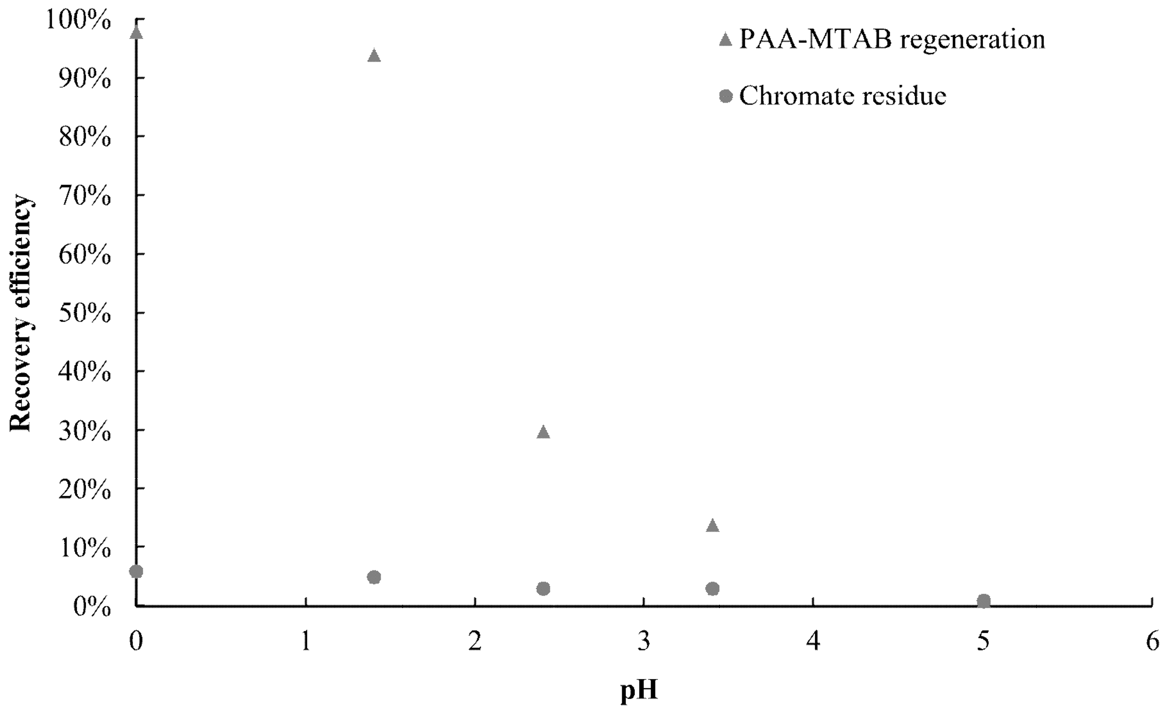


Figure 45

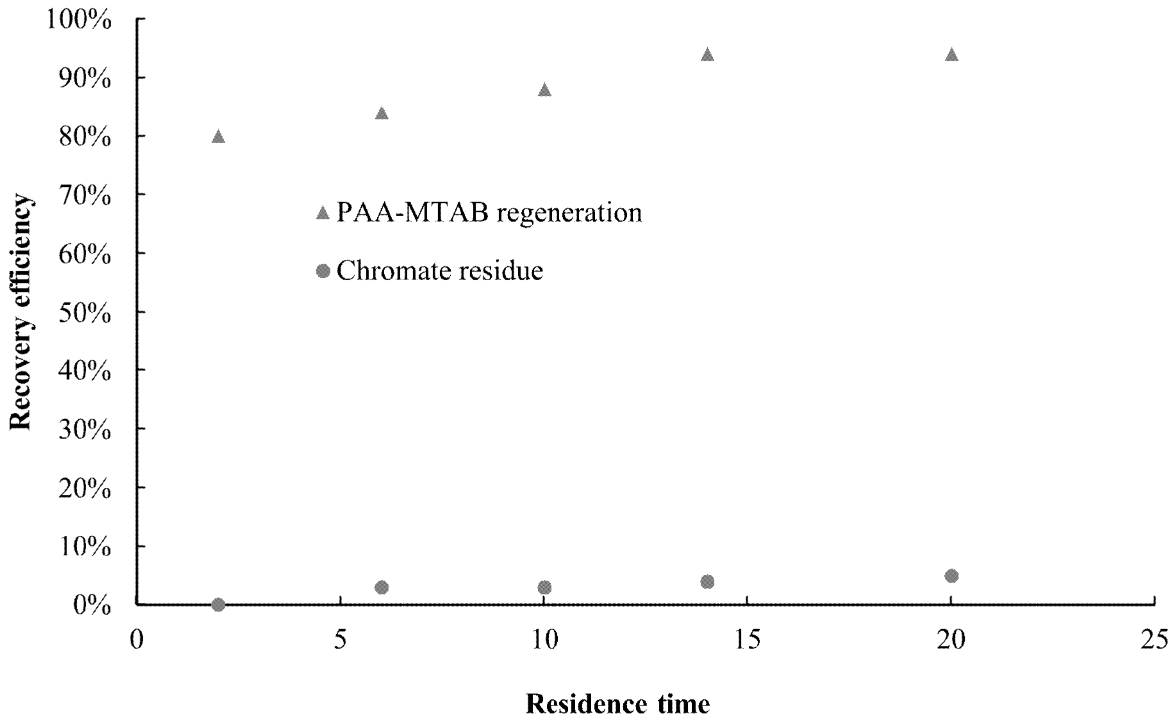


Figure 46

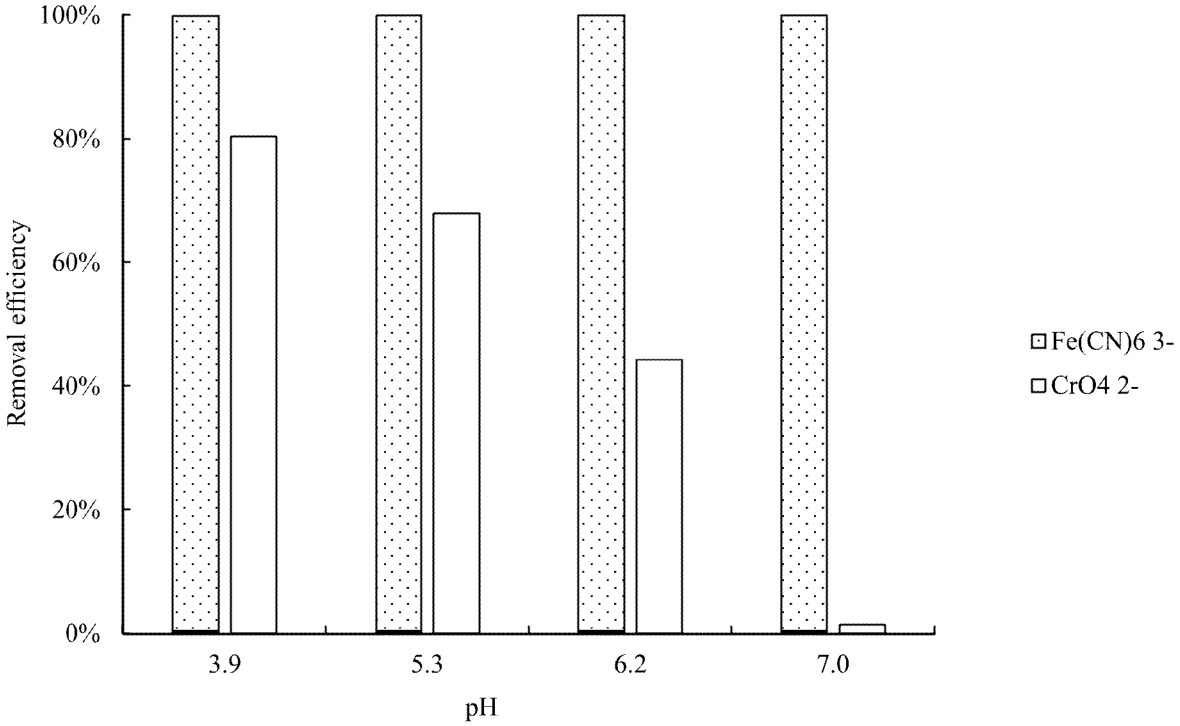
100%
80%
60%
40%
20%
0%
Removal efficiency
3.9
5.3
6.2
7.0
pH
Fe(CN)6 3-
CrO4 2-

Figure 47

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4758353 A
- CN 102627335 A
- SU 1293115 A1
- WO 2012084621 A1
- WO 9014310 A1


### Non-patent literature cited in the description


- **HANKINS et al.** *Separation and Purification Technology,* 2006, vol. 51 (1), 48-56